(19) Europäisches Patentamt
European Patent Office
Office européen des brevets

(11) EP 4 209 843 A2

(12) **EUROPEAN PATENT APPLICATION**

(43) Date of publication:
**12.07.2023 Bulletin 2023/28**

(21) Application number: **23275007.5**

(22) Date of filing: **11.01.2023**

(51) International Patent Classification (IPC):
***G05B 13/04*** *(2006.01)*

(52) Cooperative Patent Classification (CPC):
**G05B 13/048**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.01.2022 GB 202200298**

(71) Applicant: **Preqin Ltd**
**London SW1E 5DH (GB)**

(72) Inventors:
- **JELONEK, Piotr Zbigniew**
  **London, SW1E 5DH (GB)**
- **PARSONS, Samuel**
  **London, SW1E 5DH (GB)**

(74) Representative: **Cozens, Paul Dennis et al**
**Mathys & Squire**
**The Shard**
**32 London Bridge Street**
**London SE1 9SG (GB)**

# (54) METHOD AND APPARATUS FOR DETERMINING STABILITY OF AN ENSEMBLE MODEL OF A PLURALITY OF FORECAST MODELS.

(57) There is described an apparatus, preferably a robot, for defining and populating a memory storage and preferably outputting an alert and/or outputting an image. The improved data structure of the storage as defined by the robot restructures and streamlines the process by which outputs of the robot can be determined and output. The robot comprises: a user interface and/or a communication interface for receiving a target data series comprising a plurality of observations and/or one or more explanatory data series and/or a plurality of forecast models; a memory storage for storing a data structure for storing intermediate data; a processor for: receiving or determining a plurality of forecast models, each forecast model associated with one or more explanatory data series; defining a data structure in the memory storage in dependence on the number of forecast models and the number of observations of the target data series; performing a leave-one-out process for each forecast model of the plurality of forecast models, wherein the processor determines a predicted value by dropping an observation from the target data series and predicting the dropped observation in dependence on the forecast model and the data of the remaining observations in the target data series; repeating the leave-one-out process for each observation from the target data series to obtain a set of predicted values for each forecast model, wherein the set comprises a number of predicted values less than or equal to the number of observations of the target data series; determining errors between each of the predicted values and the values of the observations; and outputting the predicted values and their associated errors to the data structure in the memory storage; wherein the processor and/or a further processor is configured for: retrieving the intermediate data from the memory storage; receiving or determining an ensemble model, wherein the ensemble model comprises a weighted combination of forecast models, the weighting of each forecast model in the ensemble model being dependent on the respective determined errors; determining a stability measure of the ensemble model by: weighting each of the predicted values for each observation by multiplying the predicted values retrieved from the memory storage by the weighting, wherein the weighting is dependent on the associated determined errors retrieved from the memory storage; determining weighted predicted averages for each observation of the target data series by summing the weighted predicted values over all the models for each observation; and determining errors between observations of the target data series and the weighted predicted averages, such averages having been computed using the processor and/or further processor from the intermediate data stored in the memory storage; , whereby, preferably, the retrieval and computation of the intermediate data from the storage memory can bypass any need for performing full regression analysis on the ensemble model to determine the stability measure, thereby preferably reducing the computational complexity by a factor proportional to the number of observations of the target data series; and outputting the stability measure of the ensemble model, preferably to the user interface and/or communication interface.



Processed by Luminess, 75001 PARIS (FR)

(Cont. next page)

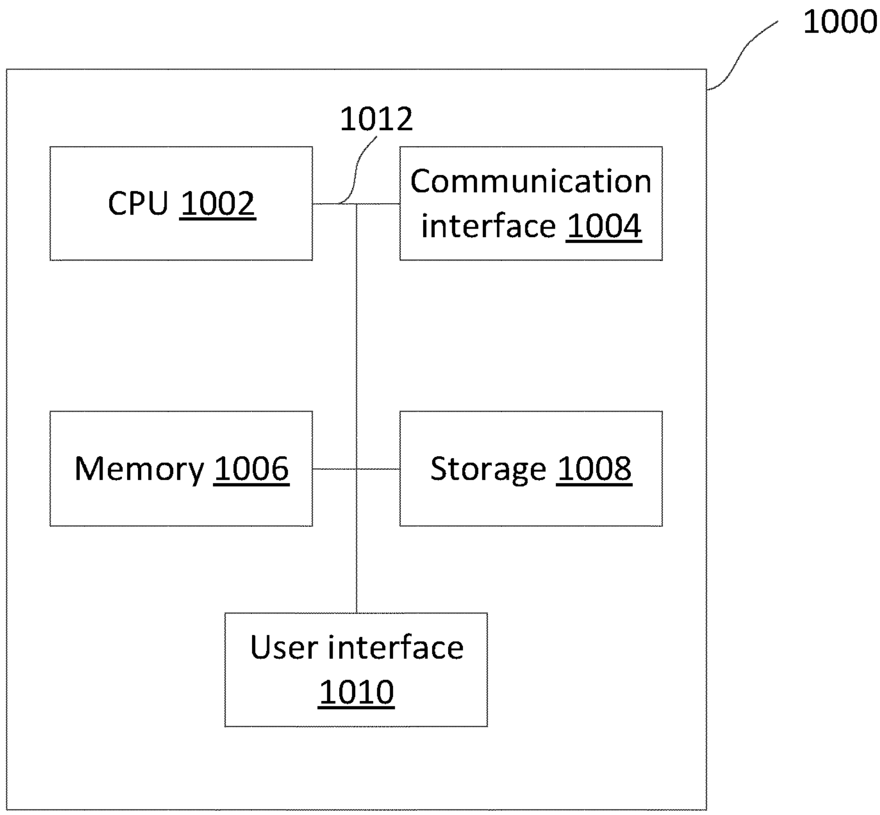
1000
1012
CPU 1002
Communication interface 1004
Memory 1006
Storage 1008
User interface 1010

Figure 1

## Description

### Field of the invention

The present invention relates to a robot. In particular, it relates to a robot for performing actions in dependence on processing of inputs comprising a data series. The present invention further relates to a method of predicting values of the data series, and performing actions in dependence on the predicted values and/or associated stability measures and goodness-of-fit measures. This may comprise a method of, and apparatus and system for processing an image. The present disclosure further extends to methods of, and apparatuses and systems for, outputting an alert, in particular, outputting an alert in dependence on a predicted value, for example testing of the behaviour of a system into the future. The invention further extends to methods of, apparatus and networks for defining and populating a memory storage structure to facilitate improved storage efficiency, and thereby facilitate enhanced determination and output of stability measures and goodness-of-fit measures associated with the predicted values.

### Background to the Invention

The ability to predict the behaviour of systems is desirable in many situations. Conventional methods of predicting the future behaviour of systems use historical data and extrapolate from this data to form a prediction. Such methods can provide accurate results in certain situations; however, they are liable to inaccuracy in other situations. In particular, conventional methods are often inaccurate when attempting to predict future values of short, low-frequency, time series. Other, more accurate, methods may be extremely computationally expensive, requiring extensive data storage and a very long computation time - this can make the testing of different scenarios and hypotheses at the very least impractical and often impossible.

Such systems include mechanical systems, where the performance of component parts can be predicted, in order to output warnings regarding unsafe degradation.

Additionally, such systems include environmental systems, where apparatuses that can predict the variance from acceptable behaviour are able to provide alerts. Such apparatuses can be used to provide warnings of fires, or of tornados.

Similarly, prediction systems may be able to analyse the behaviour of an internet user. A prediction system as disclosed below could, for example, predict that a child is on track to interact with inappropriate material on a website and provide an alert so that an adult can take appropriate action to prevent this interaction.

### Summary of the Invention

According to an aspect of the invention, there is provided an apparatus, preferably a robot, for defining and populating a memory storage and preferably outputting an alert and/or outputting an image, comprising: a user interface and/or a communication interface for receiving a target data series comprising a plurality of observations and/or one or more explanatory data series and/or a plurality of forecast models; a memory storage for storing a data structure for storing intermediate data; a processor for: receiving or determining a plurality of forecast models, each forecast model associated with one or more explanatory data series; defining a data structure in the memory storage in dependence on the number of forecast models and the number of observations of the target data series; performing a leave-one-out process for each forecast model of the plurality of forecast models, wherein the processor determines a predicted value by dropping an observation from the target data series and predicting the dropped observation in dependence on the forecast model and the data of the remaining observations in the target data series; repeating the leave-one-out process for each observation from the target data series to obtain a set of predicted values for each forecast model, wherein the set comprises a number of predicted values less than or equal to the number of observations of the target data series; determining errors between each of the predicted values and the values of the observations; and outputting the predicted values and their associated errors to the data structure in the memory storage; wherein the processor and/or a further processor is configured for: retrieving the intermediate data from the memory storage; receiving or determining an ensemble model, wherein the ensemble model comprises a weighted combination of forecast models, the weighting of each forecast model in the ensemble model being dependent on the respective determined errors; determining a stability measure of the ensemble model by: weighting each of the predicted values for each observation by multiplying the predicted values retrieved from the memory storage by the weighting, wherein the weighting is dependent on the associated determined errors retrieved from the memory storage; determining weighted predicted averages for each observation of the target data series by summing the weighted predicted values over all the models for each observation; and determining errors between observations of the target data series and the weighted predicted averages, such averages having been computed using the processor and/or further processor from the intermediate data stored in the memory storage; whereby, preferably, the retrieval and computation of the intermediate data from the storage memory can bypass any need for performing full regression analysis on the ensemble model to determine the stability measure, thereby preferably reducing the computational complexity by a factor proportional to the number of observations of the target data series; and outputting the stability measure of the ensemble model, preferably to the user interface and/or communication interface.

This storage structure can improve the internal working of the computer and/or computer system or network. The storage of the intermediate results enables the stability measure of the ensemble model to be determined more efficiently. The intermediate results can be retrieved and used to calculate the stability measure directly. This can avoid the necessity to perform full LOO analysis on the ensemble model, which requires T(T-1) regressions, where T is the number of observations. The storage of intermediate values can reduce computational complexity and/or computation power and/or computational time and/or storage capacity required by a factor proportional to the number of observations of the target data series (T). The improved data structure of the storage as defined by the robot can restructure and streamline the process by which outputs of the robot can be determined and output.

The predictions by the forecast models and/or ensemble models are preferably deviations, more preferably deviations from an initial trend.

The processor or a further processor may preferably be configured for: determining or retrieving the stability measure of the ensemble model; determining a goodness of fit measure of the ensemble model using the stability measure and a weighted average of the number of explanatory data series used in each of the plurality of models; and outputting the goodness of fit of the deviation predicted by the ensemble model, preferably to the user interface and/or communication interface.

Determining a goodness-of-fit measure can be advantageous in assessing the predicted datapoint. In particular, preferably a plurality of explanatory variables may be used. This can facilitate accommodating different factors which may determine trends (especially over different time periods). The use of a goodness-of-fit measure can then prove a measure of how good the fit is (and can avoid potentially misleading over-fits). The goodness-of-fit measure may be a Leave-One-Out adjusted Determination Coefficient ($LOO - \overline{R}^2$). Preferably, the goodness-of-fit measure may be the Parsons-Jelonek coefficient.

According to an aspect of the present invention, there is provided an apparatus for outputting an alert, the apparatus comprising: a user interface and/or a communication interface for: receiving a target data series and one or more explanatory data series, wherein the target data series is associated with behaviour of the system and the explanatory data series comprises variables related to the behaviour of the system; and outputting an alert; and a processor for: determining a raw predicted data series based on the target data series; transforming the raw predicted data series; determining an initial prediction based on the transformed raw predicted data series; transforming each explanatory data series; determining an expected deviation based on the transformed explanatory data series; combining the initial prediction and the expected deviation to obtain the predicted datapoint; and determining an alert in dependence on the value of the predicted datapoint; wherein the processor is arranged to determine the expected deviation based on an ensemble model that comprises a plurality of forecast models, wherein each forecast model is associated with one or more transformed explanatory data series and is associated with a stability measure; and wherein the ensemble model comprises a weighted combination of forecast models, the weighting of each forecast model in the ensemble model being dependent on the corresponding stability measure; and wherein the processor is further arranged to determine and/or store a matrix associated with the stability measures and/or the weightings.

Such an apparatus advantageously allows stability measures to be calculated using the stored matrix, changing the manner in which the computer functions such that computation times are reduced by a factor of T (T being the size of the data series). This makes feasible testing the system under a range of conditions-with an alert being output in dependence on the predicted values. This can improve the design process, and result in more reliable components and/or systems.

As used herein, the term 'combining the initial prediction and the expected deviation to obtain the predicted datapoint' preferably connotes adding or summing the initial prediction and the expected deviation to obtain the predicted datapoint.

According to a further aspect of the present invention, there is provided an apparatus for performing testing of a system, the apparatus comprising: a user interface and/or a communication interface for: receiving a target data series and one or more explanatory data series, wherein the target data series is associated with behaviour of the system; and outputting a processed plot displaying the target data series indicating predicted behaviour of the system based on the target image; and a processor for: determining a raw predicted data series based on the target data series; transforming the raw predicted data series; determining an initial prediction based on the transformed raw predicted data series; transforming each explanatory data series; determining an expected deviation based on the transformed explanatory data series; combining the initial prediction and the expected deviation to obtain the predicted datapoint; and outputting the plot to include the predicted datapoint; wherein the processor is arranged to determine the expected deviation based on an ensemble model that comprises a plurality of forecast models, wherein each forecast model is associated with one or more transformed explanatory data series and is associated with a stability measure; and wherein the ensemble model comprises a weighted combination of forecast models, the weighting of each forecast model in the ensemble model being dependent on the corresponding stability measure; and wherein the processor is further arranged to determine and/or store a matrix associated with the stability measures and/or the weightings.

The apparatus further comprises a storage for storing the matrix, preferably wherein the processor is arranged to store the matrix associated with the stability measures and/or the weightings to the storage. Preferably the processor is further arranged to recall and/or retrieve the matrix to determine a stability measure of the ensemble model. This storage provides a database from which the processor can retrieve the data, enabling it to perform more efficient functions.

Preferably, the processor is further arranged to retrieve or determine the matrix in order to determine a stability measure of the ensemble model. Preferably, the apparatus is arranged to determine a stability measure of a plurality of ensemble models and to select an ensemble model in dependence on the stability measures.

Preferably, the user interface and/or the communication interface is arranged to output a plot displaying the target data series indicating predicted behaviour of the system in dependence on the predicted datapoint being above and/or below a threshold predicted value.

The user interface may preferably be configured to output the alert in dependence on the predicted data point being above and/or below a threshold predicted value.

According to at least one aspect of the present disclosure, there is described an apparatus for processing an image, the apparatus comprising: a user interface and/or a communication interface for: receiving a target data series and one or more explanatory data series, wherein the target data series is associated with a target image; and outputting a processed image based on the target image; and a processor for: determining a raw predicted data series based on the target data series; transforming the raw predicted data series; determining an initial prediction based on the transformed raw predicted data series; transforming each explanatory data series; determining an expected deviation based on the transformed explanatory data series; combining the initial prediction and the expected deviation to obtain the predicted datapoint; and forming the processed image by modifying the target image to include the predicted datapoint; wherein the processor is arranged to determine the expected deviation based on an ensemble model that comprises a plurality of forecast models, wherein each forecast model is associated with one or more transformed explanatory data series and wherein the ensemble model comprises a weighted combination of forecast models.

Preferably, the image is a plot, preferably a plot of the target data series. Preferably the output image is a plot comprising one or more predicted datapoints. This may extrapolate the image to be processed. The data series may be determined from the target image, for example by graphical processing. This may comprise processing pixels of the target image to determine the data series.

According to another aspect of the present disclosure, there is described a method of processing an image, the method comprising: receiving a target data series and one or more explanatory data series, wherein the target data series is associated with a target image; determining a raw predicted data series based on the target data series; transforming the raw predicted data series; determining an initial prediction based on the transformed raw predicted data series; transforming each explanatory data series; determining an expected deviation based on the transformed explanatory data series; combining the initial prediction and the expected deviation to obtain the predicted datapoint; and forming a processed image by modifying the target image to include the predicted datapoint; outputting the processed image; wherein the processor is arranged to determine the expected deviation based on an ensemble model that comprises a plurality of forecast models, wherein each forecast model is associated with one or more transformed explanatory data series and wherein the ensemble model comprises a weighted combination of forecast models.

Preferably, determining the target series comprises identifying a target series based on an image.

Preferably, outputting an alert comprises outputting a processed image comprising the target series and/or the predicted datapoint.

According to another aspect of the present disclosure, there is described an apparatus for outputting an alert, the apparatus comprising: a user interface and/or a communication interface for: receiving a target data series and one or more explanatory data series; and outputting an alert; and a processor for: determining a raw predicted data series based on the target data series; transforming the raw predicted data series; determining an initial prediction based on the transformed raw predicted data series; transforming each explanatory data series; determining an expected deviation based on the transformed explanatory data series; combining the initial prediction and the expected deviation to obtain the predicted datapoint; and determining an alert in dependence on the value of the predicted datapoint; wherein the processor is arranged to determine the expected deviation based on an ensemble model that comprises a plurality of forecast models, wherein each forecast model is associated with one or more transformed explanatory data series and wherein the ensemble model comprises a weighted combination of forecast models.

This can enable an apparatus, such as a robot, to perform an action or output a warning in dependence on the alert.

Preferably, the user interface and/or the communication interface is arranged to output the alert in dependence on the predicted datapoint being above and/or below a threshold predicted value.

Preferably, the communication interface is arranged to output the predicted datapoint and/or the alert to a further apparatus.

Preferably the communication interface is arranged to output the processed image to a further apparatus and/or wherein the communication interface is arranged to store the predicted datapoint in a database.

The alert may comprise, for example, a notification of the predicted datapoint and/or a suggestion of action to take based on the predicted datapoint. Preferably, the communication interface is arranged to receive a user input, preferably a user input relating to the predicted datapoint and/or the alert, and to provide an output in dependence on the predicted datapoint and the user input.

The processor may further be arranged to modify the explanatory data series and/or target data series using a prediction function, preferably wherein the prediction function is an input by a user or a parametrization of an input by a user. This can allow a user to define a particular scenario or particular conditions, under which they wish to 'test' the system.

In preferable implementations, the processor is further arranged to iterate the method steps using different prediction functions for predicting behaviour of the system under different conditions. It may be further arranged to output the predicted data points under different conditions on a same plot, preferably wherein the same plot indicates whether each predicted data point being above and/or below a threshold predicted value. This provides a clear indication to the user whether the system performs in an acceptable manner in the different scenarios.

Preferably, the communication interface is arranged to store the predicted datapoint in a database.

Preferably, each of the forecast models is associated with a stability measure and the weighting of each forecast model in the ensemble model is dependent on the corresponding stability measure.

Preferably, the stability measure of each of the forecast models is based on the performance of the forecast model on previously unseen data.

Preferably, the ensemble model is associated with a stability measure.

Preferably, the apparatus is arranged to determine a stability measure of a plurality of ensemble models and to select an ensemble model in dependence on the stability measures.

Preferably, the processor is arranged to determine and/or store a matrix associated with the stability measures and/or the weightings.

Preferably, the apparatus comprises a storage for storing the matrix.

According to another aspect of the present disclosure, there is described an apparatus for storing a data structure, the apparatus comprising: a user interface and/or a communication interface for receiving a target data series and one or more explanatory data series; and a processor for: determining a raw predicted data series based on the target data series; transforming the raw predicted data series; determining an initial prediction based on the transformed raw predicted data series; transforming each explanatory data series; determining an expected deviation based on the transformed explanatory data series; and determining a matrix associated with an ensemble model, which ensemble model comprises a plurality of forecast models, wherein each forecast model is associated with one or more transformed explanatory data series and wherein the ensemble model comprises a weighted combination of forecast models; wherein each of the forecast models is associated with a stability measure and wherein the weighting of each forecast model in the ensemble model is dependent on the corresponding stability measure; and wherein the matrix comprises a matrix of weightings and/or stability measures; and a storage for storing the matrix.

Preferably, the processor is arranged to determine the stability measure for each of the forecast models.

Preferably, the processor is arranged to determine the stability measure for each model using a leave-one-out process, wherein the processor determines a matrix associated with deviations of the target data series from a trendline relating to with initial prediction, drops an observation from the matrix, and predicts the dropped observation in dependence on the model and the remaining data in the raw predicted data series.

Preferably, the processor is arranged to determine a matrix of errors between the predictions of dropped observations and the values of the observations for a plurality of observations and a plurality of models.

Preferably, the processor is arranged to determine the stability measure for each model and/or the weighting of each model in the ensemble model based on the matrix of errors.

Preferably, the processor is arranged to set to zero the weighting of each model with a stability measure beneath a threshold value. Preferably, the threshold value is 0.9.

Preferably, the target data series comprises known data and/or historic data.

Preferably, the target data series relates to a volume and/or performance of assets.

Preferably, transforming the raw predicted data series comprises determining first differences of the raw predicted data series.

Preferably, transforming the raw predicted data series comprises determining logarithmic returns of the raw predicted data series.

Preferably, transforming the explanatory data series comprises determining first differences of the explanatory data series.

Preferably, transforming the explanatory data series comprises determining logarithmic returns of the explanatory data series.

Preferably, the processor is arranged to transform the target data series and the explanatory data series using the same transform.

Preferably, the processor is arranged to determine a moving average of the raw predicted data series. Preferably, the processor is arranged to determine a weighted and/or exponentially weighted moving average (EWMA). Preferably, wherein the weightings depend on the age of the datapoints of the raw predicted data series.

Preferably, transforming the raw predicted data series comprises transforming the moving averages.

Preferably, the processor is arranged to shift the transformed moving averages based on the mean value of the moving average of the transformed raw predicted data series. Preferably, the processor is arranged to determine the initial prediction in dependence on the transformed moving averages and the mean of the raw predicted data series.

Preferably, the processor is arranged to detrend and/or standardize the initial prediction.

Preferably, the processor is arranged to determine a forecast horizon, and to determine the predicted datapoint at the forecast horizon. Preferably, the processor is arranged to receive the forecast horizon from a further computer device.

Preferably, the processor is arranged to determine a predicted datapoint for a plurality of different forecast horizons; preferably to determine independently a predicted datapoint at each of the forecast horizons.

Preferably, the processor is arranged to determine the expected deviation at each forecast horizon using a different ensemble model.

Preferably, the processor is arranged to determine a predicted trend trajectory based on the plurality of predicted datapoints.

Preferably, the processor is arranged to determine the forecast horizon based on one or more of: a user input, and a feature of the target data series.

Preferably, the processor is arranged to transform the combination of the initial prediction and the expected variance to obtain the predicted datapoint. Preferably, the processor is arranged to transform the combination using the inverse of a transform used to transform the target data series and/or the explanatory data series.

Preferably, the processor is arranged to supplement, and/or extrapolate from, the target data series to obtain the raw predicted data series.

Preferably, the processor is arranged to pre-process the explanatory data series and/or the target data series. Preferably, the processor is arranged to supplement the explanatory data series and/or the target data series to account for missing data. Preferably, the processor is arranged to supplement a first, incomplete, section of the explanatory data series and/or the target data series based on a similar, complete, section of the explanatory data series and/or the target data series. Preferably, the processor is arranged to interpolate between values of the explanatory data series and/or the target data series.

Preferably, the processor is arranged to detrend and/or standardize the explanatory data series and/or the target data series.

Preferably, the user interface and/or the communication interface is arranged to receive a plurality of explanatory data series.

Preferably, the processor is arranged to cluster the transformed explanatory data series, preferably based on a similarity between the transformed explanatory data series.

Preferably, the processor is arranged to form each forecast model by selecting a representative transformed explanatory data series from one or more of a plurality of clusters.

Preferably, each forecast model is obtained by combining different transformed explanatory data series from different clusters.

Preferably, each forecast model uses two or three transformed explanatory data series from the plurality of clusters.

Preferably, the processor is arranged to determine and/or output an expected accuracy and/or goodness of fit measure for the predicted datapoint.

Preferably, the target data series and/or the explanatory data series comprises a sparse data series, typically a data series with no more than 50 values, no more than 25 values, no more than 10 values and/or no more than 5 values.

According to another aspect of the invention, there is provided a method of outputting an alert, the method comprising: receiving a target data series and one or more explanatory data series, wherein the target data series is associated with behaviour of a system and the explanatory data series comprises variables related to the behaviour of the system; determining a raw predicted data series based on the target data series; transforming the raw predicted data series; determining an initial prediction based on the transformed raw predicted data series; transforming each explanatory data series; determining an expected deviation based on the transformed explanatory data series; combining the initial prediction and the expected deviation to obtain the predicted datapoint; and outputting an alert in dependence on the value of the predicted data point; wherein the method further comprises: determining the expected deviation based on an ensemble model that comprises a plurality of forecast models, wherein each forecast model is associated with one or more transformed explanatory data series and is associated with a stability measure; and wherein the ensemble model comprises a weighted combination of forecast models, the weighting of each forecast model in the ensemble model being dependent on the corresponding stability measure; and determining and/or storing a matrix associated with the stability measures and/or the weightings.

According to another aspect of the invention, there is provided a method of testing of a system, the method comprising: receiving a target data series and one or more explanatory data series, wherein the target data series is associated with behaviour of the system; determining a raw predicted data series based on the target data series; transforming the raw predicted data series; determining an initial prediction based on the transformed raw predicted data series; transforming each explanatory data series; determining an expected deviation based on the transformed explanatory data series; combining the initial prediction and the expected deviation to obtain the predicted datapoint; and outputting a plot displaying the target data series including the predicted data point; wherein the method further comprises: determining the expected deviation based on an ensemble model that comprises a plurality of forecast models, wherein each forecast model is associated with one or more transformed explanatory data series and is associated with a stability measure; and wherein the ensemble model comprises a weighted combination of forecast models, the weighting of each forecast model in the ensemble model being dependent on the corresponding stability measure; and determining and/or storing a matrix associated with the stability measures and/or the weightings.

According to another aspect of the present disclosure, there is described a method of outputting an alert, the method comprising: receiving a target data series and one or more explanatory data series; determining a raw predicted data series based on the target data series; transforming the raw predicted data series; determining an initial prediction based on the transformed raw predicted data series; transforming each explanatory data series; determining an expected deviation based on the transformed explanatory data series; combining the initial prediction and the expected deviation to obtain the predicted datapoint; and outputting an alert in dependence on the value of the predicted datapoint; wherein the processor is arranged to determine the expected deviation based on an ensemble model that comprises a plurality of forecast models, wherein each forecast model is associated with one or more transformed explanatory data series and wherein the ensemble model comprises a weighted combination of forecast models.

According to another aspect of the present disclosure, there is described a system for outputting an alert, the system comprising: means for receiving a target data series and one or more explanatory data series; means for determining a raw predicted data series based on the target data series; means for transforming the raw predicted data series; means for determining an initial prediction based on the transformed raw predicted data series; means for transforming each explanatory data series; means for determining an expected deviation based on the transformed explanatory data series; means for combining the initial prediction and the expected deviation to obtain the predicted datapoint; and means for outputting an alert in dependence on the value of the predicted datapoint; wherein the processor is arranged to determine the expected deviation based on an ensemble model that comprises a plurality of forecast models, wherein each forecast model is associated with one or more transformed explanatory data series and wherein the ensemble model comprises a weighted combination of forecast models.

According to another aspect of the present disclosure, there is described a method of storing a data structure, the method comprising: receiving a target data series and one or more explanatory data series; and determining a raw predicted data series based on the target data series; transforming the raw predicted data series; determining an initial prediction based on the transformed raw predicted data series; transforming each explanatory data series; determining an expected deviation based on the transformed explanatory data series; and determining a matrix associated with an ensemble model, which ensemble model comprises a plurality of forecast models, wherein each forecast model is associated with one or more transformed explanatory data series and wherein the ensemble model comprises a weighted combination of forecast models; wherein each of the forecast models is associated with a stability measure and wherein the weighting of each forecast model in the ensemble model is dependent on the corresponding stability measure; and wherein the matrix comprises a matrix of weightings and/or stability measures.

According to an aspect of the disclosure, there may be provided one, some or all of the following:

- Using a large series of variables which may be related to trends and/or which may provide trend predictors and/or factors;
- a method of extracting relevant data from a data series; this may comprise clustering variables and/or data with similarities, for example similar relationship and/or predictive power with respect to the target data series; the clusters may be represented by a variable and/or data which most strongly represents the predictive power;
- using distinct models to determine different points on a trend trajectory, preferably wherein the models are not related, preferably wherein the models are ensemble models, more preferably wherein the ensemble models comprise different combinations of forecast models; more preferably wherein the different ensemble models comprise forecast models aggregated according to different weightings;
- performing transformations on the target data series and explanatory data series; preferably, the same transformation or transformations; preferably performing multiple transformations on the target data series and explanatory data series; preferably further by performing an inverse transformation on the predicted datapoint;

- dropping any forecast models which have a stability below a threshold value;
- saving intermediate data values determined from the forecast models; for example, predicted values and errors and/or stability measures and/or corresponding weightings; preferably wherein the intermediate values are determined using a leave-one-out process;
- determining errors and/or stability measures of an ensemble model directly from the intermediate data values; preferably using the Leave-One-Out Root-Mean-Square-Error (LOO-RMSE) (preferably as defined by the equation on page 27); more preferably using $\eta_h$, where is one minus a Leave-One-Out Root-Mean-Square-Error (LOO-RMSE);
- determining a goodness-of-fit measure directly from the intermediate data values; preferably Leave-One-Out adjusted Determination Coefficient ($LOO - \overline{R}^2$); preferably using the Parsons-Jelonek coefficient; preferably as defined by the equation on page 28.

Any feature described as being carried out by an apparatus, an application, and a device may be carried out by any of an apparatus, an application, or a device. Where multiple apparatuses are described, each apparatus may be located on a single device.

Any feature in one aspect of the disclosure may be applied to other aspects of the invention, in any appropriate combination. In particular, method aspects may be applied to apparatus aspects, and vice versa.

Furthermore, features implemented in hardware may be implemented in software, and vice versa. Any reference to software and hardware features herein should be construed accordingly.

Any apparatus feature as described herein may also be provided as a method feature, and vice versa. As used herein, means plus function features may be expressed alternatively in terms of their corresponding structure, such as a suitably programmed processor and associated memory.

It should also be appreciated that particular combinations of the various features described and defined in any aspects of the disclosure can be implemented and/or supplied and/or used independently.

The disclosure extends to methods and/or apparatus substantially as herein described with reference to the accompanying drawings.

The disclosure will now be described, by way of example, with reference to the accompanying drawings.

**Brief Description of the Drawings**

Figure 1 shows a computer device on which the methods described herein may be implemented.

Figure 2 shows a method of determining a predicted datapoint based on an input data series;

Figure 3 shows a method of determining a predicted datapoint based on an initial prediction and an expected variation;

Figure 4 shows a method of pre-processing a data series;

Figure 5 shows a method of completing a data series with missing datapoints;

Figure 6 illustrates a method of pre-processing a data series;

Figure 7 shows a method of determining a predicted datapoint based on a clustering of features;

Figure 8 shows an exemplary clustering of features;

Figure 9 shows a method of determining the stability of a model;

Figure 10 shows a detailed method of determining the predicted datapoint;

Figure 11 shows a system comprising a plurality of computer devices;

Figure 12 shows an image that has been processed using the methods disclosed herein;

Figure 13 shows an exemplary workflow of inputs by a user;

Figure 14 shows a further exemplary workflow of inputs by a user;

Figure 15 shows the relationship of variables of interest of an exemplary self-contained system;

Figure 16 shows exemplary plots of variables of interest;

Figure 17 shows exemplary plots of variables of interest, including predicted values; and

Figure 18 shows an exemplary output by system indicating predictions of the behaviour of the system under different conditions.

## Detailed Description of Preferred Embodiments

Referring to Figure 1, the methods, apparatuses, and systems disclosed herein are typically implemented using a computer device 1000, and are typically computer-implemented methods.

The computer device 1000 comprises a processor in the form of a CPU 1002, a communication interface 1004, a memory 1006, storage 1008, and a user interface 1010 coupled to one another by a bus 1012.

The CPU 1002 executes instructions, including instructions stored in the memory 1006 and/or the storage 1008.

The communication interface 1004 enables the computer device 1000 to communicate with other computer devices. The communication interface may comprise an Ethernet network adaptor that couples the bus 1012 to an Ethernet socket. Such an Ethernet socket can be coupled to a network, such as the Internet. It will be appreciated that the communication interface may be arranged to communicate using a variety of mediums, such as area networks (e.g. the Internet), infrared, and Bluetooth®.

The memory 1006 stores instructions and other information for use by the CPU 1002. The memory is the main memory of the computer device 1000. It usually comprises both Random Access Memory (RAM) and Read Only Memory (ROM).

The storage 1008 provides mass storage for the computer device 1000. In different implementations, the storage is an integral storage device in the form of a hard disk device, a flash memory or some other similar solid state memory device, or an array of such devices.

The user interface 1010 enables users to interact with the computer device 1000 and comprises an input means and/or an output means. For example, the user interface may comprise a display and an input/output device, such as a keyboard, a mouse, or a touchscreen interface.

A computer program product is disclosed that includes instructions for carrying out aspects of the method(s) described below. The computer program product may be stored, at different stages, in any one of the memory 1006, the storage 1008 and/or a removable storage (e.g. a universal serial bus storage device). The storage of the computer program product is non-transitory, except when instructions included in the computer program product are being executed by the CPU 1002, in which case the instructions are sometimes stored temporarily in the CPU or memory. It should also be noted that the removable storage is removable from the computer device 1000, such that the computer program product may be held separately from the computer device from time to time. Different computer program products, or different aspects of a single overall computer program product, are present on the computer devices used by any of the users.

There is also disclosed a system (e.g. a network) that comprises a plurality of computer devices, where each of these computer devices may carry out different parts of the methods disclosed herein. Each of the computer devices may be configured for a particular purpose; for example, a computer device with a powerful processor may be used for analysis, while a computer device with a large display 1014 may be used to display the results of analysis to a user. Typically, the plurality of computer devices are arranged to communicate with each other so that data can be transmitted between the computer devices.

The present disclosure relates to a method of, and system and apparatus for, predicting (or forecasting) a datapoint given an input data series.

The input data series may be retrieved from a remote storage, or may be stored on the computer, or within a storage on the computer device 1000. The input data series may be retrieved or input in a graphical format (such as a graph, plot or image), in which case a graphical processing unit processes the input and coverts it into numerical data points which form the input data series. The target data series will be based on this input data series. In the case of image processing, for example photographs or drawings, the predicted datapoints can be used to smooth trends. This may be used to reduce noise and/or to sharpen images and/or to soften images and/or to perform smoothing (as may be used in amending photographs). In the case of image processing plots of data, such as plots or graphs, the predicted datapoint (or datapoints) may be used to replace or add missing datapoints, this may include to extrapolate data. Once the predicted datapoint or datapoint has been determined, the graphical processor (or a further processor) may process the image to include the predicted datapoint, and then the or a processor output the processed image. The present invention advantageously can predict one or more datapoints using even sparse input data series.

The computer device 1000 may be implemented as a robot configured to perform actions and/or output commands and/or alerts in dependence on the predicted data point, and/or to automatically process images.

Typically, the input data series comprises historic data and the predicted datapoint relates to a prediction of a future datapoint. In a practical example that is described herein, the example prediction is associated with a system of assets, where the input data series relates to the historic volume of these assets and the predicted datapoint relates to a predicted future volume. In this example the computer device is arranged to forecast the volume of one or more assets under management (AUMs) to enable the selection of assets that are likely to perform well in the future.

It will be appreciated that the disclosures are more generally applicable to any system in which a first set of datapoints (a first input data series) is useable to predict a second datapoint (a predicted datapoint) or a second set of datapoints (a predicted data series). As examples, the disclosures herein may be used to analyse the past performance of a mechanical system, such as a vehicle, and to predict future performance based on this past performance. Therefore, the computer device may indicate that a vehicle is likely to experience a malfunction so that timely action can be taken to avoid the malfunction. Equally, the disclosures herein may be used to simulate the performance of a real-world structure based on historic data for similar structures so as to enable a design of a structure to be improved. Where a user wishes to build a bridge, the user may prepare an initial design and then evaluate this design using the disclosures herein (and, e.g., real-world performance data relating to other similar bridges) to identify potential flaws in the design.

Referring to Figure 2, there is described a method of predicting (or forecasting) a datapoint given a set of input datapoints. This method is typically performed by the computer device 1000; though more generally this method could be performed manually or as a combination of manual and computer-implemented methods. Furthermore, the method may be performed by a plurality of computer devices (and/or humans).

In a first step 11, the computer device 1000 receives an input data series (e.g. via the communication interface 1004 and/or the user interface 1010). The input data series comprises a plurality of (input) datapoints.

Typically, the input data series comprises datapoints that relate to the historic behaviour of the system. For example, the input data series may comprise historic values of an asset, or historic performance metrics for a vehicle.

More generally, the input data series comprises datapoints relating to known (e.g. measured) behaviour. This known behaviour is typically historic behaviour, where the datapoints each relate to a different time. This enables the prediction of future behaviour based on past behaviour. Equally, the datapoints could each relate to other data, such as the performance of different components, where this enables prediction of a further, unknown, component. For example, each datapoint of the input data series could relate to a different engine within a product series, where this input data can be used to predict the performance of a similar engine that is being designed so as to be added to the product series. The method may then comprise outputting a design of an engine based on the prediction.

The data series may comprise monthly, or annual data. Typically, the data series comprises at least (or only) 5 values, and/or at least 10 values. Typically, the data series comprises no more than 50 values, and/or no more than 25 values. It has historically been difficult to obtain accurate predictions using these sorts of data series (e.g. annual data series with a small number of datapoints); the present disclosures are particularly applicable to such data series and enable accurate predictions to be output.

In a second step 12, the computer device determines a predicted datapoint (or a predicted data series) based on the input data series. Typically, this comprises determining a trend of the input data series and extending this trend to determine the predicted datapoint. Where the input data series relates to historic data, the prediction is typically associated with a future prediction. Therefore, in a basic example, the predicted datapoint is determined by determining a trendline based on the input data series and extrapolating this trendline to determine the predicted datapoint.

More complex (and more accurate) methods of predicting datapoints are described below.

Referring to Figure 3, there is described a more detailed method of determining a predicted datapoint.

In a first step 21, the computer device receives input data that comprises a target data series and an explanatory data series.

The target data series comprises datapoints relating to known behaviour of a system (e.g. datapoints relating to historic behaviour of the system).

The explanatory data series comprises datapoints that affect the behaviour of the system. More specifically, the explanatory data series comprises datapoints that could suggest the behaviour of the system will deviate from the behaviour suggested by the target data series.

Where the system being evaluated comprises a system of assets, the explanatory data series may comprise information relating to one or more of: fund deals (e.g. a number of deals, an aggregate deal value, an average deal value); fundraising (e.g. a number of funds, an aggregate capital, an average size); capital stock consumer price index; private consumption; employment, foreign direct investment; gross domestic product; debt; personal disposable income;

interest rates; bond yields; total fixed investment; money supply; share price index; total retail sales; and unemployment.

More generally, the explanatory data series typically comprise information that relates to a condition of the environment, in particular to a condition that suggests the future behaviour of the environment may vary from the historic behaviour of the environment. Where the system being evaluated is associated with a vehicle, the explanatory data series may comprise climate information or information about a road-repair budget.

Each explanatory data series typically takes the form of a time series, with different numeric values attributed to consecutive periods. The series may be quoted on a yearly, quarterly, and/or monthly basis.

In a second step 22, the computer device determines an initial prediction based on the target data series. For example, the computer device may extrapolate the target data series to determine an initial predicted datapoint. More specifically, the computer device may determine a plurality of initial (predicted) datapoints at a plurality of different forecast horizons and then determine a forecast trajectory based on these initial datapoints.

Typically, the computer device is arranged to determine the initial prediction using a deterministic backward-looking trend based on moving averages. In particular, the computer device may determine a moving average of a predicted data series and extend it (extrapolate it) into the future. The computer device is then able to assess the accuracy of future predictions based on the similarity between the modelled historic data and the measured historic data (e.g. the difference between 'calculated' datapoints and 'target' datapoints). The expected inaccuracy is later corrected using an averaged prediction from multiple linear models.

In a third step 23, the computer device determines an expected deviation based on the explanatory data series. For example, the computer device may determine that in the future the temperature is likely to drop and so the performance of a car battery is likely to be worse than the initial prediction.

As is described below, the determination of the expected deviation involves the use of a forecast model. Typically, the determination involves the use of a plurality of forecast models. Similarly, the determination of the initial prediction may involve the use of a plurality of initial prediction models. Using a plurality of models increases the accuracy of the prediction across a range of situations. Methods of forming forecast models are described further below.

In a fourth step 24, the computer device determines a predicted datapoint based on the initial prediction and the expected deviation.

Following the determination of the predicted datapoint, the computer device is arranged to provide an output. The output may be the predicted datapoint. Equally, the output may be a suggested action (e.g. replace the brake pads of a car, or alter the design of a bridge). Equally, the output may be an action (e.g. the computer device may purchase or sell an asset based on a predicted performance of that asset).

The predicted datapoint is predicted at a selected forecast horizon (e.g. a selected time in the future). This forecast horizon is typically selected by a user. As an example, the user is able to select a five-year forecast horizon to obtain a prediction five years into the future. Equally, the forecast horizon may be selected based on the available data, where explanatory data series in particular may only be suitable for certain forecast horizons.

Where the target data series is not historical data (and the prediction is not associated with the future), the forecast horizon relates to a difference between the target data series and the desired prediction, e.g. a change in the specifications of a component. So where the target data series relates to differently-sized engines in a product series, the horizon forecast relates to a size of engine for which a prediction is desired.

Typically, the computer device is arranged to determine a plurality of predicted datapoints at a plurality of forecast horizons (e.g. at each of a one-year forecast horizon, a two-year forecast horizon, a three-year forecast horizon, a four-year forecast horizon, and a five-year forecast horizon). This enables a trend trajectory to be determined based on the plurality of predicted datapoints. In such embodiments, the determination of each of the predicted datapoints may occur separately so that the predicted datapoints are determined (for example, computed) independently of each other and so that an error in the prediction of a single datapoint does not affect the accuracy of the other predicted datapoints.

More specifically, for each of the forecast horizons the computer device is arranged to determine a 1) a deviation of predicted data series (after incomplete data was filled in) from its trend, 2) an extrapolation of this trend into the future (a forecast of trend). Then it is arranged to identify one or more suitable explanatory data series to predict the future values of deviation from trend. The forecast of trend, corrected with the predicted deviation, constitutes a forecast datapoint at a given forecast horizon. Typically, different explanatory data series are used for each of the forecast horizons. Typically, the same target data series is used for the predictions at each of the forecast horizons.

In a simple example, the target data series comprises a series of datapoints covering 2003 - 2021 (with each datapoint being taken at the end of the year). Where the target data series is a complete data series, the raw predicted data series may simply be equivalent to the target data series. Where the target data series is an incomplete data series (e.g. the datapoint for 2021 is only for Q1), the raw predicted data series may be a completed version of the target data series - and methods of completing the data series are described further below. Yet further, the target data series may be modelled (e.g. approximated) and/or extrapolated to obtain a raw predicted data series. For example, a line of best fit for the target data series may be determined to obtain the raw predicted data series.

To obtain the initial prediction (and to improve the accuracy of this initial prediction), the computer device is arranged to transform the raw predicted data series and/or the target data series.

Referring to Figure 4, a method of transforming the raw predicted data series is described.

In a first step 31, the computer device transforms the raw predicted data series, e.g. by determining first differences and/or logarithmic returns for the datapoints of the raw predicted data series.

These two exemplary transformations can be defined as:

$$f_1^h(z_t) = \frac{1}{h}(z_t - z_{t-h})\ [first\ differences\ over\ h\ periods]$$

$$f_2^h(z_t) = \frac{1}{h}(ln(z_t) - ln(z_{t-h}))\ [logarithmic\ returns\ over\ h\ periods]$$

Where $z_t$ denotes a value of a data series with a number of datapoints $t \in \{1, ..., T - h\}$ where $h$ e $\{1, ..., H\}$ represents the selected forecast horizons and t is an index (e.g. where the target data series is a time series, t denotes a time associated with a datapoint). T denotes a number of consecutive periods of time, and H denotes a number of forecast horizons.

It will be appreciated that various other transformations are possible, for example a square of first differences. More preferably, operations with uniquely defined inverse would be used (any such operation being appropriate). Equally, the transformation may depend on non-adjacent datapoints and/or may depend on more than two datapoints.

In a second step 32, the computer device determines a moving average of the raw predicted data series. The moving average of the raw predicted data series will be smoother, and less volatile, than the raw predicted data series.

The moving average typically comprises an exponentially weighted moving average (EWMA) of the raw predicted data series.

In this regard, the forecast model may be arranged to weight the datapoints of the target data series based on a characteristic, such as age. In particular, higher weights may be applied to recent datapoints, while lower weights are applied to older datapoints. The EWMA can be calculated using the following function:

$$EWMA = f_i^h\left(\sum_{s=0}^{L-1} w_s z_{t-s}\right), \qquad (i \in \{1, ..., P\})$$

Where P transformations are considered, and where weights are given by

$$w_s = \frac{\delta^s(1-\delta)}{1-\delta^L}, \qquad s \in 0, ..., L-1, \qquad \delta \in (0,1)$$

Where L is a number of lags in the Exponentially-Weighted Moving Average and $\delta$ is an exponential decay parameter that determines the variance of the weightings (e.g. using a small value of $\delta$ leads to a large variance so that the EWMA is heavily weighted towards more recent data).

With the above equation, the weights add up to one.

It will be appreciated that other methods may be used to determine the weights (e.g. various methods may be used to determine weightings that are more (or less) biased to recent data). Suitable weightings, and suitable values of $\delta$, depend on the purpose of the prediction and on the target data series.

A non-weighted moving average can be determined by using weightings that are each equal to $w_s = \frac{1}{L}$.

The moving average of the raw predicted data series is a smoother and less volatile representation of the target data series than the raw predicted data series.

It will be appreciated that this second step 32 (the determination of the moving average) is not dependent on the first step 31 (the transformation of the raw predicted data series) and so these two steps may be performed in any order.

In a third step 33, the computer device transforms the determined moving average using the same transformation as for the raw predicted data series (e.g. the determination of first differences and/or logarithmic returns). This guarantees that both the transformed raw predicted data series and the transformed moving average are expressed in same units.

In a fourth step 34, the computer device shifts the mean of the transformed moving average so that it matches the mean of the transformed raw predicted data series. Therefore, the mean difference between the raw predicted data series and the target data series (at the relevant forecast horizon) is equal to zero.

More specifically, the computer device determines differences between corresponding datapoints of the transformed raw predicted data series and the moving average. The computer device then determines the mean of these differences. A transformed initial prediction can then be determined by combining this mean value with the transformed moving average (e.g. summing the mean shift with the transformed moving average).

This method enables an expected trend to be determined for a given forecast horizon. For example, where a forecast horizon of five years is selected (and the transformation comprises, e.g. an annualised log-return calculated over a five year window), the above methods are useable to determine a prediction five years in the future given current data. So a naive prediction for a value in 2026 can be determined based on the sum of the transformed moving average value at 2021 and the mean of differences between the transformed moving average value and the transformed raw predicted data series.

This method therefore involves determining a historic moving average and assuming that trends in this historic moving average will continue into the future. With this assumption, expected future values can be calculated (these future values being the values that lead to the determined trend continuing into the future).

Typically, the transformed initial prediction is then detrended and standardized (using techniques known in the art).

Yet more specifically, the mean difference between the transformed raw predicted data series and the transformed moving average for a given forecast horizon h is calculable as:

$$\mu_i^h = \frac{1}{T}\sum_{t=1}^{T}\left[f_i^h(z_t) - f_i^h\left(\sum_{s=0}^{L-1} w_s\, z_{t-s}\right)\right], \qquad i \in 1,\dots,P$$

Therefore, the predicted datapoint (adjusted for the above-calculated mean difference) evaluated for index (e.g. time) t is calculable as:

$$g_{i,t}^h = f_i^h\left(\sum_{s=0}^{L-1} w_s\, z_{t-s}\right) + \mu_i^h, \qquad i \in 1,\dots,P$$

Where $g_{i,t}^h$ is a 'naive' (or initial) predicted datapoint - that is a predicted datapoint that does not take into account any explanatory variables. A plurality of predicted datapoints can then be determined to determine a 'naïve' predicted trend trajectory.

This predicted trend trajectory is determined as:

$$g_{i,T}^1, g_{i,T}^2, \dots, g_{i,T}^H$$

This trajectory represents dynamics of a variable, transformed by a function $f_i^h$ .

Where the transformation relates to the determination of first differences, the trend is linear in every forecast horizon (e.g. the trend trajectories are quasi-linear). Where the transformation relates to the determination of logarithmic returns, the trend is exponential in every horizon (e.g. the trend trajectories are quasi-exponential). As mentioned above, various other transformations are possible.

The method outlined above delivers a sequence of initial predictions that is a proxy of a trend in historical data. The terminal value (which is a single datapoint) is an initial prediction. The period of the initial prediction is dependent on the forecast horizon used to calculate the initial prediction.

Typically, the method is repeated for a plurality of forecast horizons, e.g. forecast horizons of one to five years, where the transformation used depends on the forecast horizon. For example, where a five year forecast horizon is used, the transformation may comprise an annualised log-return calculated over a five year window. Where a two year forecast horizon is used, the transformation may comprise an annualised log-return calculated over a two year window. The resultant initial predictions may then be combined to obtain an initial predicted trend trajectory. Where explanatory data series are used, the expected deviation due to these explanatory data series is determined (e.g. as described below) and this expected deviation is combined with the initial predictions to obtain the predicted datapoints (and the predicted trend trajectory). The input data series and the explanatory data series typically have the same dimensions. More specifically, typically the input data series and the explanatory data series each comprise a series of datapoints with each datapoint being associated with a time where, for each time, there is a datapoint of both the input data series and the explanatory data series.

In some embodiments, the data series have different dimensions. In particular, the explanatory data series may be incomplete (e.g. missing datapoints for certain times). Therefore, the computer device may be arranged to pre-process the explanatory data series before applying forecast model(s) based on these data series (as is described further below).

Pre-processing the explanatory data series may comprise supplementing the data series to account for any missing or incomplete data. In particular, data for a terminal year is likely to be incomplete, therefore, the computer device may account for missing months or quarters, for example. Similarly, the target data series may be supplemented to account for any missing or incomplete data using the methods described below.

In order to supplement the variables, the computer device typically assumes that a period for which data is missing from any of the explanatory data series follows the same pattern as a similar period for which data is available. The computer device may supplement data for a period of a data series based on data from a previous period of the data series and/or based on data from other, similar, data series. In a practical example, if the explanatory variable has followed a certain trend for 2019 (e.g. doubling each quarter), it can be expected that this trend will continue in 2020. Therefore, if fourth quarter data is missing for 2020, the computer device may fill in this data by doubling the third quarter data.

In a specific example, the target data series comprises end of year data for each year. In this example, end of year data is available for 2017 - 2019 but not 2020. Therefore, the end of year data for 2020 may be determined based on third quarter data for 2020 and based on the change between third and fourth quarter data for 2017 - 2019. Equally, the incomplete data may be extrapolated and/or interpolated from available data.

In some embodiments, in particular for explanatory data series, incomplete or missing data may be determined based on other data series. For example, when an incomplete explanatory data series is identified the computer device may: determine a missing datapoint (e.g. there may be no data at the time t=0); determine a plurality of similar complete explanatory data series; determine the values for these similar data series at the index of missing datapoint (e.g. at time t=0); determine an average of these values; and insert this average value into the incomplete explanatory data series. It will be appreciated that other methods of combining the values of the similar data series are possible.

A more detailed method of pre-processing an input data series (e.g. an explanatory variable data series and/or a target data series) is described with reference to Figure 5.

In a first step 41, the computer device identifies a first period of a data series for which there is missing data (e.g. a time for which there is a datapoint in the target data series but no datapoint in the explanatory variable data series).

In a second step 42, the computer device determines a second, similar, period of the data series (e.g. a previous period) for which data is available.

In a third step 43, the computer device completes the first period of the data series based on the data in the second period of the data series.

While this example has referred to periods, it will be appreciated that the data series are not necessarily time series, and so more generally the computer device may identify a 'missing' datapoint based on the data series.

The method of Figure 5 describes the completion of the first period based on a second, similar, period of the same data series. The first period may also be completed based on a further data series as has been described above.

In some embodiments, the computer device is arranged to change the frequency of the explanatory data series (e.g. from monthly to yearly). In some situations, the explanatory data series lacks data points in between the first and the last available numeric observations, so the computer device may interpolate between these available observations and/or may replace these missing datapoints with numeric values (e.g. using a k-nearest neighbours method) to obtain an explanatory data series that has the same dimensions as the target data series.

Where the target data series comprises an incomplete data series, the target data series may be completed as described with reference to Figure 5 as part of the determination of the raw predicted data series. This completion of the data series occurs before the transformation that has been described with reference to Figure 4.

Following any pre-processing of the explanatory data series, the explanatory data series are used to determine an expected deviation as described with reference to the third step 23 of the method of Figure 3.

This determination of the expected deviation depends on the selected forecast horizon(s) and on the (type of) transformation applied to the target data series. For example, if the computer device takes first differences of the target data series to determine the initial prediction, then the computer device also takes first differences of the explanatory data series to determine the expected deviation. As a result, the computer device determines deviations from the initial predictions based on absolute changes of underlying explanatory variables. Similarly, if the computer device takes logarithmic returns of the target data series, then the computer device also takes logarithmic returns of the explanatory data series. Then the model explains relative deviations from trend with (approximately) percentage changes of the underlying explanatory variables.

The transformations of the explanatory data series are calculated over one or more selected transformation horizons (where the set of transformation horizons typically comprises the selected forecast horizons). Therefore, the determination of the expected deviations accounts for short-term as well as long-term dynamics. In this regard, where a forecast horizon of five years is used, a deviation at this forecast horizon may be indicated by a shorter-term trend in the explanatory data series (e.g. a winter of extreme weather may provide a strong predictor of the extent of corrosion over five years, or a one-year change in GDP may be the best indicator of a five-year change in inflation). Therefore, typically, a plurality of transformation horizons are used to transform the explanatory data series in order to determine the expected deviation at a single forecast horizon (where the most significant transformation horizon(s) are determined as described below).

If an underlying explanatory variable is not associated with a fixed forecast horizon, the computer device may include copies delayed by one and two years. This enables the computer device to account for impact across time, e.g. in case of investment in infrastructure or of government spending.

Typically, the computer device is arranged to create copies of all candidate explanatory data series and to de-trend these variables (e.g. using known de-trending procedures). To avoid spurious regressions, the computer device may reject all candidates that are non-stationary and/or may process the explanatory data series to obtain a stationary data series.

Typically, the computer device is arranged to consider only relevant explanatory variables, where the relevance depends on a characteristic of the target data series. For example, when considering corrosion of automotive parts of a car located in Sweden, only explanatory data series specific to the environment in Sweden are considered. As another example, where the target data series relates to financial data related to North America, only explanatory data series relevant to North America are considered.

Therefore, the computer device provides a prediction for a selected forecast horizon for a target data series with certain characteristics.

This process of generating copies of the explanatory variable data series and their subsequent transformation is described with reference to Figure 6. It will be appreciated that any combination of the method steps may be implemented (or not implemented).

As an initial step, the computer device receives a raw explanatory variable data series, such as a data series comprising fund information datapoints or a data series comprising climate information data points.

In a first step 51 and a second step 52, the computer device transforms this explanatory variable data series. Typically, the computer device transforms the explanatory variable data series using a type of transformation that has been used for the target data series and/or the raw predicted data series.

The computer device transforms the explanatory variable data series at each of a selected number of transformation horizons. For example, the computer device may conduct five transformations using five different windows (e.g. the computer device may determine an annualised log-return of the explanatory data series using each of a 1 year, 2 year, 3 year, 4 year, and 5 year horizon/window).

In the example of Figure 6, five transformation horizons (or 'windows') are selected (each year for five years), so the computer device determines transformations of the explanatory data series at each of the five transformation horizons. This leads to five transformed explanatory data series. These transformed explanatory data series can be tested (as described further below) to determine a combination of explanatory data series that is the best indicator of the expected deviance.

Typically, the explanatory variable data series comprise complete data series so that transforming the explanatory variable data series comprises applying a transformation to the raw explanatory variable data series. Where the explanatory variable data series is incomplete it may be supplemented before the transformation as has been described above with reference to the target data series.

In some situations, the explanatory variable data series comprises data for the future (e.g. where the explanatory variable relates to a budget, this budget may be set years in advance). In such situations, the determination of the effect at the various transformation horizons may simply comprise identifying datapoints associated with these forecast horizons.

Typically, the explanatory variable data series comprises historic/current data that is an indicator of future deviations. For example, the explanatory variable data series may comprise data relating to road conditions, which may include information relating to the exposure to de-icing salts for example, which can have a strong effect on the acceleration of corrosion in the future. As another example, the explanatory variable data series may comprise GDP data, which is an indicator of future inflation (so that the GDP from 2020 may be a good indicator of inflation in 2025).

In a third step 53, the computer device determines copies of each predicted explanatory variable data series, which copies are delayed by a certain time period. In the example of Figure 6, the copies are delayed by zero, one, and two years respectively. As explained above, this accounts for the impact of the explanatory data series across time. The number of copies, and the delay, typically depends on the selected forecast horizons. This provision of copies may occur for each of the transformation horizons (e.g. so that where five transformation horizons are used) and two copies are determined for each transformation horizon, there will be a total of ten copies of the explanatory data series following the third step.

In a fourth step 54, the computer device de-trends and/or standardizes each of the copies (as is known in the art).

In a fifth step 55, the computer device determines whether each of the de-trended and/or standardized copies is stationary and discards any non-stationary copies. Typically, determining whether a transformation is stationary comprises determining if it passes an augmented Dickey-Fuller test, e.g. at a 1% significance level. It will be appreciated that other tests and other significance levels may be used.

The remaining 'processed' explanatory variable data series (which are hereafter alternately referred to as 'features') can then be used to determine an expected deviation from the initial prediction. It will be appreciated that any disclosures relating to features (e.g. and their uses) equally apply to explanatory data series and *vice versa.*

In order to determine the expected deviation, a forecasting model is used that is based on the processed explanatory variable data series (or more specifically the features). Typically, the forecasting model combines a plurality of processed explanatory variable data series. For example, the forecasting model may comprise a linear combination of two processed explanatory variable data series (that relate to different explanatory variables). Such a forecasting model may take the form:

$$y_{t+h,h} = \beta_{1,h}x_{1,t,h} + \beta_{2,h}x_{2,t,h} + \epsilon_{t,h}$$

In this equation:

$y_{t+h,h}$ denotes the expected deviation of an initial prediction from an actual value at a forecast horizon of h years (and, typically, the average of $y_{t+h,h}$ across all forecast horizons is approximately equal to zero).

$x_{i,t,h}$ denotes a value of a feature i at a forecast horizon h and a time t.

$\beta_{i,h}$ denotes a coefficient for the feature i.

$\varepsilon_{t,h}$ denotes the error in the forecast prediction (the 'model error'). The error is typically modelled as a distribution so that the error may be used to obtain error bars for the prediction. Model errors are typically assumed to be distributed normally and independently across time for each horizon h, e.g.:

$$\epsilon_{t,h} \sim NID(O, \sigma_h^2), \qquad t \in \{1, \dots, T-h\}$$

The above equation can more generally (for a forecast model that can be based on any number of features) be written as:

$$y_{t+h,h} = \left(\sum \beta_{i,h}x_{i,t,h}\right) + \epsilon_{t,h}$$

In order to obtain a plurality of predictions for a plurality of forecast horizons, the computer device typically uses a plurality of different forecast models, where one or more of these forecast models is used to predict a datapoint for each forecast horizon.

The computer device typically has access to a plurality of potential explanatory variable data series; therefore, for each forecasting model, the computer device may be arranged to select (and use) those features that lead to the most accurate predictions. With the example of predicting inflation, it might be the case that GDP is a particularly good predictor for inflation at a one year forecast horizon, but is a poor predictor for inflation at a two year forecast horizon. Conversely, employment data may be a particularly good predictor at a two year forecast horizon but a poor predictor at a one year forecast horizon. Therefore, the expected deviation at a one year horizon is determined using a forecasting model based largely on GDP and the expected deviation at a two year horizon is determined (separately) using a forecasting model based largely on employment data. By determining these expected deviations separately, a more accurate result is determined than if the expected deviations were determined using a single forecast model (and, e.g. plotting a trend based on this single forecast model).

Referring to Figure 7, there is described a method of determining features to use in a forecasting model.

In a first step 61, the computer device first ranks all features according to their power of prediction for the selected forecast horizon and the selected parameters (e.g. a selected geographical area).

In a second step 62, the computer device selects the most powerful features and/or discards any non-informative features (e.g. features that are not relevant to the selected geographical area).

This may comprise the computer device determining a subset of features that are deemed to be the most powerful (e.g. the 30 most powerful features out of 100 available features), where this determination of most powerful features is typically based on historic accuracy. For example, the most powerful features for a forecast horizon of one year in the future may be determined based on whether these features would have provided accurate results for a forecast horizon in the past (where the past data is known).

In other words, the computer device determines the features with the strongest historic correlation with the variable that is being predicted (where the variable represents a deviation from the trend defined by the target data series). Therefore, the computer device selects features which historically co-moved with the variable that is being predicted.

In a third step 63, the selected features are grouped into clusters of similar features, with each cluster comprising similar features in terms of correlation with the target data series. Typically, the grouping is conducted using a flat hierarchical clustering with a single linkage. Hence the distance between two clusters is the distance between the closest points of these clusters.

The measure of similarity used may be the Euclidean distance between columns (or rows) of a correlation matrix associated with the features.

In a fourth step 64, the computer device selects a feature from each cluster to be a cluster representative. Typically, the most powerful feature in each cluster is selected as the cluster representative. These cluster representatives are (1) strong predictors of the target data series, and (2) likely to carry different information (since each feature comes from a different cluster).

It will be appreciated that a plurality of explanatory data series may be selected from one or more of (or each of) the clusters.

An exemplary grouping of features is shown in Figure 8, which shows the grouping of features into two clusters 101, 102. Figure 8 also shows the selection of one representative feature 111, 112 from each cluster, where these representative features could thereafter be used in a forecasting model.

A selection of features from one or more of the clusters defines a forecast model that can be used to determine the expected deviation.

More specifically, each forecast model is useable to determine an expected deviation of the initial prediction from an actual value (which initial prediction is determined based on a trend trajectory derived from the target data series).

Different forecast models can be obtained by combining different features. The number of possible forecast models is a function of the number of clusters and the number of features used by each forecast model. Considering a system with twelve clusters, where each forecast model uses either two or three features, there are two hundred and eighty six forecast models available for each forecast horizon ($12C2 + 12C3 = 286$). Each forecast model provides a different forecast. It will be appreciated that systems may be used with any number of clusters, and that any number of features may be used in each forecast model. The use of two or three features per forecast model has been found to be fast to compute while providing a limited number of forecast models (so that it is possible to compute stability and goodness-of-fit measures for each model).

Typically, the computer device is arranged to test each available forecast model using previously unseen data (e.g. data that was not in a set of training data that was used to determine/train the forecast models). The forecast models which do not perform well on new data (e.g. models for which $\gamma_{t,h,m} > 0.9$) may be labelled unstable, and these models typically are not used in the determination of the expected deviance.

Each forecast model is assigned a stability measure based on their performance on previously unseen data, where the stability measure is associated with the accuracy of the forecast model. Forecast models that provide more accurate predictions for unseen data are given higher stability measures. The use of a plurality of forecast models (including both forecast models with high stability measures and forecast models with medium stability measures) enables accurate predictions to be provided in unusual situations and also reduces the volatility of the predictions.

To obtain 'unseen' data with which a forecast model can be evaluated, a leave one out (LOO) method may be used as described in depth below. In a basic example, where there are ten datapoints available for each data series, the stability of a forecast model may be determined by removing the first datapoint from each data series, predicting this first datapoint based on the remaining datapoints, determining the accuracy of the prediction, and then repeating this process for each of the other datapoints. This leads to ten predicted datapoints, where the stability of a forecast model can be determined based on the accuracy of these ten predicted datapoints.

The expected deviation may be determined using a single forecast model. However, typically, the expected deviation is determined using a combination of forecast models, where the outputs of each forecast model are combined to obtain the expected deviation. In particular, expected deviations may be determined for each of the forecast models that have a threshold level of stability and these predictions may be combined. The combination is typically a weighted combination, where the weighting of each expected deviation is dependent on the stability measure of the associated forecast model and where more stable forecast models have a higher weighting (and thus a higher impact on the combined expected deviation).

In some embodiments, the weightings for the forecast models are inversely proportional to the squared forecast error of a forecast model on unseen data (so that the smaller the error, the higher the weight). In some embodiments, the weightings are normalized so that the sum of the weightings is one.

To determine the predicted datapoint, the computer device combines the initial prediction (which is based on the target data series) with the expected deviation (which is determined using the forecast model(s)). (As previously outlined, 'combining' refers to aggregating, i.e. adding or summing the initial prediction and the expected deviation).

The computer device then transforms this combined value using the inverse of a transform that has previously been applied to each of the data series (e.g. the inverse of the first differences transformation or the inverse of the logarithmic returns transformation). The end result is a predicted datapoint at a specific forecast horizon.

This process can be repeated at a plurality of selected forecast horizons to obtain a predicted trend trajectory.

Typically, one or more steps of the described method are performed prior to the determination of the predicted datapoint. In particular, the selection of powerful features, the clustering of the features, the determination of forecast models and/or the determination of an ensemble model (being an ensemble of forecast models) may be performed before the determination of the predicted datapoint. The prediction of the datapoint may then comprise forming the initial prediction and then pre-processing and transforming the explanatory data series to determine the expected deviation (with the make-up of the forecast models already being known).

The stability measure is a measure of the reliability of a given model. In this regard, each forecast model is typically trained using a set of training data and these forecast models are then used to predict datapoints from previously unseen data (e.g. data that was not in the set of training data). The accuracy of the predictions is used to determine the stability measure of the model. Typically, the stability measure of each model is updated periodically and/or regularly. For example, the predictions of each model may be compared to actual events, with the stability measure being updated based on a difference between the predictions and the accurate events. The accuracy of each model may depend on external circumstances (e.g. where the system is a mechanical system, certain models may perform better in certain seasons). By continually updating the stability measures, the accuracy of the predictions is continually increased.

Typically, the stability measures of each model add to one. Therefore, a predicted datapoint may be predicted as:

$$D_{predicted} = \sum k_n D_n$$

Where there are n forecast models used to predict the datapoint, $k_n$ is the stability measure of model n, and $D_n$ is the prediction of model n.

The stability (e.g. the accuracy) of each of the forecast models and of the predicted trend trajectory can be evaluated using an out-of-sample measure, such as a Leave-One-Out Root-Mean-Square-Error (LOO-RMSE) measure calculated at the model ensemble level.

An exemplary method of determining the stability of a forecast model is now described.

For a forecast horizon that is set to h, there exists a T × 1 matrix that represents deviations of the forecasted variable from a predicted trend. The entries of this matrix $Y_h$ (at time s) are given by:

$$y_{s,h} = f_i^h(z_s) - g_{i,s}^h, s \in 1, \ldots, T, i \in 1, \ldots, N$$

Where N is a number of target transformations considered (which may be referred to comprise the 'features used') in a forecast model.

By construction, these deviations are on average equal to zero. Typically, it is assumed that $Y_h$ is standardized across time, that is:

$$y_{s,h} := y_{s,h} / \sqrt{Var(Y_h)}$$

Where := stands for the assignment operator, and $Var(Y_h)$ represents sample variance.

$X_{h,m}$ denotes a Txk(m) matrix where each consecutive column represents a 'feature' of forecast model m (the number of features depends on the number of explanatory variables, which is dependent on the forecast model being evaluated).

Assuming that:

$$Y_{-t,h}, \qquad X_{-t,h,m}$$

represent copies of, respectively, $Y_h$ and $X_{h,m}$, where the computer device drops the t-th row from each matrix, a Leave-One-Out (LOO) linear regression estimate for period t and model m is given by

$$b_{-t,h,m} = \left(X_{-t,h,m}^T X_{-t,h,m}\right)^{-1} X_{-t,h,m}^T Y_{t,h}$$

Letting $X_{s,h,m}$ denote the s-th row of $X_{h,m}$, the value fitted (excluding the information from the t-th period) to observation $y_{s,h}$ by model m is:

$$\hat{y}_{s,-t,h,m} = \langle x_{s,h,m}, b_{-t,h,m} \rangle$$

Where $\langle \cdot , \cdot \rangle$ stands for a scalar product.

To measure how well model m performs without the data from period t, the computer device calculates a Root-Mean-Square-Error (RMSE) for all the remaining data points:

$$\gamma_{t,h,m} = \sqrt{\frac{1}{T-1} \sum_{s=1, s\neq t}^{T} \left(y_{s,h} - \hat{y}_{s,-s,h,m}\right)^2}$$

Where low values of $\gamma_{t,h,m}$ indicate that the individual model m is accurate.

Now for every period t, the computer device drops model m from forecasting if in the remaining periods it is not sufficiently stable (e.g. if $\gamma_{t,h,m} > 0.9$). Otherwise, the computer device determines a weight for the forecast model m such that the weight of model m in an ensemble of models increases along with its stability.

It will be appreciated that a value of 0.9 is used here as an exemplary cut-off for the stability measure and that other cut-off values may be used. Typically, the cut-off value is less than 1 (since $y_{s,h}$ is standardized across time, a value of 1 indicates the same accuracy as a randomly generated prediction).

Setting $G = \{\gamma: 0 < \gamma \leq 0.9\}$, the computer device is able to impose the cut-off by defining an indicator function as: $I_G(\gamma) = 1$ *if* $\gamma \in G$ and $I_G(\gamma) = 0$ *otherwise*. To achieve both objectives, the computer device makes the weight of the model m proportional to an inverse of $\gamma_{t,h,m}$ multiplied by the indicator function.

To normalise the weighting, the computer device may then use the formula:

$$w_{t,h,m} = \frac{I_G\left(\gamma_{t,h,m}\right)/\gamma_{t,h,m}}{\sum_{a=1}^{M}\left(I_G\left(\gamma_{t,h,a}\right)/\gamma_{t,h,a}\right)}$$

If for a given horizon h, there exists a TxM matrix of pairs ($w_{t,h,m}$, $\hat{y}_{t,-t,h,m}$) the computer device is then able to calculate:

$$\eta_h = 1 - \sqrt{\frac{1}{T} \sum_{t=1}^{T} \left(y_{t,h} - \sum_{m=1}^{M} w_{t,h,m}\ \hat{y}_{t,-t,h,m}\right)^2}$$

Where $\eta_h$ is one minus a Leave-One-Out Root-Mean-Square-Error (LOO-RMSE) of the ensemble of M linear forecast models, calculated for forecast horizon h.

Hence if $0 \leq \eta_h \leq 1$ the prediction generated by the ensemble of forecast models is on average better than a random (normal) benchmark. If $\eta_h < 0$, the prediction is on average worse than a random benchmark. A value $\eta_h = 1$ denotes a model generating perfect out-of-sample forecasts.

The above method is useable to determine an ensemble model that comprises a plurality of forecast models, where the weight of each forecast model in the ensemble is dependent on the stability of that model.

In general, the computer device may determine the stability of a model using a leave one out process, in which one of the datapoints is dropped from the target data series and the explanatory data series and the computer device determines whether a prediction of this datapoint is accurate (e.g. the computer device may leave out a known value from 2017, predict this value using the other datapoints, and then compare the predicted value to the actual value to determine the stability measure of a forecast model). This leave one out process is typically repeated for each of the values (e.g. so that the computer device first leaves out a value from 2017, then 2018 etc.).

The leave one out process may be performed on only a certain number of features and/or forecast models (e.g. forecast models that have historically produced accurate results). However, typically the leave one out process is performed on all possible forecast models in order to determine the most powerful forecast models.

A more detailed exemplary method for evaluating out-of-sample goodness-of-fit of an ensemble model is described below.

For a model m with weights $w_{t,h,m}$ and fitted values $\hat{y}_{t,-t,h,m}$ for each horizon h and time period t, it is possible to define a value $\bar{y}_h = \frac{1}{T}\sum_{t=1}^{T} y_{t,h}$ to represent the arithmetic mean of the target across time (for a given forecast horizon). The corresponding Leave-One-Out Determination Coefficient (*LOO* - $R^2$) calculated at the ensemble level is:

$$R_h^2 = 1 - \frac{\sum_{t=1}^{T}\left(y_{t,h} - \sum_{m=1}^{M} w_{t,h,m}\ \hat{y}_{t,-t,h,m}\right)^2}{\sum_{t=1}^{T}\left(y_{t,h} - \bar{y}_h\right)^2}$$

The value $R_h^2$ indicates the fraction of variability of the target (at a given forecast horizon h) that can be explained by the average of linear regression forecasts. Defining the ensemble average of the number of variables in an ensemble model as

$$K_h = \sum_{m=1}^{M} w_{t,h,m}\, k(m)$$

the Leave-One-Out adjusted Determination Coefficient (*LOO* - $\bar{R}^2$) can be calculated at the ensemble level for forecast horizon h using the equation:

$$\bar{R}_h^2 = (1 - R_h^2)\frac{T-1}{T-K_h-1}$$

This scales down the goodness-of-fit of models that rely on many variables. This coefficient can also be referred to as the Parsons-Jelonek (PJ) coefficient. Once, for a given horizon h, the pair ($w_{t,h,m}$, $\hat{y}_{t,-t,h,m}$) is stored in a TxM matrix, the coefficient can be calculated directly using the formulas above.

The exemplary formulae shown above rely on intermediate results and enable a stability measure to be obtained with every regression being estimated only once; this speeds up the computation by a factor of T (as compared to a method in which every regression is estimated each time).

In a practical example, a system is considered for which each of the data series has exactly T data points. Using the methods described above, every regression (model) is re-calculated T times (once for every observation that can be left out). These results can be used to calculate the stability of each possible forecast model - and there is no additional computational cost associated with this calculation since the auxiliary results are stored. In order to compute a stability measure for the entire ensemble model without the storage of the ($w_{t,h,m}$, $\hat{y}_{t,-t,h,m}$) pair the computer device would need to run LOO validation T times (once for each data point being left out), and then - for each of these validations - to compute every regression (model) T times (once for every data point). So for every model, the computer device would have to run T × T regressions. By storing the ($w_{t,h,m}$, $\hat{y}_{t,-t,h,m}$) pair, and by using the PJ coefficient and the ensemble-level stability measure, the computer device is able to achieve the technical effect of performing only T calculations and thereby increasing the speed of undertaking the method.

With a 'classical' implementation of the determination of the stability of an ensemble model, the computer device would iterate over a data series of T datapoints and:

- for every data point index $t \in \{1, ..., T\}$ repeat the following:

◦ Drop the datapoint with index t from the data series.

◦ For every model index $m \in \{1, ..., M\}$ repeat the following:

▪ For every datapoint index $s \in \{1, ..., T\}$ where $s \neq t$ repeat the following:

- Drop observations with index s from the data series.
- Determine a linear regression model m based on the data which does not contain the information from periods s and t.

The reason for the 'double loop' (where there is a loop based on m/M inside a loop based on t/T) above is that the computer device is required to implement a Leave-One-Out validation once to get the stability measure and then again to determine the out of sample model weights. Determining these out of sample model weights requires dropping a second datapoint s from the data series (to determine the stability of the model that has been determined by dropping the datapoint t).

This double loop requires a linear regression to be executed Tx(T-1) times, which consumes a large amount of computing power and takes a substantial amount of time. The large amount of time required limits the number of models that can be reasonably tested.

Therefore, according to the present disclosure, there is described a method of determining the stability of a model that requires a linear regression to only be executed T times.

This method has been described above, and is described here again with reference to Figure 9. This method is typically carried out by a computer device.

Typically, the method is initiated by the computer device pre-allocating in memory: $T \times M$ matrices **A** and **B**, $1 \times M$ vector **sum_cols**, $T \times 1$ vector **sum_rows.**

In a first step 71, the computer device initiates a variable s and set s = 1 (where $s \in \{1, ..., T\}$).

In a second step 72, the computer device drops observations with index *s* from the each of the data series.

In a third step 73, the computer device initiates a variable m and sets m = 1 (where $m \in \{1, ..., M\}$).

In a fourth step 74, the computer device determines a linear regression model for *m* using the data series without the datapoint at index s.

In a fifth step 75, the computer device predicts the datapoint with index *s* using the forecast model *m*. This outcome prediction has been termed above as $\hat{y}_{s,-s,h,m}$. This prediction is typically determined using an initial prediction for this datapoint (using the raw predicted data series) and an expected deviation determined using the forecast model.

In a sixth step 76, the computer device determines the error of the prediction of the fifth step 75. For example, the computer device may calculate the squared error of the prediction using the equation: $(y_{s,h} - \hat{y}_{s,-s,h,m})^2$.

This process is repeated for all models m and all observations s. In this regard, in a seventh step 77 the computer device determines whether m < M and, if so, in an eighth step 78, the computer device increments m and returns to the fourth step 74. If m = M, then in a ninth step 79 the computer device determines whether s < T and, if so, in a tenth step 80, the computer device increments s and returns to the second step 72.

Typically, the computer device includes the errors in an auxiliary matrix **A**. Specifically, the computer device includes the error in row s and column m of the auxiliary matrix **A**:

$$a_{s,m} = \left(y_{s,h} - \hat{y}_{s,-s,h,m}\right)^2$$

The computer device also includes the generated prediction in an auxiliary matrix **B**. Specifically, the computer device includes the generated prediction in a row s and column m of an auxiliary matrix **B**:

$$b_{s,m} = \hat{y}_{s,-s,h,m}$$

Therefore, an entry of matrix **A** in row *s* and in column *m* represents the error of model *m* when used to predict the datapoint at period *s* when the model *m* has been trained with all the available information except the information from period *s*.

The computer device is then able to calculate an auxiliary vector **sum_cols** as a sum over columns of matrix **A** and to recalculate the entries of matrix **A** using the formula

$$a_{s,m} := sum_cols_m - a_{s,m}.$$

This results in a matrix **A** that represents the sum of squared forecast errors of each model *m* in all the periods except period *s*. And every model generating forecasts for period *s* is trained without the information from period *s*.

The computer device multiplies matrix **A** by $\frac{1}{T-1}$ and takes a square root of **A** element-by-element. These values can be again stored in the matrix **A.** To remain consistent with the provided mathematical formulas, the rows of this updated matrix **A** are indexed with $t \in \{1, ..., T\}$ instead of *s*.

Now an entry of matrix **A** in row *t* and column *m* represents a Root-Mean-Square-Error of model *m* for all the periods except period *t*. And every model generating forecasts for period *t* is trained without the information from period *t*. At this stage the entries $a_{t,m}$ are identical to $\gamma_{t,h,m}$.

More generally, in an eleventh step 81, the computer device determines a matrix of prediction errors associated with the errors of each prediction (where each error is associated with a dropped observation s, and a model m).

Typically, the computer device replaces every entry below a threshold value (e.g. $a_{t,m} < 0.9$) with a zero value (this weeds out non-informative models).

In a twelfth step 82, the computer device then determines a stability measure for each model, and the weightings of each model in an ensemble model, based on the matrix of prediction errors.

Typically, the computer device inverts every non-zero entry of the matrix **A** (e.g. the computer device finds $a_{t,m} := \frac{1}{a_{t,m}}$ for $a_{t,m} \neq 0$). The computer device then calculates an auxiliary vector **sum_rows** as a sum over rows of matrix **A** and recalculates the entries of matrix **A** using the formula

$$a_{t,m} := \frac{a_{t,m}}{sum_rows_t}.$$

Now an entry of matrix **A** in row *t* and column *m* represents a weight of model *m* in the ensemble of models in period *t*. Every model generating forecasts for period *t* is trained without the information from period *t*. At this stage the entries $a_{t,m}$ are identical to $w_{t,h,m}$.

Once the computer device has calculated matrices **A** and **B**, it is able to compute $\eta_h$ and $\bar{R}_h^2$. This value provides a stability measure for each ensemble model, which stability value is determined with only a single linear regression being required for each value of *s*.

The method of Figure 9 provides a method of determining the stability of an ensemble model in which linear regression is performed only T times. Since the bulk of computational cost is calculating linear regressions (which involve matrix inversion), this provides a much quicker and less resource intensive method than the 'classical' method described above. This enables the method to be performed for more models and larger variations of data series so as to improve the accuracy of the predictions and the versatility of the computer device.

The disclosure herein relates to the determination of such a matrix of errors and/or model weightings and/or forecast model stability measures as well as the retrieval of, or determination of, model weightings based on this matrix. By doing this, a stability measure for an ensemble model can be determined using only T regressions - this enables a suitable ensemble model to be selected while vastly improving computational efficiency. It will be appreciated that each of these variables is closely related, and so determining/storing the matrix of errors achieves the same result as storing the stability measures (that only T regressions are needed to determine the ensemble stability measures).

**Data Structure Storage**

The intermediate results of the method are stored to a storage (such as the memory 1006) within a python ModelEnsemble class. With reference to Figure 1, the CPU 1002 reads instructions as stored in the memory 1006 to import functions including:

drop_unbalanced_series,

estimate_model,

select_variables,

plot regression_diagnostics,

allocate_combinations,

validate_model,

diagnostics_features,

transform_data_frame,

merge_data_frames,

The CPU 1002 defines a data structure to store: the target transformations and trend, feature selection and clustering, the model ensemble, the aggregate forecast and the to placeholders for storing the intermediate values of the model in the storage 1008 defined according to the array of model. Typically, the p:

```
self.combinations = np.array([])

self.nof_models = np.nan

self.loo_aggregates_df = pd.DataFrame()

self.impact = np.array([])

self.weights = np.array([])
```

As the models are populated, the attributes are saved according to:

```
self.combinations = combinations

self.nof_models = nof_models
```

Place-holders for the intermediate data can then be defined and saved to the storage 1008. For example (in an exemplary situation where the number of years is 3):

```
loo_aggregates_df = pd.DataFrame(columns=['MODEL', 'Y_PRED', 'LOO_RMSE', 'LOO_BIC', 'NOF_VARS'])

weights = np.zeros((nof_models, 3))

impact = np.zeros(self.combinations.shape)
```

The CPU 1002 then performs validation of the model, for example according to:

```
loo_df, loo_rmse_aggregate, loo_bic_aggregate = \

validate_model(y_h df=self.y_h df, x_h_df=self.x_h_df[labels_h])

loo_df['MODEL'] = ind

loo_df['NOF_VARS'] = np.sum(combinations[ind])
```

After this, the data frame in the storage 1008 is appended according to:
loo_aggregates_df = loo_aggregates_df.append(loo df, ignore_index=False)

The CPU 1002 then estimates the model on the selected variables, as retrieved from the storage 1008 or received from a remote storage via the communication interface 1004. The aggregates are saved according to:

```
weights[ind, 0] = f_h
```

```
weights[ind, 1] = loo_rmse_aggregate

weights[ind, 2] = loo_bic_aggregate
```

And the impact of the features on the forecast saved to the storage 1008 according to:
impact[ind, combinations[ind, :]] = (coeffs * x0)[1:]

The CPU 1002 plots the diagnostics and may output this plot to the user interface 1010. The plotting function is defined to plot only diagnostics for selected horizons and selected models, as follows:

```
if self.horizon in self.snapshots['horizon']:
if ind in self.snapshots['model']:
plot regression diagnostics(y_h df=self.y_h df,x h df=self.x h_df, labels_h=labels_h,

    coeffs=coeffs, path=self.paths['save_models'], file=self.file,

    horizon=self.horizon, ind=ind)
```

The CPU 1002 then updates the objects in the storage 1008 according to the following instructions:

```
self.loo_aggregates_df = loo_aggregates_df

self.impact = impact

self.weights = weights
```

By storage of the intermediate values, subsequent processes run by the computer (such as the aggregation of the forecasts) can be performed in a different and more streamlined manner. This changes the way the computer functions to store and retrieve the relevant data, resulting in much more computationally efficient processing (by a factor of T). This is not limited by the type of target data series, but is applicable to any data series. This improved efficiency makes it feasible to run multiple forecasts, and therefore enables testing of the system in different scenarios (i.e. under different conditions). This can enable, for example, different designs of a component, or different progressions of a variable due to different conditions (these conditions may be 'predicted' by a user in a manner which will be explained later).

With the above methods, numeric values of forecasts at a selected (e.g. 5-year) forecast horizon are not affected by the values forecasted at any other forecast horizon. This design choice prevents the propagation of any forecast errors. It also ensures that in order to evaluate the entire forecasting exercise it is enough to consider the terminal values of the forecasts.

The model as described enables the accurate prediction of datapoints, in particular where the available input data for the forecasting models is sparse and/or infrequent.

The predicted datapoints can then be transmitted to other computer devices and/or used to prompt or enact actions. For example, the predictions may be used to replace components of a system before a predicted malfunction, or the predictions may be used to improve performance of a system, in particular where the system is intended for use in an environment that is described by the explanatory data series (e.g. a car may be modified before use in a cold climate based on the predicted datapoints).

Referring to Figure 10, a detailed method of predicting a datapoint is described.

Firstly, as has been described previously, the computer device receives a raw forecasted variable (or 'target data series'). The computer device annualises the target data series, transforms the annualised series, and removes a trend (if present) to obtain an initial prediction.

Secondly, the computer device receives a raw explanatory variable data series and, as has been described previously, pre-processes this explanatory variable data series, and processes the resultant data series to determine a feature. The computer device does this for a plurality of explanatory data series to obtain a plurality of features, then selects the top predictors from the features, clusters these top predictors, and selects one or more representatives from each cluster.

The outputs from the first group of steps and the second group of steps are combined, where the combination is dependent on stability measures associated with each of the features. This combined value is then inversely transformed to obtain the predicted datapoint.

Typically, a plurality of predicted datapoints are determined so as to determine a predicted trend trajectory.

As part of the present disclosure, a stability measure may be determined for each of the forecast models (where each forecast model is based on one or more features). These stability measures may be determined substantially before the prediction of a datapoint, for example using a leave one out process as described above.

An ensemble model (a model comprising a plurality of forecast models) can then be determined based on the stability measures of each forecast model. In particular, an ensemble model may be formed that uses forecast models associated with certain representative features (e.g. where the combination of forecast models includes one feature from each of a plurality of clusters). As with the stability measures, the forecast models and the ensemble model may be determined substantially before the prediction of the datapoint.

The stability measures may be updated regularly and/or periodically in order to update the forecast models and/or the ensemble model.

The ensemble model (which comprises one or more forecast models) is also associated with a stability measure, where stability measures may be determined for a plurality of ensemble models and an ensemble model may be selected based on these stability measures (e.g. so that the most stable ensemble model is used for the prediction). In this regard, it is the stability of the ensemble model that is typically of greatest importance, so that an unstable forecast model may usefully be used so long as it is part of a stable ensemble model.

Referring to Figure 11, there is shown a system comprising a plurality of computer devices, including a first and second input computer device 501, 502, the computer device 1000, and an output computer device 503.

Typically, the computer device is arranged to communicate with one or more input computer devices 501, 502 to obtain the target data series and the explanatory data series. The computer device then analyses these data series (as has been described above) in order to determine the predicted datapoint. This predicted datapoint, or an output that is dependent on the predicted datapoint may then be sent to the output computer device so that the predicted datapoint can be analysed. In a practical example, an engineer may use the predicted data point to estimate when a component ought to be replaced to ensure that it operates with sufficiently high reliability in safety-critical uses (such as engines), for example before it reaches a certain extent of corrosion. In a further example, the designer of a vehicle may use a predicted datapoint to optimise that design based on input data that is associated with previous vehicles.

Therefore, providing an output may comprise transmitting a communication (e.g. the predicted datapoint) to a further computer device. The further computer device may be configured to output the predicted data point or a selection of predicted datapoints in a graphical representation, forming a plot of forecasted future performance.

The predicted methods and systems enable the accurate prediction of datapoints based on (sparse) input data series and explanatory variables. This can provide a 'stress-test' of the performance of a component in the future. Such predicted datapoints can be used to optimise the design of systems and to improve the performance of mechanisms.

By performing the clustering prior to the prediction of the datapoint, the prediction can be made quickly and using only a small amount of computing power. This enables predictions to be made repeatedly and so enables regular determination of predicted datapoints so that a range of future states can be determined or a design can be repeatedly improved.

The method can be used to process an image with a missing datapoint by predicting that missing data point, and then preparing and outputting an updated image including the predicted datapoint. Referring to Figure 12, there is shown an image that has been processed in dependence on the methods disclosed herein.

Specifically, Figure 12 shows the historic performance of assets under management until 2020. Figure 12 then shows a benchmark trend (e.g. an initial prediction) as well as a forecast that takes into account an explanatory variables data series. The historic performance represents a target data series that is associated with the image of Figure 12.

Typically, an image, such as that of Figure 12, is processed so as to extract the target data series and/or to present the prediction alongside the historic data to enable the prediction to be assessed. It will be appreciated that the target data series may be provided directly as a numerical data series (and such a numerical target data series is still associated with an image). Therefore, the method may comprise receiving a numerical target data series and processing an image to show both this series and the predicted datapoint(s) in an image. Such an image enables the prediction to be evaluated in the context of the target data series.

### Detailed example

A detailed numeric example of the implementation of the methods disclosed herein is now described with reference to the figures and to the prior description. The example implementation relates to the determination of a future value of an asset, as relevant data is readily accessible and easily presentable. However, the method should be understood to be applicable to any sparse data series as the improvements to the computational functioning capacity of the computer it provides are agnostic to the type of data. The values in Table 1 below are used to describe the determination of the initial prediction.

**Table 1**

| Year | Target data series (TDS) | Raw predicted data series (RPDS) | Transformed RPDS (TRPDS) | EWMA | Transformed EWMA (TEWMA) | TEWMA - TRPDS | Transformed initial prediction (TIP) | De-trended standardised TIP |
|---|---|---|---|---|---|---|---|---|
| 2000 | 426.9108 | 426.9108 | 0.028 | 451.2787 | 0.008 | 0.020 | 0.017 | 0.809 |
| 2001 | 429.1667 | 429.1667 | 0.028 | 451.2787 | 0.008 | 0.020 | 0.017 | 0.809 |
| 2002 | 419.1746 | 419.1746 | 0.028 | 451.2787 | 0.008 | 0.020 | 0.017 | 0.809 |
| 2003 | 459.5731 | 459.5731 | 0.028 | 451.2787 | 0.008 | 0.020 | 0.017 | 0.809 |
| 2004 | 486.4924 | 486.4924 | 0.028 | 451.2787 | 0.008 | 0.020 | 0.017 | 0.809 |
| 2005 | 586.9358 | 586.9358 | 0.028 | 494.009 | 0.008 | 0.020 | 0.017 | 0.809 |
| 2006 | 772.1134 | 772.1134 | 0.051 | 583.0594 | 0.022 | 0.029 | 0.031 | 1.478 |
| 2007 | 940.4861 | 940.4861 | 0.070 | 705.3608 | 0.039 | 0.031 | 0.048 | 1.675 |
| 2008 | 888.8799 | 888.8799 | 0.057 | 783.9124 | 0.048 | 0.009 | 0.057 | 0.029 |
| 2009 | 970.0454 | 970.0454 | 0.060 | 868.2745 | 0.057 | 0.003 | 0.066 | -0.436 |
| 2010 | 1035.978 | 1035.978 | 0.049 | 945.5866 | 0.056 | -0.007 | 0.065 | -1.193 |
| 2011 | 1046.36 | 1046.36 | 0.026 | 992.4742 | 0.046 | -0.020 | 0.055 | -2.145 |
| 2012 | 1105.689 | 1105.689 | 0.014 | 1031.221 | 0.033 | -0.019 | 0.042 | -2.080 |
| 2013 | 1217.943 | 1217.943 | 0.027 | 1100.641 | 0.029 | -0.002 | 0.038 | -0.826 |
| 2014 | 1263.903 | 1263.903 | 0.023 | 1161.938 | 0.025 | -0.002 | 0.034 | -0.841 |
| 2015 | 1324.896 | 1324.896 | 0.021 | 1222.693 | 0.022 | -0.001 | 0.031 | -0.739 |
| 2016 | 1407.765 | 1407.765 | 0.026 | 1294.936 | 0.023 | 0.003 | 0.032 | -0.469 |
| 2017 | 1681.741 | 1681.741 | 0.036 | 1428.449 | 0.028 | 0.008 | 0.037 | -0.062 |
| 2018 | 1881.144 | 1881.144 | 0.038 | 1583.635 | 0.032 | 0.006 | 0.041 | -0.208 |
| 2019 | 2252.487 | 2252.487 | 0.050 | 1813.77 | 0.039 | 0.012 | 0.048 | 0.191 |
| 2020 | 2735.005 | 2735.005 | 0.063 | 2135.471 | 0.048 | 0.015 | 0.057 | 0.416 |
| 2021 | 2953.699 (until Q1) | 3218.218 | 0.072 | 2528.499 | 0.058 | 0.014 | 0.067 | 0.354 |

Referring to the second column of the Table 1 above, there is shown an exemplary target data series that contains datapoints for each of a plurality of years.

As can be seen in the last row of Table 1, and as has been described above with reference to Figure 5, the target data series may comprise an incomplete data series. In this example, the only available datapoint for 2021 is a first quarter datapoint (whereas the other datapoints relate to end-of-year datapoints).

Therefore, as has been described above, the target data series is completed to form the raw predicted data series. With this example, it is necessary to provide an end-of-year datapoint for 2021 based on the available first quarter data. It will be appreciated that this prediction may be made in many ways. Using the exemplary method of Figure 5, the end of year data for 2021 may be determined based on the first quarter datapoint for 2021 and on the difference between first quarter and end-of-year datapoints for previous years. The completion of the target data series provides a raw predicted data series (RPDS).

Referring to the fourth column of Table 1 and the first step 31 of the method of Figure 4, the computer device then transforms the RPDS to form a transformed RPDS (TRPDS). With this example, a five year forecast horizon is being considered and the transformation is an annualised log-return calculated over a five year window. For example, the TRPDS for 2007 is equal to:

$$TRPDS_{2007} = \frac{\mathrm{LOG}(RPDS_{2007}) - \mathrm{LOG}(RPDS_{2002})}{5}$$

Since there is insufficient data available in the earlier years to compute such a transformation, the values for TRPDS for 2000 - 2004 are set to be the same as the value for TRPDS for 2005. More generally, where insufficient datapoints are available to compute a transformation, the transformed value may be set to be equal to the earliest possible transformed value.

The use of an annualised log-return over a five year window is suitable to predict a datapoint at a forecast horizon of five years (e.g. since the RPDS includes data up to 2021, this transformation is suitable to predict a datapoint for 2026).

Referring to the fifth column of Table 1, the computer device then calculates the exponential weighted moving average of the RPDS values. This provides a less volatile data series (as compared to the RPDS). With this example, the moving average is taken over a window of 5 years (the size of the window of the moving average may, or may not, be the same as the forecast horizon, e.g. a five year window could still be used with a forecast horizon of a year). With this example an exponential decay parameter ($\delta$) of 0.8 is used.

As with the RPDS it is not possible to calculate the EWMA for earlier years, so the values for earlier years are set to be the same as the earliest available value (that of 2004).

Referring to the sixth column of Table 1, the EWMA is then transformed using the transform that was applied to the raw predicted data series. This provides a transformed EWMA (a TEWMA). With this example the EWMA is transformed using an annualised log-return over a five year window to obtain the TEWMA.

The differences between the datapoints of the TEWMA and the TRPDS are then calculated, as shown in the sixth column of Table 1. The mean of these differences is 0.009 (this is not shown in Table 1).

In order to obtain a transformed initial prediction (TIP), the determined mean of the differences is combined with the TEWMA. The last datapoint in this series (0.067) is determined as the mean (0.009) + the TEWMA value at 2021 (0.058) to obtain a 'naïve' forecast of a trend from 2021 - 2026 and thus a naive prediction of a transformed value in 2026.

Referring to the final column of Table 1, the TIP is then detrended and standardised to determine the deviation of the TIP from the trend (these are the values $y_{s,h}$ as defined above). More specifically, the detrended standardised TIP is determined by: determining the difference between the TIP and the TRPDS for each year; determining the mean ($\mu$ = 0.000) and standard deviation ($\sigma$ = 0.013) of these differences; and then for each difference subtracting said difference from the mean of differences (to de-trend the TIP) and dividing the result by the standard deviation of differences (to standardise the TIP).

The mean of the differences between the TIP and the TRPDS is expected to be negligible, since the TIP is obtained by combining the TEWMA with the differences between the TEWMA and the TRPDS.

Referring to Tables 2 - 4 below, and Figure 6 (and the related description), a numeric example of the processing of an explanatory variable data series to obtain the expected deviance is now described.

**Table 2**

| YEAR | GDP | GDP - ALR1 | GDP - ALR2 | GDP-ALR3 | GDP-ALR4 | GDP - ALR5 |
|---|---|---|---|---|---|---|
| 1993 | 6858540 | | | | | |

(continued)

| YEAR | GDP | GDP - ALR1 | GDP - ALR2 | GDP-ALR3 | GDP-ALR4 | GDP - ALR5 |
|---|---|---|---|---|---|---|
| 1994 | 7287240 | 0.06063 | | | | |
| 1995 | 7639760 | 0.047241 | 0.053936 | | | |
| 1996 | 8073120 | 0.055174 | 0.051208 | 0.054348 | | |
| 1997 | 8577560 | 0.060609 | 0.057892 | 0.054342 | 0.055914 | |
| 1998 | 9062820 | 0.055031 | 0.05782 | 0.056938 | 0.054514 | 0.055737 |
| 1999 | 9631170 | 0.060824 | 0.057928 | 0.058822 | 0.05791 | 0.055776 |
| 2000 | 10250950 | 0.062366 | 0.061595 | 0.059407 | 0.059708 | 0.058801 |
| 2001 | 10581920 | 0.031777 | 0.047071 | 0.051656 | 0.052499 | 0.054121 |
| 2002 | 10929110 | 0.032283 | 0.03203 | 0.042142 | 0.046812 | 0.048456 |
| 2003 | 11456450 | 0.047123 | 0.039703 | 0.037061 | 0.043387 | 0.046875 |
| 2004 | 12217170 | 0.064289 | 0.055706 | 0.047898 | 0.043868 | 0.047568 |
| 2005 | 13039200 | 0.065118 | 0.064704 | 0.058843 | 0.052203 | 0.048118 |
| 2006 | 13815600 | 0.057838 | 0.061478 | 0.062415 | 0.058592 | 0.05333 |
| 2007 | 14474240 | 0.046572 | 0.052205 | 0.056509 | 0.058454 | 0.056188 |
| 2008 | 14769840 | 0.020217 | 0.033394 | 0.041542 | 0.047436 | 0.050807 |
| 2009 | 14478040 | -0.01995 | 0.000131 | 0.015612 | 0.026168 | 0.033958 |
| 2010 | 15048980 | 0.038677 | 0.009361 | 0.01298 | 0.021378 | 0.02867 |
| 2011 | 15599730 | 0.035943 | 0.03731 | 0.018222 | 0.018721 | 0.024291 |
| 2012 | 16253960 | 0.041083 | 0.038513 | 0.038568 | 0.023937 | 0.023193 |
| 2013 | 16843240 | 0.035613 | 0.038348 | 0.037546 | 0.037829 | 0.026272 |
| 2014 | 17550680 | 0.041143 | 0.038378 | 0.03928 | 0.038446 | 0.038492 |
| 2015 | 18206010 | 0.036659 | 0.038901 | 0.037805 | 0.038625 | 0.038088 |
| 2016 | 18695100 | 0.02651 | 0.031584 | 0.034771 | 0.034981 | 0.036202 |
| 2017 | 19479630 | 0.041108 | 0.033809 | 0.034759 | 0.036355 | 0.036207 |
| 2018 | 20527140 | 0.052379 | 0.046743 | 0.039999 | 0.039164 | 0.03956 |
| 2019 | 21372590 | 0.040361 | 0.04637 | 0.044616 | 0.040089 | 0.039403 |
| 2020 | 20893750 | -0.02266 | 0.008851 | 0.02336 | 0.027797 | 0.02754 |
| 2021 | 22866220 | 0.090211 | 0.033776 | 0.035971 | 0.040073 | 0.04028 |

With this example, the explanatory data series comprises a series of GDP values (as shown in the second column in the table above).

As described with reference to the first step 51 of Figure 6, the explanatory data series is transformed at each of a number of (e.g. one or more) selected forecast horizons. With this example, referring to the third to seventh columns, five transformations are applied to the explanatory data series. These five transformations comprise log-returns over transformation horizons of 1, 2, 3, 4, and 5 years. The transformed series correspond to different definitions of features. The motivation for performing the transformations is as follows - the best predictor of the future datapoint at the five year forecast horizon could be (an approximate) yearly percentage growth calculated for the transformation horizon of 1, 2, 3, 4, or 5 years. And it is not possible to determine which of these transformation horizons provides the best indicator without testing each transformation. At this stage there are 5 prospective features.

As described with reference to the second step 52 of Figure 6, the transformed data series are then copied and delays are applied to these copied series. This is shown in columns 2-4 of Table 3 below:

Table 3

| YEAR | GDP - ALR5 | GDP - ALR5 L1 | GDP - ALR5 L2 | GDP - ALR5 DETRENDED | GDP - ALR5 L1 DETRENDED | GDP - ALR5 L2 DETRENDED |
|---|---|---|---|---|---|---|
| 1998 | 0.055737 | | | 0.044552 | | |
| 1999 | 0.055776 | 0.055737 | | 0.033164 | 0.033125 | |
| 2000 | 0.058801 | 0.055776 | 0.055737 | 0.024263 | 0.021238 | 0.021199 |
| 2001 | 0.054121 | 0.058801 | 0.055776 | 0.009385 | 0.014064 | 0.011039 |
| 2002 | 0.048456 | 0.054121 | 0.058801 | -0.00514 | 0.00053 | 0.005209 |
| 2003 | 0.046875 | 0.048456 | 0.054121 | -0.00439 | -0.00281 | 0.002856 |
| 2004 | 0.047568 | 0.046875 | 0.048456 | -0.00213 | -0.00283 | -0.00125 |
| 2005 | 0.048118 | 0.047568 | 0.046875 | -0.00032 | -0.00087 | -0.00157 |
| 2006 | 0.05333 | 0.048118 | 0.047568 | 0.00377 | -0.00144 | -0.00199 |
| 2007 | 0.056188 | 0.05333 | 0.048118 | 0.004422 | 0.001564 | -0.00365 |
| 2008 | 0.050807 | 0.056188 | 0.05333 | -0.00105 | 0.004328 | 0.00147 |
| 2009 | 0.033958 | 0.050807 | 0.056188 | -0.01268 | 0.004168 | 0.009549 |
| 2010 | 0.02867 | 0.033958 | 0.050807 | -0.01217 | -0.00688 | 0.009967 |
| 2011 | 0.024291 | 0.02867 | 0.033958 | -0.01022 | -0.00584 | -0.00055 |
| 2012 | 0.023193 | 0.024291 | 0.02867 | -0.00586 | -0.00476 | -0.00039 |
| 2013 | 0.026272 | 0.023193 | 0.024291 | -5.33E-05 | -0.00313 | -0.00203 |
| 2014 | 0.038492 | 0.026272 | 0.023193 | 0.009054 | -0.00317 | -0.00624 |
| 2015 | 0.038088 | 0.038492 | 0.026272 | 0.005896 | 0.0063 | -0.00592 |
| 2016 | 0.036202 | 0.038088 | 0.038492 | 0.002069 | 0.003956 | 0.00436 |
| 2017 | 0.036207 | 0.036202 | 0.038088 | 0.000453 | 0.000448 | 0.002335 |
| 2018 | 0.03956 | 0.036207 | 0.036202 | 0.001768 | -0.00159 | -0.00159 |
| 2019 | 0.039403 | 0.03956 | 0.036207 | 0.001161 | 0.001317 | -0.00204 |
| 2020 | 0.02754 | 0.039403 | 0.03956 | -0.0074 | 0.004461 | 0.004617 |
| 2021 | 0.04028 | 0.02754 | 0.039403 | 0.00376 | -0.00898 | 0.002883 |

In Table 3, there is shown delayed data series for the five-year transformation (with delays - or ‘lags’ - of 0, 1, and 2 years). In practice delayed data series are determined for each of the performed transformation (so that there are 15 features at this point); for the sake of conciseness only the five-year transformation is considered here and below.

Referring to columns 5-7 of Table 3, each delayed series is detrended and standardised as has been described above in relation to the TRPDS (and as is known in the art).

At this point there are 30 features (since each delayed data series now has a corresponding de-trended data series).

Each feature (each of the delayed data series and the delayed then de-trended data series) are then standardized. This is shown in Table 4 below:

Table 4

| YEAR | GDP - ALR5 STD | GDP - ALR5 L1 STD | GDP - ALR5 L2 STD | GDP - ALR5 DETRENDED STD | GDP - ALR5 L1 DETRENDED STD | GDP - ALR5 L2 DETRENDED STD |
|---|---|---|---|---|---|---|
| 1998 | 1.266351 | | | 3.106081 | | |
| 1999 | 1.269929 | 1.233623 | | 2.245925 | 3.333539 | |

(continued)

| YEAR | GDP - ALR5 STD | GDP - ALR5 L1 STD | GDP - ALR5 L2 STD | GDP - ALR5 DETRENDED STD | GDP - ALR5 L1 DETRENDED STD | GDP - ALR5 L2 DETRENDED STD |
|---|---|---|---|---|---|---|
| 2000 | 1.548718 | 1.237128 | 1.195917 | 1.573622 | 2.047495 | 3.050304 |
| 2001 | 1.117432 | 1.510196 | 1.199487 | 0.449856 | 1.271354 | 1.419648 |
| 2002 | 0.595287 | 1.087761 | 1.477655 | -0.64684 | -0.19288 | 0.483983 |
| 2003 | 0.449522 | 0.576331 | 1.04733 | -0.59065 | -0.55419 | 0.106194 |
| 2004 | 0.513393 | 0.433556 | 0.526349 | -0.42013 | -0.55603 | -0.55195 |
| 2005 | 0.564125 | 0.496117 | 0.380909 | -0.28347 | -0.34486 | -0.60375 |
| 2006 | 1.044523 | 0.545808 | 0.444638 | 0.025746 | -0.4063 | -0.67202 |
| 2007 | 1.307916 | 1.016347 | 0.495257 | 0.074992 | -0.08104 | -0.9377 |
| 2008 | 0.81195 | 1.274335 | 0.974583 | -0.33852 | 0.218028 | -0.11615 |
| 2009 | -0.74092 | 0.788547 | 1.23739 | -1.21675 | 0.200714 | 1.180508 |
| 2010 | -1.22831 | -0.73246 | 0.742529 | -1.17814 | -0.9947 | 1.2476 |
| 2011 | -1.6319 | -1.20984 | -0.80688 | -1.03101 | -0.88231 | -0.4411 |
| 2012 | -1.73308 | -1.60515 | -1.29318 | -0.70175 | -0.76567 | -0.41398 |
| 2013 | -1.44928 | -1.70425 | -1.69587 | -0.26299 | -0.5891 | -0.67866 |
| 2014 | -0.32306 | -1.42628 | -1.79683 | 0.424889 | -0.59267 | -1.35435 |
| 2015 | -0.36026 | -0.32317 | -1.51366 | 0.186384 | 0.43137 | -1.30217 |
| 2016 | -0.53416 | -0.35961 | -0.38995 | -0.10266 | 0.177802 | 0.347628 |
| 2017 | -0.5337 | -0.52993 | -0.42707 | -0.22476 | -0.20175 | 0.022596 |
| 2018 | -0.22465 | -0.52949 | -0.60058 | -0.12545 | -0.42173 | -0.60736 |
| 2019 | -0.23907 | -0.22678 | -0.60012 | -0.17129 | -0.1077 | -0.67887 |
| 2020 | -1.33249 | -0.2409 | -0.29176 | -0.8181 | 0.232402 | 0.388946 |
| 2021 | -0.15828 | -1.31188 | -0.30614 | 0.025014 | -1.22177 | 0.110652 |

Thereafter, for each of the standardized data series, the computer device checks whether the series is stationary (e.g. using an Augmented Dickey-Fuller test at a 1% significance level). With this example, for the displayed five-year transformations only the 1-year delayed and detrended data series is stationary.

The tables above have only shown the features associated with a 5 year transformation horizon. More generally, with the exemplary explanatory data series there are obtained eight stationary features, as shown in Table 5 below. These are: the one-year transformation; the 3-year-detrended transformation; the 4-year-detrended transformation; the 2-year-detrended transformation delayed one year; the 3-year-detrended transformation delayed one year; the 4-year-detrended transformation delayed one year; the 5-year-detrended transformation delayed one year; and the 1-year-detrended transformation delayed two years.

**Table 5**

| **YEAR** | **ALR1 STD** | **ALR3 DET STD** | **ALR4 DET STD** | **ALR2 L1 DET STD** | **ALR3 L1 DET STD** | **ALR4 L1 DET STD** | **ALR5 L1 DET STD** | **ALR1 L2 DET STD** |
|---|---|---|---|---|---|---|---|---|
| 1993 | | | | | | | | |
| 1994 | 0.771 | | | | | | | |
| 1995 | 0.185 | | | | | | | |

(continued)

| YEAR | ALR1 STD | ALR3 DET STD | ALR4 DET STD | ALR2 L1 DET STD | ALR3 L1 DET STD | ALR4 L1 DET STD | ALR5 L1 DET STD | ALR1 L2 DET STD |
|---|---|---|---|---|---|---|---|---|
| 1996 | 0.532 | 2.629 | | 2.793 | | | | 2.767 |
| 1997 | 0.770 | 2.628 | 3.160 | 2.639 | 3.484 | | | 2.097 |
| 1998 | 0.526 | 1.771 | 2.216 | 1.435 | 2.196 | 3.490 | | -0.306 |
| 1999 | 0.780 | 0.854 | 1.548 | -0.186 | 1.060 | 2.086 | 3.334 | -0.094 |
| 2000 | 0.847 | -0.176 | 0.743 | -0.285 | -0.183 | 1.056 | 2.047 | -0.499 |
| 2001 | -0.491 | -0.502 | -0.481 | 0.097 | -0.029 | 0.076 | 1.271 | 0.224 |
| 2002 | -0.469 | -0.782 | -0.652 | -0.291 | -0.268 | -0.308 | -0.193 | 0.638 |
| 2003 | 0.180 | -0.780 | -0.665 | -0.952 | -0.572 | -0.530 | -0.554 | -0.895 |
| 2004 | 0.931 | -0.171 | -0.477 | -0.661 | -0.885 | -0.606 | -0.556 | -1.121 |
| 2005 | 0.968 | 0.252 | -0.001 | -0.011 | -0.345 | -0.615 | -0.345 | -0.579 |
| 2006 | 0.649 | 0.224 | 0.202 | 0.292 | 0.128 | -0.144 | -0.406 | 0.117 |
| 2007 | 0.156 | -0.198 | 0.025 | 0.054 | 0.237 | 0.181 | -0.081 | 0.223 |
| 2008 | -0.997 | -0.845 | -0.582 | -0.136 | 0.027 | 0.270 | 0.218 | 0.386 |
| 2009 | -2.755 | -1.636 | -1.425 | -0.292 | -0.239 | -0.041 | 0.201 | 0.902 |
| 2010 | -0.189 | -1.225 | -1.224 | -1.597 | -1.317 | -1.223 | -0.995 | -0.475 |
| 2011 | -0.309 | -0.592 | -0.921 | -1.124 | -1.043 | -0.973 | -0.882 | -2.517 |
| 2012 | -0.084 | 0.409 | -0.344 | 0.354 | -0.791 | -0.836 | -0.766 | 0.265 |
| 2013 | -0.324 | 0.234 | 0.387 | 0.247 | 0.458 | -0.546 | -0.589 | -0.026 |
| 2014 | -0.082 | 0.080 | 0.203 | -0.066 | 0.069 | 0.374 | -0.593 | -0.152 |
| 2015 | -0.278 | -0.178 | 0.012 | -0.262 | -0.043 | 0.135 | 0.431 | -0.393 |
| 2016 | -0.722 | -0.403 | -0.313 | -0.116 | -0.226 | 0.003 | 0.178 | 0.057 |
| 2017 | -0.083 | -0.357 | -0.306 | -0.474 | -0.375 | -0.436 | -0.202 | -0.242 |
| 2018 | 0.410 | -0.134 | -0.172 | -0.537 | -0.450 | -0.369 | -0.422 | -1.009 |
| 2019 | -0.116 | 0.000 | -0.160 | 0.057 | -0.234 | -0.183 | -0.108 | -0.264 |
| 2020 | -2.874 | -0.877 | -0.714 | 0.593 | 0.419 | 0.191 | 0.232 | 1.272 |
| 2021 | 2.066 | -0.226 | -0.059 | -1.573 | -1.078 | -1.052 | -1.222 | -0.377 |
| | | | | | | | | |
| CORR | -0.114 | -0.109 | 0.008 | -0.038 | -0.039 | 0.203 | 0.422 | 0.059 |

The last row of Table 5 shows the correlation of the stationary data series with the target data series (the RPDS) at a five year forecast horizon. It can be seen that the 5-year-detrended transformation delayed one year provides the most accurate predictions.

In this example, there is only a single explanatory variable considered and only a single cluster considered. In practice, there may be a plurality of potential explanatory data series and/or a plurality of clusters of features. In this example, the feature of the 5-year-detrended transformation lagged one year is selected as a representative feature for the (single) cluster of possible features.

The strong correlation of this feature can be interpreted as meaning that de-trended GDP is a particularly good indicator of what the value of the datapoint will be in five years' time.

Referring to Table 6, the prediction of the datapoint is described.

Table 6

| YEAR | Detrended TIP | GDP - ALR5 L1 DET STD | GDP - ALR5 L1 DET STD + 5Y |
|---|---|---|---|
| 1999 | | 3.334 | |
| 2000 | 0.809 | 2.047 | |
| 2001 | 0.809 | 1.271 | |
| 2002 | 0.809 | -0.193 | |
| 2003 | 0.809 | -0.554 | |
| 2004 | 0.809 | -0.556 | 3.334 |
| 2005 | 0.809 | -0.345 | 2.047 |
| 2006 | 1.478 | -0.406 | 1.271 |
| 2007 | 1.675 | -0.081 | -0.193 |
| 2008 | 0.029 | 0.218 | -0.554 |
| 2009 | -0.436 | 0.201 | -0.556 |
| 2010 | -1.193 | -0.995 | -0.345 |
| 2011 | -2.145 | -0.882 | -0.406 |
| 2012 | -2.080 | -0.766 | -0.081 |
| 2013 | -0.826 | -0.589 | 0.218 |
| 2014 | -0.841 | -0.593 | 0.201 |
| 2015 | -0.739 | 0.431 | -0.995 |
| 2016 | -0.469 | 0.178 | -0.882 |
| 2017 | -0.062 | -0.202 | -0.766 |
| 2018 | -0.208 | -0.422 | -0.589 |
| 2019 | 0.191 | -0.108 | -0.593 |
| 2020 | 0.416 | 0.232 | 0.431 |
| 2021 | 0.354 | -1.222 | 0.178 |
| 2022 | | | -0.202 |
| 2023 | | | -0.422 |
| 2024 | | | -0.108 |
| 2025 | | | 0.232 |
| 2026 | | | -1.222 |

Column 2 of Table 6 shows the de-trended and standardised TIP (the determination of which is described above in relation to Table 1) and column 3 shows the 5-year-detrended transformation delayed one year of table 5. As explained, the accuracy of the 5-year-detrended transformation delayed one year indicates that GDP is a good predictor for the datapoint in five years' time; therefore, column 4 of Table 6 shows this feature shifted forward by 5 years.

Since there is no feature data available before 2014, the TIP datapoints up to 2013 are discarded. The trendline of the remaining de-trended TIP data is then determined.

The 5-year-detrended transformation lagged one year is only applicable for the forecast horizon of five years (it is for this forecast horizon that the accuracy has been tested) and so the datapoints for 2022 - 2025 are also discarded (and so only the datapoint for 2026 in the fourth column of the table is used in the prediction).

A regression (e.g. a linear regression) for the datapoints between 2014 and 2021 is then determined using the de-trended TIP as a target and the feature as the explanatory variable. This regression can be used to determine a slope coefficient, which in this example is 0.409.

This slope coefficient is then combined with the 2026 feature datapoint to obtain a transformed prediction. Specifically, the transformed prediction is determined as: -1.221*0.409 = -0.500 (there is no constant value here since the TEWMA was shifted during the determination of the TIP).

In order to obtain the predicted datapoint, this transformed prediction must be inversely transformed based on the transforms used to obtain this transformed prediction. The standard deviation determined as part of the standardisation of the TIP was 0.013, so the transformed prediction is first multiplied by this standard deviation to obtain a value of -0.007. The de-trending is then removed by adding in the removed trend component (of 0.067) to obtain a value of 0.060. This is the forecast of annualized log-return over 5 years. This value is then multiplied by the forecast horizon of 5 years to obtain a value of 0.302. This is the forecast of the log-return over five years. To invert the log-return, the computer device takes the exponent of this value: exp(0.302) = 1.352. This is the forecast of the growth of the input data series over the next 5 years (until 2026). Finally, this value is multiplied by the final value of the RPDS: 3218.218*1.352 = 4352.147. So the predicted datapoint for 2026 is 4352.147.

This predicted datapoint is output to the computer device and this output can then be used to take an action or send instructions to take an action. For example, where the RPDS relates to a mechanical system, this action may be altering the design of a new component. The action may be taken (automatically) by the computer device and/or may require some (e.g. confirmatory) human input.

**Operation of the system**

Figure 13 shows an exemplary operation sequence of interactions of a user with the system, through which the user can input and implement choices. In some examples, the system may output prompts to the user via a user interface 1010, for example on an output computer device 503. The user can then make selections to indicate their choices or can use free-data entry. The choices are typically dependent on the data series being modelled, as will be outlined below. The system can allow for specific inputs from the user in several ways. The following is only an example process and it should be understood that the prompts may be output in different sequences and/or in different combinations (or individually).

At 81, the user input initializes the session by choosing the target data series and the explanatory variables data series. The choice of target data series is determined by the context and purpose of the session. Examples may include: determining extent of corrosion of machinery part, the value of an asset, or determination of a likely interaction sequence of a user with a website. The choice of explanatory data series will be dependent on the chosen target data series. In particular, this choice provides the opportunity for a user to include their own knowledge and/or numerical data into the system. For example, the user may have undertaken stress-cycling tests on a particular component or design, the data from which is specific to the component of interest and should be included in the explanatory data series. In the case of determination of market values, the user can define which variables are likely to be relevant using their own expertise, for example employment, GDP, and government debt.

At 82, the user can input a choice of interactions of explanatory variables. This may refer to the interaction of components in a complex mechanical system. For example, data series associated with tyres can be used to explain degradation of the tyres, while data series related to the motor or the engine will only be used to explain tyre degradation if explicitly allowed. As another example, this may include geographic restrictions, such that a series of data associated with a country, A, can be used to explain a forecasted variable for that country A, but that a series of data tagged for (associated with) country/region/entity B can only be used to explain a forecasted variable tagged for country/region/entity A, if it is explicitly allowed that B can affect A. This may be related to international market conditions. Alternatively, different countries with a similar climate and road conditions may be beneficial in forecasting corrosion of degradation variables, and so can be included. By contrast, degradation or corrosion mechanisms in countries with very different road conditions and climates may be very different, and so data series from these countries will not be allowed to affect the forecasted variable. This provides a further step in which the user can input their own expertise in the particular field to improve the accuracy of the forecast.

At 83, the user can input a choice relating to the type of transformation underlying each forecast. While these transformations are auxiliary and are eventually inverted, these assumptions embody critical characteristics of data generating processes. The two implemented transformations are 'difference' and 'log-return'. The first one is appropriate during modelling of impulse or flow variables, the second one is relevant when a forecasted variable is characterized with compound growth. As such, the user can make this choice based on their expertise of any mechanisms underlying the variable to be forecast. A user may also set parameter $\delta$, as used in the calculation of Exponentially Weighted Moving Average (EWMA). This parameter is responsible for discounting the past while smoothing the in-sample trend.

At 84, the user may provide an input specifying how many top predictors will be used in the forecasting process. The number of predictors may be linked to the strength of a signal they carry. At 85, the user may also input the number of clusters used to group the top explanatory data. In a typical implementation, the number of top predictors, N=30, and the number of clusters, C=12; this provides a good balance between forecast accuracy and computational efficiency.

This also provides a trade-off between forecast precision/bias and variance of forecast errors (for example, a single model having good predictive power, as defined by a high out-of-sample stability, would be risky, leading to high variance of forecast errors; while a weighted forecast from a number of models may have a lower out-of-sample stability but the use of an average results in a smaller variance of errors). By averaging the forecasts, the onus to determine the best model is reduced, as multiple small pieces of information are integrated into a single forecast.

These interactions may happen iteratively. For example, a change of parameters affects the behaviour of the system, which might in turn convince a user to change the parameters further. The interactions and/or inputs also might occur in an exploratory manner, whereby a user conducts a search over the space of admissible numeric parameters, in order to identify those which deliver the best results.

**Causal prediction-enhanced operation**

Figure 14 illustrates the steps of an enhanced operation of the system, which provides a capability for a user to input prediction trends. Most of the steps of the sequence of interactions are the same as those described above, however, additional step 92 is included, whereby the user can input a prediction. This can provide an opportunity for a user to use their expertise to inform the forecasting based on their knowledge or expectation of future conditions. This can allow predictions to be based on causal reasoning. It can also allow the forecast to be repeated to determine forecasts for different conditions. For example, the forecast may be run firstly to predict the degradation of engine parts when a vehicle is used extensively at high speeds, and secondly when used infrequently; and/or the forecast may be used to predict degradation when used in a humid environment and when used in a dry environment. The improved computational efficiency of the method, as a result of the manner in which intermediate results are stored in the storage 1008 of the computer, means that determining forecasts based on different scenarios is feasible. This means that components can be designed, and their performance predicted for a range of scenarios and/or conditions. This has the advantage that components can be designed to be safe over this range of scenarios and/or conditions.

If the 'classical' method of LOO validation were performed, the burden of the large computational power required would typically mean that it may only have been feasible to model performance in extreme conditions. This could lead to potential issues being missed. By storing the intermediate values and using the PJ coefficient and the ensemble-level stability measure, such that the computational burden is reduced (by a factor of T), a system can be stress-tested over a wider range of scenarios. As such, the present invention can allow potential problems to be identified, and an alarm or alert may be output in dependence on this. For example, an alert may be output if the predicted value is above or below an acceptable threshold level for one or more of the scenarios/conditions.

The user's prediction can be parametrised by defining an appropriate function (or functions) such as a curve. The functions can be used to amend, refine, define and/or link the input data series and/or target data series. It is likely that scenarios will, in reality, be dependent on a combination of factors (for example, weather conditions are both humid and hot). An advantage of this methodology is that it can account for complex developments of conditions, which may also be correlated. An example methodology for defining and applying relevant functions is outlined below. This continues the example of predicting the performance of financial assets in a closed system (in this case, the market), as this exemplifies how the future conditions of interrelated variables (capital accumulation, money flows, sources of funding) can be incorporated, the 'prediction' arising from experts' views on future markets.

To generate a consistent, complete overview of a market, six aggregates should be represented: Capital Raised, Capital Called, Capital Distributed, Performance, Dry Powder (DP), and Unrealized Value (NAV). The connection between these aggregates is illustrated in Figure 15. Dry Powder (DP) accounts for money pledged but not yet deployed, and Unrealized Value (NAV) represents capital invested. The sum of DP and NAV defines the total Assets Under Management (AUM). Capital Raised represents money pledged (and so stands for the inflow to the system - in this case, the market). The Capital Called refers to the money actually deployed (and so moved from DP to NAV). Performance refers to the performance of the NAV in the market; at a time T+1, the NAV is multiplied by a factor determined by (Performance +1). Capital Distributed refers to the money released from investments.

Consecutive years can be denoted by:

$$1 \leq s \leq S \leq T \leq t$$

Where expressions indexed with s are either known, or can be evaluated from the sample; *S* may refer to any year prior to *T*; *T* is the terminal year; and expressions indexed with *t* might need to be forecasted. We consider two types of quantities: snapshots in time are indexed with a single time period, while variables that accrue over time are indexed both with the beginning, and the end of this period.

Assume that capital called between *s* - 1 and *s* is in its entirety requested at the beginning of this period, and that capital distributed between *s* - 1 and *s* is paid back only at the end of this period:

$$Capital\ Called(s-1) = Capital\ Called(s-1, s),$$

$$Capital\ Distributed(s) = Capital\ Distributed(s-1, s).$$

Then a conservative estimate of annual performance can be determined by the formula

$$Performance(s-1, s) \approx \frac{NAV(s) + Captial\ Distributed(\ s)}{NAV(s-1) + Captial\ Called(s-1)} - 1.$$

The following identities can be used to replicate the historical capital accumulation process, while accounting for money inflows, money outflows, and the sources of funding:

$$DP(s) = DP(s\ -\ 1) +\ Capital\ Raised(s\ -\ 1, s) -\ Capital\ Called(s\ -\ 1),$$

and

$$NAV(s) = [NAV(s-1) + Capital\ Called(s-1)][1\ +\ Performance(s\ -\ 1, s)] \\ -\ Capital\ Distributed(s).$$

This system can then be iterated through time. To do so, the values of Performance, Capital Raised, Capital Called, and Capital Distributed need to be forecast or become assumptions set by subject matter experts. To iterate this system through time, Capital Called is expressed as a function of DP (and its own past values), and Capital Distributed is expressed as a function of NAV (and its own past values):

$$Capital\ Called(s\ -\ 1) = \eta(s) \cdot DP(s\ -\ 1) \cdot H\left[\frac{Capital\ Called(t)}{DP(t)}; 1\ \leq t\ \leq s-2\right],$$

$$Capital\ Distributed(s) = \rho(s) \cdot NAV(s\ -\ 1) \cdot H\left[\frac{Capital\ Distributed(t)}{NAV(t)}; 1\ \leq t\ \leq s-2\right].$$

Above $H[\cdot]$ is any function of history of a series (e.g., a median), while curves $\eta,\rho$ represent beliefs about the future values, expressed in terms of historical ratios. For example, setting $\eta(s) > 1$ implies we expect the ratio of Capital Called to DP to be higher at time $s$ than its historical values, from $\eta(s) < 1$ it follows that in period $s$ this ratio would respectively be lower. Similarly, setting $\rho(s) > 1$ implies we expect the ratio of Capital Distributed to NAV to be higher at time s than its historical values, while $\eta(s) < 1$ implies this ratio would be lower.

A multiplicative performance index can be defined via the equation:

$$\Pi(S)\ =\ 100\ \cdot \prod_{s=1}^{S}\big(1\ +\ Performance(s\ -\ 1, s)\big)\ where\ \ Performance(0,1)\ \equiv\ 0$$

On one hand, a correctly specified prediction of this index will capture partial information on performance in the short-term and converge to an unconditional mean over longer time horizons. On the other hand, once we have a forecast of a multiplicative performance index, we can calculate an implied forecast of the underlying performance.

We will assume that the forecasts of Performance and Capital Raised were generated by a method described in this document and are readily available. (The former is generated through forecasting of multiplicative Performance index, the latter via direct forecasting of Capital Raised). These two variables will be treated as the causal drivers of the system. Since we know history, the expectations expressed in term of curves $\eta$ and $\rho$ allow us to evaluate *Capital Called*($s$ - 1) and *Capital Distributed*($s$). All the four quantities taken jointly enable us to iterate through the two equations specified above, obtaining *DP*($s$) and *NAV*($s$) for the consecutive periods of time. Conditional on the forecasts of the drivers, and the specification of behavioural curves $\eta$ and $\rho$, we are now able to calculate the future market characteristics consistent with the predictions.

To illustrate this example, Figure 16 shows a first graph indicating the capital raised over time up to 2020, and the trend and mean between 2020 and 2025; a second graph indicating the performance index up to 2020, and the trend and forecast between 2020 and 2025; and a third graph plotting the assets under management (AUM), unrealized value (NAV) and dry powder (DP).

**Numerical Examples**

*Example 1*

As a first example, the forecasts of Capital Raised are treated as given. For each point of the sample pre-calculate:

$$RATIO(s) = \frac{CAPITAL\ CALLED(s)}{DRY\ POWDER(s)}$$

These values are provided in Table 7:

**Table 7**

| | CAPITAL CALLED (CC) | DRY POWDER (DP) | CAPITAL RAISED (CR) | CC/DP |
|---|---|---|---|---|
| 31/12/2000 | 48.7 | 109.2 | 69.1 | 0.445983113 |
| 31/12/2001 | 27.0 | 110.9 | 41.3 | 0.243667156 |
| 31/12/2002 | 24.0 | 124.2 | 43.0 | 0.193388448 |
| 31/12/2003 | 36.3 | 126.4 | 19.8 | 0.286922271 |
| 31/12/2004 | 45.6 | 115.1 | 43.7 | 0.39635445 |
| 31/12/2005 | 56.6 | 145.3 | 58.7 | 0.389424115 |
| 31/12/2006 | 72.2 | 234.3 | 134.6 | 0.308163954 |
| 31/12/2007 | 126.7 | 258.3 | 161.0 | 0.490451398 |
| 31/12/2008 | 89.4 | 266.6 | 120.8 | 0.335308119 |
| 31/12/2009 | 56.5 | 272.7 | 66.4 | 0.207065302 |
| 31/12/2010 | 83.0 | 244.0 | 45.8 | 0.340255757 |
| 31/12/2011 | 72.8 | 223.8 | 47.9 | 0.32530428 |
| 31/12/2012 | 97.9 | 199.9 | 53.6 | 0.489588284 |
| 31/12/2013 | 58.4 | 233.3 | 110.4 | 0.250152297 |
| 31/12/2014 | 103.0 | 249.4 | 105.9 | 0.412828976 |
| 31/12/2015 | 99.1 | 288.9 | 87.5 | 0.342878778 |
| 31/12/2016 | 113.5 | 307.9 | 148.1 | 0.368596563 |
| 31/12/2017 | 126.9 | 375.2 | 194.4 | 0.338092872 |
| 31/12/2018 | 157.1 | 420.6 | 115.9 | 0.373429964 |
| 31/12/2019 | 191.3 | 489.6 | 295.5 | 0.390766312 |
| 31/12/2020 | 187.7 | 526.7 | 183.3 | 0.356333343 |
| 31/12/2021 | 265.5 | 480.1 | 220.8 | 0.552959339 |

Then, for each year of the forecast calculate:

1.

$$MEDIAN\ OF\ RATIOS(t) = MEDIAN(RATIO; t-8: t-1)$$

2.

$$CAPITAL\ CALLED\ (t) = BELIEFS\ FACTOR(t) \times DRY\ POWDER(t-1) \times MEDIAN\ OF\ RATIOS(t)$$

3.

$$DRY\ POWDER(t) = DRY\ POWDER(t-1) + CAPITAL\ RAISED(t-1) - CAPITAL\ CALLED(t)$$

4.

$$RATIO(t) = \frac{CAPITAL\ CALLED(t)}{DRY\ POWDER(t)}$$

The sample medians are provided in Table 8:

**Table 8**

| | SAMPLE MEDIANS (CC/DP) |
|---|---|
| 0.371013264 | 2014-2021 |
| 0.371013264 | 2015-2022 |
| 0.374734516 | 2016-2026 |
| 0.37799863 | 2017-2024 |
| 0.37799863 | 2018-2025 |
| 0.37799863 | 2019-2026 |

'Beliefs Factor' captures beliefs regarding future values of Capital Called. These beliefs are expressed in terms of median ratios of Capital Called to Dry Powder over the business cycle. The 'Beliefs Factors' defined for years 2022 to 2027 are provided in Table 9.

**Table 9**

| | Beliefs Factor |
|---|---|
| 31/12/2022 | 1.00 |
| 31/12/2023 | 1.00 |
| 31/12/2024 | 1.00 |
| 31/12/2025 | 1.00 |
| 31/12/2026 | 1.00 |
| 31/12/2027 | 1.00 |

These can then be used to determine the new forecasts, as shown in Table 10:

**Table 10**

| | CAPITAL CALLED (CC) - New Forecasts | DRY POWDER (DP) - New Forecasts | CAPITAL RAISED (CR) - Pre-generated Forecasts | CC/DP - New Forecasts |
|---|---|---|---|---|
| 31/12/2022 | 178.1 | 465.9 | 163.9 | 0.382337549 |
| 31/12/2023 | 172.9 | 459.7 | 166.6 | 0.376039068 |
| 31/12/2024 | 172.3 | 453.3 | 165.9 | 0.379958192 |
| 31/12/2025 | 171.4 | 480.6 | 198.7 | 0.356536531 |
| 31/12/2026 | 181.7 | 548.1 | 249.1 | 0.331493514 |
| 31/12/2027 | 207.2 | 587.3 | 246.5 | 0.352718334 |

Figure 17a shows plots of these values of Capital Called and the Dry Powder, including the forecasted values. The scheme provides a prediction of Capital Called which is consistent with the beliefs, and as a result facilitates computation of forecasts of Dry Powder.

*Example 2*

In this second example, the forecasts of Performance are treated as given (produced by the baseline methodology). Similarly, we treat the forecasts of Capital Called as given (produced in Example 1; consistent with the beliefs provided in Example 1).

For each point of the sample pre-calculate:

$$RATIO(s) = \frac{CAPITAL\ DISTRIBUTED(s)}{UNREALIZED\ VALUE(s)}$$

These values are provided in Table 11:

**Table 11**

| | CAPITAL DISTRIBUTED (CD) | UNREALIZED VALUE (NAV) | CAPITAL CALLED (CC) | 1 + PERFORMANCE (PR) | CD/NAV |
|---|---|---|---|---|---|
| 31/12/2000 | 18.54343663 | 130.5469109 | 48.70477239 | | 0.142044239 |
| 31/12/2001 | 16.44544824 | 128.4602407 | 27.03386747 | 0.919564495 | 0.128019753 |
| 31/12/2002 | 19.39635655 | 124.1493685 | 24.02140816 | 0.941396726 | 0.156234033 |
| 31/12/2003 | 24.62446103 | 160.1734642 | 36.26807242 | 1.151981506 | 0.153736208 |
| 31/12/2004 | 59.05515832 | 183.9287644 | 45.6377064 | 1.180615814 | 0.321076252 |
| 31/12/2005 | 69.62756906 | 226.3013535 | 56.59977458 | 1.230327693 | 0.307676326 |
| 31/12/2006 | 88.10444374 | 270.5440205 | 72.20681423 | 1.201469517 | 0.325656592 |
| 31/12/2007 | 106.3719714 | 362.9218028 | 126.6726348 | 1.18145543 | 0.293098873 |
| 31/12/2008 | 34.55374397 | 323.8392523 | 89.37850606 | 0.792378403 | 0.106700296 |
| 31/12/2009 | 41.56591413 | 390.4551072 | 56.47383743 | 1.135961483 | 0.10645504 |
| 31/12/2010 | 71.81361833 | 463.9050535 | 83.02790349 | 1.131442227 | 0.154802406 |
| 31/12/2011 | 133.5521863 | 479.8089236 | 72.80406731 | 1.142818495 | 0.278344524 |
| 31/12/2012 | 141.1026398 | 539.1323746 | 97.85270168 | 1.177566563 | 0.261721697 |
| 31/12/2013 | 133.1709119 | 556.1257142 | 58.35182134 | 1.153665035 | 0.239461885 |
| 31/12/2014 | 205.4455569 | 546.5063796 | 102.9672365 | 1.140889059 | 0.375925267 |

(continued)

| | CAPITAL DISTRIBUTED (CD) | UNREALIZED VALUE (NAV) | CAPITAL CALLED (CC) | 1 + PERFORMANCE (PR) | CD/NAV |
|---|---|---|---|---|---|
| 31/12/2015 | 168.9959644 | 538.1857846 | 99.05008668 | 1.095460716 | 0.314010457 |
| 31/12/2016 | 185.1616106 | 570.7259745 | 113.5074715 | 1.159882472 | 0.324431722 |
| 31/12/2017 | 178.7454583 | 613.2745853 | 126.8688399 | 1.135358273 | 0.29146073 |
| 31/12/2018 | 178.1729897 | 669.7938336 | 157.082013 | 1.100745843 | 0.26601169 |
| 31/12/2019 | 164.4729497 | 833.7815648 | 191.33256 | 1.159242734 | 0.197261437 |
| 31/12/2020 | 178.4775955 | 1032.944645 | 187.6898693 | 1.185958021 | 0.172785247 |
| 31/12/2021 | 322.9588736 | 1326.234078 | 265.4845873 | 1.270144657 | 0.243515741 |

Then, for each year of the forecast calculate:

1.

$$MEDIAN\ OF\ RATIOS(t) = MEDIAN(RATIO; t-8: t-1)$$

2.

$$CAPITAL\ DISTRIBUTED\ (t) = BELIEFS\ FACTOR(t) \times UNREALIZED\ VALUE(t-1) \times MEDIAN\ OF\ RATIOS(t)$$

3.

$$UNREALIZED\ VALUE(t) = [UNREALIZED\ VALUE(t-1) + CAPITAL\ CALLED(t-1)] \times (1 + PERFORMANCE(t)) - CAPITAL\ DISTRIBUTED(t)$$

4.

$$RATIO(t) = \frac{CAPITAL\ DISTRIBUTED(t)}{UNREALIZED\ VALUE(t)}$$

The determined medians are provided in Table 12:

**Table 12**

| | SAMPLE MEDIANS (CD/NAV) |
|---|---|
| 0.27873621 | 2014-2021 |
| 0.254763715 | 2015-2022 |
| 0.254763715 | 2016-2026 |
| 0.254763715 | 2017-2024 |
| 0.242291193 | 2018-2025 |
| 0.238529422 | 2019-2026 |

'Beliefs Factor' capture beliefs regarding future values of Capital Distributed. These beliefs are expressed in terms of median ratios of Capital Distributed to Unrealized Value over the business cycle, and, for the years 2022 to 2027, the input Beliefs Factors are provided in Table 13.

**Table 13**

| | Beliefs Factor |
|---|---|
| 31/12/2022 | 0.90 |
| 31/12/2023 | 1.15 |
| 31/12/2024 | 1.05 |
| 31/12/2025 | 0.95 |
| 31/12/2026 | 1.02 |
| 31/12/2027 | 1.00 |

The scheme above provides a prediction of Capital Distributed which is consistent with the beliefs, and as a result forecasts of Unrealized Value can be determined. These are provided in Table 14:

**Table 14**

| | CAPITAL DISTRIBUTED (CD) - New Forecasts | UNREALIZED VALUE (NAV) - New Forecasts | CAPITAL CALLED (CC) - Pre-generated Forecasts | 1 + PERFORMANCE (PR) - Pre-generated Forecasts | CD/NAV - New Forecasts |
|---|---|---|---|---|---|
| 31/12/2022 | 332.7025145 | 1458.460278 | 178.1293781 | 1.190644977 | 0.22811901 |
| 31/12/2023 | 427.2971729 | 1429.343854 | 172.8534437 | 1.138126286 | 0.298946381 |
| 31/12/2024 | 382.3521982 | 1435.417946 | 172.2537817 | 1.134973044 | 0.266369944 |
| 31/12/2025 | 347.4077885 | 1441.127565 | 171.3654156 | 1.113115431 | 0.241066646 |
| 31/12/2026 | 356.1559677 | 1509.18535 | 181.6809409 | 1.149452514 | 0.235992198 |
| 31/12/2027 | 359.9851091 | 1600.676553 | 207.1689007 | 1.142340901 | 0.224895597 |

Figure 17b shows plots of the values of Capital Distributed and the Unrealized Value, including these forecasted values. This method provides a prediction of Capital Distributed which is consistent with the beliefs, and as a result facilitates computation of forecasts of Unrealized Value.

It should be understood that this financial system forecasting example is only an exemplary use of the methodology. It can be implemented in any system where relevant variables may change over time. In particular, this methodology can be useful in predicting performance of closed complex systems by defining interactions between variables, components and/or parameters. By way of a further example, it can be used to predict the performance of component parts of complex mechanical machines, which will in turn be dependent on the performance of further component parts. For example, the inputs related to a set of the components may be parametrized by wear predictions based on the results of stress-testing, while others may be parametrized by corrosion predictions. There may be correlations between the performance of these components, which can be accounted for by defining the appropriate functions.

It should be understood that while the example uses yearly data, the principal can be applied to data of any frequency. If data is incomplete, it can be extrapolated using a knowledge of the cyclical trends in the data series. For example, different quarters will have different market trends, and different months and seasons will have different weather.

The system can forecast the relevant variable at different points in time in the future to produce a plot of forecast performance. This can be iterated for different forecast predictions, as outlined above. This can allow a user to explore different scenarios and effectively 'stress-test' that variable. This can be useful in designing a component part of a system, to ensure its safety in all, or at least most, likely conditions.

The system may output a plot to the user interface 1010 of the forecasts of the variables under the different conditions, such that they can be compared, as shown in Figure 18. This plot may indicate if any of these plots deviate above or below an acceptable threshold, for example by showing those plots in red, bold, or a different form of dashed lines etc. (or any other similar manner of indication). For example, one of the predicted points in Figure 18 is below the threshold value for the year 2025, and this is displayed with a thicker, more prominent line. In some implementations, the user interface 1010 outputs an alert or an alarm in addition to this, for example a pop-up or an electronic message stating that the system fails under some of the test conditions.

**Alternatives and modifications**

It will be understood that the present invention has been described above purely by way of example, and modifications of detail can be made within the scope of the invention.

The output of the methods typically comprises a predicted datapoint, which may thereafter be used to take action, such as purchasing a stock or altering a design schematic. This action may be taken automatically by the computer device.

Typically, the computer device is arranged to output the predicted datapoint and thereafter to receive a user input, where the computer device then transmits a communication to a further communication device in dependence on the user input. For example the predicted datapoint may indicate that a change in the design of a part would be beneficial. The computer device may then receive confirmation from a user that a change should be made and thereafter transmit a communication to a further computer device that defines an updated part.

In some embodiments, the outputting of the predicted datapoint is dependent on the predicted datapoint exceeding a threshold (e.g. where an action is taken when a threshold is exceeded) and/or is dependent on a user input (where the user input may confirm that the predicted datapoint should be transmitted to a further computer device).

In some embodiments, the method is a method of image processing, where the computer device is arranged to process an image so as to determine the target data series and/or an explanatory data series. Such a method is particularly useful where only graphical data is available.

Reference numerals appearing in the claims are by way of illustration only and shall have no limiting effect on the scope of the claims.

**Clauses**

1. An apparatus, preferably a robot, for defining and populating a memory storage and preferably outputting an alert and/or outputting an image, comprising:

    a user interface and/or a communication interface for receiving a target data series comprising a plurality of observations and/or one or more explanatory data series and/or a plurality of forecast models;
    a memory storage for storing a data structure for storing intermediate data;
    a processor for:

        receiving or determining a plurality of forecast models, each forecast model associated with one or more explanatory data series;
        defining a data structure in the memory storage in dependence on the number of forecast models and the number of observations of the target data series;
        performing a leave-one-out process for each forecast model of the plurality of forecast models, wherein the processor determines a predicted value by dropping an observation from the target data series and predicting the dropped observation in dependence on the forecast model and the data of the remaining observations in the target data series;
        repeating the leave-one-out process for each observation from the target data series to obtain a set of predicted values for each forecast model, wherein the set comprises a number of predicted values less than or equal to the number of observations of the target data series;
        determining errors between each of the predicted values and the values of the observations; and
        outputting the predicted values and their associated errors to the data structure in the memory storage;

    wherein the processor and/or a further processor is configured for:

        retrieving the intermediate data from the memory storage;
        receiving or determining an ensemble model, wherein the ensemble model comprises a weighted combination of forecast models, the weighting of each forecast model in the ensemble model being dependent on the respective determined errors;
        determining a stability measure of the ensemble model by:

weighting each of the predicted values for each observation by multiplying the predicted values retrieved from the memory storage by the weighting, wherein the weighting is dependent on the associated determined errors retrieved from the memory storage;
determining weighted predicted averages for each observation of the target data series by summing the weighted predicted values over all the models for each observation; and
determining errors between observations of the target data series and the weighted predicted averages, such averages having been computed using the processor and/or further processor from the intermediate data stored in the memory storage;
whereby, preferably, the retrieval and computation of the intermediate data from the storage memory can bypass any need for performing full regression analysis on the ensemble model to determine the stability measure, thereby preferably reducing the computational complexity by a factor proportional to the number of observations of the target data series; and

outputting the stability measure of the ensemble model, preferably to the user interface and/or communication interface.

2. The apparatus of clause 1, wherein the processor or a further processor is configured for determining stability measures of the forecast models based on the associated determined errors.

3. The apparatus of clause 1 or 2, wherein the processor or a further processor is configured for determining weightings of the forecast models in dependence on the associated determined errors and/or the stability measures; preferably wherein the weighting is inversely proportional to the error; preferably wherein the weighting is proportional to the squared inverse of the error; more preferably wherein the weightings sum to 1; and/or preferably the outputting the errors to the data structure in the memory storage comprises outputting the stability measures and/or weightings of the models to the memory storage.

4. The apparatus of any preceding clause, wherein the processor or a further processor is configured for:

determining or retrieving the stability measure of the ensemble model;
determining a goodness of fit measure of the ensemble model using the stability measure and a weighted average of the number of explanatory data series used in each of the plurality of models; and
outputting the goodness of fit of the deviation predicted by the ensemble model, preferably to the user interface and/or communication interface.

5. The apparatus of any preceding clause, wherein the processor or a further processor is configured for:

determining a raw predicted data series based on the target data series;
transforming the raw predicted data series;
determining an initial prediction based on the transformed raw predicted data series;
transforming each explanatory data series;
determining an expected deviation based on the transformed explanatory data series; and
combining the initial prediction and the expected deviation to obtain the predicted datapoint;
wherein the processor is arranged to determine the expected deviation based on an ensemble model.

6. An apparatus for processing an image, the apparatus comprising:

a user interface and/or a communication interface for:

receiving a target data series and one or more explanatory data series, wherein the target data series is associated with a target image; and
outputting a processed image based on the target image; and

a processor for:

determining a raw predicted data series based on the target data series;
preferably transforming the raw predicted data series, preferably to determine a trend in the data series;
determining an initial prediction based on the, preferably transformed, raw predicted data series;
preferably transforming each explanatory data series, preferably using the same transformation as is used for the raw predicted data series;
determining an expected deviation based on the, preferably transformed, explanatory data series;
combining the initial prediction and the expected deviation to obtain the predicted datapoint; and
forming the processed image by modifying the target image to include the predicted datapoint;
wherein the processor is arranged to determine the expected deviation based on an ensemble model that comprises a plurality of forecast models, wherein each forecast model is associated with one or more, preferably transformed, explanatory data series and wherein the ensemble model comprises a weighted combination of forecast models.

7. The apparatus of clause 6, wherein the processor is arranged to determine the stability measure for each model using a leave-one-out process, wherein the processor determines a matrix associated with deviations of the target data series from a trendline relating to the initial prediction, drops an observation from the matrix, and predicts the dropped observation in dependence on the model and the remaining data in the raw predicted data series, and more preferably wherein the processor is arranged to determine a matrix of errors between the predictions of dropped observations and the values of the observations for a plurality of observations and a plurality of models; even more preferably wherein the processor is arranged to determine the stability measure for each model and/or the weighting of each model in the ensemble model based on the matrix of errors.

8. The apparatus of any preceding clause, wherein the user interface and/or the communication interface is arranged to output a processed image and/or an alert and/or a plot displaying the target data series indicating predicted behaviour of the system in dependence on the predicted datapoint being above and/or below a threshold predicted value.

9. The apparatus of any preceding clause, wherein the communication interface and/or the user interface is arranged to receive a user input and to provide an output in dependence on the user input and the predicted datapoint.

10. The apparatus of any preceding clause, wherein the processor is further arranged to modify the explanatory data series and/or target data series using a prediction function; preferably wherein the prediction function is an input by a user or a parametrization of an input by a user; more preferably wherein the processor is further arranged to iterate the method steps using different prediction functions for predicting behaviour of a system under different conditions, and preferably is further arranged to output an alert in dependence on the predicted values; and/or preferably is further arranged to output the predicted values corresponding to different conditions on a same plot; even more preferably wherein the same plot indicates whether each predicted data point is above and/or below a threshold predicted value.

11. The apparatus of any preceding clause, wherein the processor is arranged to set to zero the weighting of each model with a stability measure beneath a threshold value, preferably wherein the threshold value is 0.9.

12. The apparatus of any preceding clause, wherein the processor is arranged to determine a forecast horizon, and to determine the predicted datapoint at the forecast horizon, preferably wherein the processor is arranged to receive the forecast horizon from a further computer device; and/or preferably wherein the processor is arranged to determine a predicted datapoint for a plurality of different forecast horizons; more preferably to determine independently a predicted datapoint at each of the forecast horizons; and/or preferably, wherein the processor is arranged to determine the expected deviation at each forecast horizon using a different ensemble model; more preferably wherein the processor is arranged to determine a predicted trend trajectory based on the plurality of predicted datapoints.

13. The apparatus of any of clauses 5 to 12, wherein the processor is arranged to transform the target data series and the explanatory data series using the same transform, and preferably wherein the processor is arranged to transform the combination of the initial prediction and the expected deviation to obtain the predicted datapoint, preferably wherein the processor is arranged to transform the combination using the inverse of a transform used to transform the target data series and/or the explanatory data series.

14. A method of defining and populating a memory storage and preferably outputting an alert or outputting an image, comprising:
receiving a target data series comprising a plurality of observations and/or one or more explanatory data series and/or a plurality of forecast models;

receiving or determining a plurality of forecast models, each forecast model associated with one or more explanatory data series;
defining a data structure in the memory storage in dependence on the number of forecast models and the number of observations of the target data series;
performing a leave-one-out process for each forecast model of the plurality of forecast models, comprising determining a predicted value by dropping an observation from the target data series and predicting the dropped observation in dependence on the forecast model and the data of the remaining observations in the target data series;
repeating the leave-one-out process for each observation from the target data series to obtain a set of predicted values for each forecast model, wherein the set comprises a number of predicted values less than or equal to the number of observations of the target data series;
determining errors between each of the predicted values and the values of the observations; and
outputting the predicted values and their associated errors to the data structure in the memory storage;
retrieving the intermediate data from the memory storage;

receiving or determining an ensemble model, wherein the ensemble model comprises a weighted combination of forecast models, the weighting of each forecast model in the ensemble model being dependent on the respective determined errors;
determining a stability measure of the ensemble model by:

weighting each of the predicted values for each observation by multiplying the predicted values retrieved from the memory storage by the weighting, wherein the weighting is dependent on the associated determined errors retrieved from the memory storage;
determining weighted predicted averages for each observation of the target data series by summing the weighted predicted values over all the models for each observation; and
determining errors between observations of the target data series and the weighted predicted averages, such averages having been computed using the processor and/or further processor from the intermediate data stored in the memory storage;
whereby, preferably, the retrieval and computation of the intermediate data from the storage memory can bypass any need for performing full regression analysis on the ensemble model to determine the stability measure, thereby preferably reducing the computational complexity by a factor proportional to the number of observations of the target data series; and

outputting the stability measure of the ensemble model.

15. A robotic network system comprising:

a user interface and/or a communication interface for receiving, preferably from remote storage, a target data series comprising a plurality of observations and/or one or more explanatory data series;
a storage for storing a plurality of forecast models;
a memory storage for storing a data structure for storing intermediate data;
a processor for:

receiving the plurality of forecast models from the storage, each forecast model associated with one or more explanatory data series;
defining a data structure in the memory storage in dependence on the number of forecast models and the number of observations of the target data series;
performing a leave-one-out process for each forecast model of the plurality of forecast models, wherein the processor determines a predicted value by dropping an observation from the target data series and predicting the dropped observation in dependence on the forecast model and the data of the remaining observations in the target data series;
repeating the leave-one-out process for each observation from the target data series to obtain a set of predicted values for each forecast model, wherein the set comprises a number of predicted values less than or equal to the number of observations of the target data series;
determining errors between each of the predicted values and the values of the observations; and
outputting the predicted values and their associated errors to the data structure in the memory storage; and

a further processor for:

retrieving the intermediate data from the memory storage;
receiving or determining an ensemble model, wherein the ensemble model comprises a weighted combination of forecast models, the weighting of each forecast model in the ensemble model being dependent on the respective determined errors;
determining a stability measure of the ensemble model by:

weighting each of the predicted values for each observation by multiplying the predicted values retrieved from the memory storage by the weighting, wherein the weighting is dependent on the associated determined errors retrieved from the memory storage;
determining weighted predicted averages for each observation of the target data series by summing the weighted predicted values over all the models for each observation; and
determining errors between observations of the target data series and the weighted predicted averages, such averages having been computed using the processor and/or further processor from the intermediate data stored in the memory storage;
whereby, preferably, the retrieval and computation of the intermediate data from the storage memory can bypass any need for performing full regression analysis on the ensemble model to determine the stability measure, thereby preferably reducing the computational complexity by a factor proportional to the number of observations of the target data series; and

outputting the stability measure of the ensemble model, preferably to the user interface and/or communication interface.

16. Apparatus, preferably a robot, for outputting an alert, the apparatus comprising:

a user interface and/or a communication interface for:

receiving a target data series and one or more explanatory data series, wherein the target data series is associated with behaviour of a system and the explanatory data series comprises variables related to the behaviour of the system; and
outputting an alert; and

a processor for:

determining a raw predicted data series based on the target data series;
preferably transforming the raw predicted data series, preferably to determine a trend in the data series;
determining an initial prediction based on the, preferably transformed, raw predicted data series;
preferably transforming each explanatory data series, preferably using the same transformation as is used for the raw predicted data series;
determining an expected deviation based on the, preferably transformed, explanatory data series;
combining the initial prediction and the expected deviation to obtain a predicted datapoint; and
determining an alert in dependence on the value of the predicted datapoint;
wherein the processor is arranged to determine the expected deviation based on an ensemble model that comprises a plurality of forecast models, wherein each forecast model is associated with one or more, preferably transformed, explanatory data series and wherein the ensemble model comprises a weighted combination of forecast models.

17. The apparatus of clause 16, wherein the user interface and/or the communication interface is arranged to output a plot displaying the target data series indicating predicted behaviour of the system indicating the predicting datapoint as above and/or below a threshold predicted value, and preferably in dependence on the predicted datapoint being above and/or below a threshold predicted value.

18. The apparatus of clause 16 or 17, wherein the user interface is configured to output the alert in dependence on the predicted data point being above and/or below a threshold predicted value.

19. The apparatus of any of clauses 16 to 18, wherein the communication interface and/or the user interface is arranged to receive a user input and to provide an output in dependence on the user input and the predicted datapoint.

20. The apparatus of any of clauses 16 to 19, wherein the processor is further arranged to modify the explanatory data series and/or target data series using a prediction function, preferably wherein the prediction function is a user input or a parametrization of a user input.

21. The apparatus of clause 20, wherein the processor is further arranged to iterate the steps using different prediction functions for predicting behaviour of a system under different conditions, and preferably is further arranged to output an alert in dependence on the predicted values; and/or preferably is further arranged to output the predicted values corresponding to different conditions on a same plot; even more preferably wherein the same plot indicates whether each predicted data point is above and/or below a threshold predicted value.

22. The apparatus of any of clauses 16 to 21, wherein each of the forecast models is associated with a stability measure and wherein the weighting of each forecast model in the ensemble model is dependent on the corresponding stability measure, preferably wherein the processor is arranged to determine and/or store a matrix associated with the stability measures and/or the weightings.

23. The apparatus of any of clauses 16 to 22, wherein the processor is arranged to determine the stability measure for each of the forecast models, preferably wherein the processor is arranged to determine the stability measure for each model using a leave-one-out process, wherein the processor determines a matrix associated with deviations of the target data series from a trendline relating to the initial prediction, drops an observation from the matrix, and predicts the dropped observation in dependence on the model and the remaining data in the raw predicted data series.

24. The apparatus of clause 23, wherein the processor is arranged to determine a matrix of errors between the predictions of dropped observations and the values of the observations for a plurality of observations and a plurality of models, preferably wherein the processor is arranged to determine the stability measure for each model and/or the weighting of each model in the ensemble model based on the matrix of errors.

25. The apparatus of any of clauses 22 to 24, further comprising a storage for storing the matrix, preferably wherein processor is arranged to define and/or store the matrix associated with the stability measures and/or the weightings to the storage.

26. The apparatus of claim 25, wherein the processor is further arranged to retrieve or determine the matrix in order to determine a stability measure of the ensemble model; and preferably wherein the apparatus is arranged to determine a stability measure of a plurality of ensemble models and to select an ensemble model in dependence on the stability measures.

27. An apparatus, preferably a robot, for defining and populating a memory storage and preferably outputting an alert or outputting an image, comprising:

a user interface and/or a communication interface for receiving a target data series comprising a plurality of observations and/or one or more explanatory data series and/or a plurality of forecast models;
a memory storage for storing a data structure for storing intermediate data;
a processor for:

receiving or determining a plurality of forecast models, each forecast model associated with one or more explanatory data series;
defining a data structure in the memory storage in dependence on the number of forecast models and the number of observations of the target data series;
performing a leave-one-out process for each forecast model of the plurality of forecast models, wherein the processor determines a predicted value by dropping an observation from the target data series and predicting the dropped observation in dependence on the forecast model and the data of the remaining observations in the target data series;
repeating the leave-one-out process for each observation from the target data series to obtain a set of predicted values for each forecast model, wherein the set comprises a number of predicted values less than or equal to the number of observations of the target data series;
determining errors between each of the predicted values and the values of the observations; and
outputting the predicted values and their associated errors to the data structure in the memory storage;
wherein the processor and/or a further processor is configured for:

retrieving the intermediate data from the memory storage;

receiving or determining an ensemble model, wherein the ensemble model comprises a weighted combination of forecast models, the weighting of each forecast model in the ensemble model being dependent on the respective determined errors;
determining a stability measure of the ensemble model by:

weighting each of the predicted values for each observation by multiplying the predicted values retrieved from the memory storage by the weighting, wherein the weighting is dependent on the associated determined errors retrieved from the memory storage;
determining weighted predicted averages for each observation of the target data series by summing the weighted predicted values over all the models for each observation; and
determining errors between observations of the target data series and the weighted predicted averages, such averages having been computed using the processor and/or further processor from the intermediate data stored in the memory storage;
whereby, preferably, the retrieval and computation of the intermediate data from the storage memory can bypass any need for performing full regression analysis on the ensemble model to determine the stability measure, thereby preferably reducing the computational complexity by a factor proportional to the number of observations of the target data series; and

outputting the stability measure of the ensemble model, preferably to the user interface and/or communication interface.

28. The apparatus of clause 27, wherein the processor or a further processor is configured for determining stability measures of the forecast models based on the associated determined errors.

29. The apparatus of clause 27 or 28, wherein the processor or a further processor is configured for determining weightings of the forecast models in dependence on the associated determined errors and/or the stability measures, preferably wherein the weighting is inversely proportional to the error, preferably wherein the weighting is proportional to the squared inverse of the error, more preferably wherein the weightings sum to 1.

30. The apparatus of any of clauses 27 to 29, wherein the outputting the errors to the data structure in the memory storage comprises outputting the stability measures and/or weightings of the models to the memory storage.

31. The apparatus of any of clauses 26 to 30, wherein the processor or a further processor is configured for:

determining or retrieving the stability measure of the ensemble model;
determining a goodness of fit measure of the ensemble model using the stability measure and a weighted average of the number of explanatory data series used in each of the plurality of models; and
outputting the goodness of fit of the deviation predicted by the ensemble model, preferably to the user interface and/or communication interface.

32. The apparatus of any of clauses 27 to 31, wherein the processor or a further processor is configured for:

determining a raw predicted data series based on the target data series;
transforming the raw predicted data series;
determining an initial prediction based on the transformed raw predicted data series;
transforming each explanatory data series;
determining an expected deviation based on the transformed explanatory data series; and
combining the initial prediction and the expected deviation to obtain the predicted data point;
wherein the processor is arranged to determine the expected deviation based on an ensemble model.

33. The apparatus of any of clauses 22 to 32, wherein the processor is arranged to set to zero the weighting of each model with a stability measure beneath a threshold value, preferably wherein the threshold value is 0.9.

34. The apparatus of any of clauses 16 to 33, wherein the processor is arranged to determine a forecast horizon, and to determine a or the predicted datapoint at the forecast horizon, preferably wherein the processor is arranged to receive the forecast horizon from a further computer device.

35. The apparatus of clause 34, wherein the processor is arranged to determine a predicted datapoint for a plurality of different forecast horizons; preferably to determine independently a predicted datapoint at each of the forecast horizons.

36. The apparatus of clause 35, wherein the processor is arranged to determine the expected deviation at each forecast horizon using a different ensemble model.

37. The apparatus of clause 35 or 36, wherein the processor is arranged to determine a predicted trend trajectory based on the plurality of predicted datapoints.

38. The apparatus of any of clauses 16 to 26 or 32 to 37, wherein:

transforming the raw predicted data series comprises determining first differences of the raw predicted data series; and/or
transforming the raw predicted data series comprises determining logarithmic returns of the raw predicted data series; and/or
transforming the explanatory data series comprises determining first differences of the explanatory data series; and/or
transforming the explanatory data series comprises determining logarithmic returns of the explanatory data series.

39. The apparatus of any of clauses 16 to 26 or 32 to 38, wherein the processor is arranged to transform the target data series and the explanatory data series using the same transform.

40. The apparatus of any of clauses 16 to 26 or 32 to 39, wherein the processor is arranged to determine a moving average of the raw predicted data series, preferably wherein transforming the raw predicted data series comprises transforming the moving averages.

41. The apparatus of any of clauses 16 to 26 or 32 to 40, wherein the processor is arranged to shift the transformed moving averages based on the mean value of the moving average of the transformed raw predicted data series, preferably wherein the processor is arranged to determine the initial prediction in dependence on the transformed moving averages and the mean of the raw predicted data series.

42. The apparatus of any of clauses 16 to 26 or 32 to 41, wherein the processor is arranged to transform the combination of the initial prediction and the expected variance to obtain the predicted datapoint, preferably wherein the processor is arranged to transform the combination using the inverse of a transform used to transform the target data series and/or the explanatory data series.

43. The apparatus of any of clauses 16 to 26 or 32 to 42, wherein the processor is arranged to supplement, and/or extrapolate from, the target data series to obtain the raw predicted data series.

44. The apparatus of any of clauses 16 to 26 or 32 to 43, wherein the processor is arranged to pre-process the explanatory data series and/or the target data series, preferably to supplement the explanatory data series and/or the target data series to account for missing data, more preferably to supplement a first, incomplete, section of the explanatory data series and/or the target data series based on a similar, complete, section of the explanatory data series and/or the target data series and/or to interpolate between values of the explanatory data series and/or the target data series.

45. The apparatus of any of clauses 16 to 44, wherein the user interface and/or the communication interface is arranged to receive a plurality of explanatory data series.

46. The apparatus of any of clauses 16 to 45, wherein the processor is arranged to cluster the explanatory data series, preferably based on a similarity between the explanatory data series, more preferably wherein the processor is arranged to cluster the transformed explanatory data series, preferably based on a similarity between the transformed explanatory data series.

47. The apparatus of any of clauses 16 to 46, wherein the processor is arranged to form each forecast model by selecting a representative, preferably transformed, explanatory data series from one or more of a plurality of clusters.

48. The apparatus of any of clauses 16 to 47, wherein the processor is arranged to determine and/or output an expected accuracy and/or goodness of fit measure for the predicted datapoint.

49. The apparatus of any of clauses 16 to 48, wherein the target data series and/or the explanatory data series comprises a sparse data series, typically a data series with no more than 50 values, no more than 25 values, no more than 10 values and/or no more than 5 values.

50. A robotic network system comprising:

a user interface and/or a communication interface for receiving, preferably from remote storage, a target data series comprising a plurality of observations and/or one or more explanatory data series;
a storage for storing a plurality of forecast models;
a memory storage for storing a data structure for storing intermediate data;
a processor for:

receiving the plurality of forecast models from the storage, each forecast model associated with one or more explanatory data series from the remote storage;
defining a data structure in the memory storage in dependence on the number of forecast models and the number of observations of the target data series;
performing a leave-one-out process for each forecast model of the plurality of forecast models, wherein the processor determines a predicted value by dropping an observation from the target data series and predicting the dropped observation in dependence on the forecast model and the data of the remaining observations in the target data series;
repeating the leave-one-out process for each observation from the target data series to obtain a set of predicted values for each forecast model, wherein the set comprises a number of predicted values less than or equal to the number of observations of the target data series;
determining errors between each of the predicted values and the values of the observations; and
outputting the predicted values and their associated errors to the data structure in the memory storage; and

a further processor for:

retrieving the intermediate data from the memory storage;
receiving or determining an ensemble model, wherein the ensemble model comprises a weighted combination of forecast models, the weighting of each forecast model in the ensemble model being dependent on the respective determined errors;
determining a stability measure of the ensemble model by:

weighting each of the predicted values for each observation by multiplying the predicted values retrieved from the memory storage by the weighting, wherein the weighting is dependent on the associated determined errors retrieved from the memory storage;
determining weighted predicted averages for each observation of the target data series by summing the weighted predicted values over all the models for each observation; and
determining errors between observations of the target data series and the weighted predicted averages, such averages having been computed using the processor and/or further processor from the intermediate data stored in the memory storage;
whereby, preferably, the retrieval and computation of the intermediate data from the storage memory can bypass any need for performing full regression analysis on the ensemble model to determine the stability measure, thereby preferably reducing the computational complexity by a factor proportional to the number of observations of the target data series; and

outputting the stability measure of the ensemble model, preferably to the user interface and/or communication interface.

51. A method of outputting an alert, the method comprising:

receiving a target data series and one or more explanatory data series, wherein the target data series is associated with behaviour of a system and the explanatory data series comprises variables related to the behaviour of the system;

determining a raw predicted data series based on the target data series;
transforming the raw predicted data series;
determining an initial prediction based on the transformed raw predicted data series;
transforming each explanatory data series;
determining an expected deviation based on the transformed explanatory data series;
combining the initial prediction and the expected deviation to obtain the predicted datapoint; and
outputting an alert in dependence on the value of the predicted data point;
wherein the method further comprises:
determining the expected deviation based on an ensemble model that comprises a plurality of forecast models, wherein each forecast model is associated with one or more transformed explanatory data series and wherein the ensemble model comprises a weighted combination of forecast models.

## Claims

1. An apparatus, preferably a robot, for defining and populating a memory storage and preferably outputting an alert and/or outputting an image, comprising:

a user interface and/or a communication interface for receiving a target data series comprising a plurality of observations and/or one or more explanatory data series and/or a plurality of forecast models;
a memory storage for storing a data structure for storing intermediate data;
a processor for:

receiving or determining a plurality of forecast models, each forecast model associated with one or more explanatory data series;
defining a data structure in the memory storage in dependence on the number of forecast models and the number of observations of the target data series;
performing a leave-one-out process for each forecast model of the plurality of forecast models, wherein the processor determines a predicted value by dropping an observation from the target data series and predicting the dropped observation in dependence on the forecast model and the data of the remaining observations in the target data series;
repeating the leave-one-out process for each observation from the target data series to obtain a set of predicted values for each forecast model, wherein the set comprises a number of predicted values less than or equal to the number of observations of the target data series;
determining errors between each of the predicted values and the values of the observations; and
outputting the predicted values and their associated errors to the data structure in the memory storage;

wherein the processor and/or a further processor is configured for:

retrieving the intermediate data from the memory storage;
receiving or determining an ensemble model, wherein the ensemble model comprises a weighted combination of forecast models, the weighting of each forecast model in the ensemble model being dependent on the respective determined errors;
determining a stability measure of the ensemble model by:

weighting each of the predicted values for each observation by multiplying the predicted values retrieved from the memory storage by the weighting, wherein the weighting is dependent on the associated determined errors retrieved from the memory storage;
determining weighted predicted averages for each observation of the target data series by summing the weighted predicted values over all the models for each observation; and
determining errors between observations of the target data series and the weighted predicted averages, such averages having been computed using the processor and/or further processor from the intermediate data stored in the memory storage;
whereby, preferably, the retrieval and computation of the intermediate data from the storage memory can bypass any need for performing full regression analysis on the ensemble model to determine the stability measure, thereby preferably reducing the computational complexity by a factor proportional to the number of observations of the target data series; and

outputting the stability measure of the ensemble model, preferably to the user interface and/or communication interface.

2. The apparatus of claim 1, wherein the processor or a further processor is configured for determining stability measures of the forecast models based on the associated determined errors.

3. The apparatus of claim 1 or 2, wherein the processor or a further processor is configured for determining weightings of the forecast models in dependence on the associated determined errors and/or the stability measures; preferably wherein the weighting is inversely proportional to the error; preferably wherein the weighting is proportional to the squared inverse of the error; more preferably wherein the weightings sum to 1; and/or preferably the outputting the errors to the data structure in the memory storage comprises outputting the stability measures and/or weightings of the models to the memory storage.

4. The apparatus of any preceding claim, wherein the processor or a further processor is configured for:

determining or retrieving the stability measure of the ensemble model;
determining a goodness of fit measure of the ensemble model using the stability measure and a weighted average of the number of explanatory data series used in each of the plurality of models; and
outputting the goodness of fit of the deviation predicted by the ensemble model, preferably to the user interface and/or communication interface.

5. The apparatus of any preceding claim, wherein the processor or a further processor is configured for:

determining a raw predicted data series based on the target data series;
transforming the raw predicted data series;
determining an initial prediction based on the transformed raw predicted data series;
transforming each explanatory data series;
determining an expected deviation based on the transformed explanatory data series; and
combining the initial prediction and the expected deviation to obtain the predicted datapoint;
wherein the processor is arranged to determine the expected deviation based on an ensemble model.

6. An apparatus for processing an image, the apparatus comprising:

a user interface and/or a communication interface for:

receiving a target data series and one or more explanatory data series, wherein the target data series is associated with a target image; and
outputting a processed image based on the target image; and

a processor for:

determining a raw predicted data series based on the target data series;
preferably transforming the raw predicted data series, preferably to determine a trend in the data series;
determining an initial prediction based on the, preferably transformed, raw predicted data series;
preferably transforming each explanatory data series, preferably using the same transformation as is used for the raw predicted data series;
determining an expected deviation based on the, preferably transformed, explanatory data series;
combining the initial prediction and the expected deviation to obtain the predicted datapoint; and
forming the processed image by modifying the target image to include the predicted datapoint;
wherein the processor is arranged to determine the expected deviation based on an ensemble model that comprises a plurality of forecast models, wherein each forecast model is associated with one or more, preferably transformed, explanatory data series and wherein the ensemble model comprises a weighted combination of forecast models.

7. The apparatus of claim 6, wherein the processor is arranged to determine the stability measure for each model using a leave-one-out process, wherein the processor determines a matrix associated with deviations of the target data series from a trendline relating to the initial prediction, drops an observation from the matrix, and predicts the dropped observation in dependence on the model and the remaining data in the raw predicted data series, and more preferably wherein the processor is arranged to determine a matrix of errors between the predictions of dropped observations and the values of the observations for a plurality of observations and a plurality of models; even more preferably wherein the processor is arranged to determine the stability measure for each model and/or the weighting of each model in the ensemble model based on the matrix of errors.

**8.** The apparatus of any preceding claim, wherein the user interface and/or the communication interface is arranged to output a processed image and/or an alert and/or a plot displaying the target data series indicating predicted behaviour of the system in dependence on the predicted datapoint being above and/or below a threshold predicted value.

**9.** The apparatus of any preceding claim, wherein the communication interface and/or the user interface is arranged to receive a user input and to provide an output in dependence on the user input and the predicted datapoint.

**10.** The apparatus of any preceding claim, wherein the processor is further arranged to modify the explanatory data series and/or target data series using a prediction function; preferably wherein the prediction function is an input by a user or a parametrization of an input by a user; more preferably wherein the processor is further arranged to iterate the method steps using different prediction functions for predicting behaviour of a system under different conditions, and preferably is further arranged to output an alert in dependence on the predicted values; and/or preferably is further arranged to output the predicted values corresponding to different conditions on a same plot; even more preferably wherein the same plot indicates whether each predicted data point is above and/or below a threshold predicted value.

**11.** The apparatus of any preceding claim, wherein the processor is arranged to set to zero the weighting of each model with a stability measure beneath a threshold value, preferably wherein the threshold value is 0.9.

**12.** The apparatus of any preceding claim, wherein the processor is arranged to determine a forecast horizon, and to determine the predicted datapoint at the forecast horizon, preferably wherein the processor is arranged to receive the forecast horizon from a further computer device; and/or preferably wherein the processor is arranged to determine a predicted datapoint for a plurality of different forecast horizons; more preferably to determine independently a predicted datapoint at each of the forecast horizons; and/or preferably, wherein the processor is arranged to determine the expected deviation at each forecast horizon using a different ensemble model; more preferably wherein the processor is arranged to determine a predicted trend trajectory based on the plurality of predicted datapoints.

**13.** The apparatus of any of claims 5 to 12, wherein the processor is arranged to transform the target data series and the explanatory data series using the same transform, and preferably wherein the processor is arranged to transform the combination of the initial prediction and the expected deviation to obtain the predicted datapoint, preferably wherein the processor is arranged to transform the combination using the inverse of a transform used to transform the target data series and/or the explanatory data series.

**14.** A method of defining and populating a memory storage and preferably outputting an alert or outputting an image, comprising:
receiving a target data series comprising a plurality of observations and/or one or more explanatory data series and/or a plurality of forecast models;

receiving or determining a plurality of forecast models, each forecast model associated with one or more explanatory data series;
defining a data structure in the memory storage in dependence on the number of forecast models and the number of observations of the target data series;
performing a leave-one-out process for each forecast model of the plurality of forecast models, comprising determining a predicted value by dropping an observation from the target data series and predicting the dropped observation in dependence on the forecast model and the data of the remaining observations in the target data series;
repeating the leave-one-out process for each observation from the target data series to obtain a set of predicted values for each forecast model, wherein the set comprises a number of predicted values less than or equal to the number of observations of the target data series;
determining errors between each of the predicted values and the values of the observations; and
outputting the predicted values and their associated errors to the data structure in the memory storage;
retrieving the intermediate data from the memory storage;

receiving or determining an ensemble model, wherein the ensemble model comprises a weighted combination of forecast models, the weighting of each forecast model in the ensemble model being dependent on the respective determined errors;
determining a stability measure of the ensemble model by:

weighting each of the predicted values for each observation by multiplying the predicted values retrieved from the memory storage by the weighting, wherein the weighting is dependent on the associated determined errors retrieved from the memory storage;
determining weighted predicted averages for each observation of the target data series by summing the weighted predicted values over all the models for each observation; and
determining errors between observations of the target data series and the weighted predicted averages, such averages having been computed using the processor and/or further processor from the intermediate data stored in the memory storage;
whereby, preferably, the retrieval and computation of the intermediate data from the storage memory can bypass any need for performing full regression analysis on the ensemble model to determine the stability measure, thereby preferably reducing the computational complexity by a factor proportional to the number of observations of the target data series; and

outputting the stability measure of the ensemble model.

**15.** A robotic network system comprising:

a user interface and/or a communication interface for receiving, preferably from remote storage, a target data series comprising a plurality of observations and/or one or more explanatory data series;
a storage for storing a plurality of forecast models;
a memory storage for storing a data structure for storing intermediate data;
a processor for:

receiving the plurality of forecast models from the storage, each forecast model associated with one or more explanatory data series;
defining a data structure in the memory storage in dependence on the number of forecast models and the number of observations of the target data series;
performing a leave-one-out process for each forecast model of the plurality of forecast models, wherein the processor determines a predicted value by dropping an observation from the target data series and predicting the dropped observation in dependence on the forecast model and the data of the remaining observations in the target data series;
repeating the leave-one-out process for each observation from the target data series to obtain a set of predicted values for each forecast model, wherein the set comprises a number of predicted values less than or equal to the number of observations of the target data series;
determining errors between each of the predicted values and the values of the observations; and
outputting the predicted values and their associated errors to the data structure in the memory storage; and

a further processor for:

retrieving the intermediate data from the memory storage;
receiving or determining an ensemble model, wherein the ensemble model comprises a weighted combination of forecast models, the weighting of each forecast model in the ensemble model being dependent on the respective determined errors;
determining a stability measure of the ensemble model by:

weighting each of the predicted values for each observation by multiplying the predicted values retrieved from the memory storage by the weighting, wherein the weighting is dependent on the associated determined errors retrieved from the memory storage;
determining weighted predicted averages for each observation of the target data series by summing the weighted predicted values over all the models for each observation; and
determining errors between observations of the target data series and the weighted predicted averages, such averages having been computed using the processor and/or further processor from the intermediate data stored in the memory storage;

whereby, preferably, the retrieval and computation of the intermediate data from the storage memory can bypass any need for performing full regression analysis on the ensemble model to determine the stability measure, thereby preferably reducing the computational complexity by a factor proportional to the number of observations of the target data series; and

outputting the stability measure of the ensemble model, preferably to the user interface and/or communication interface.

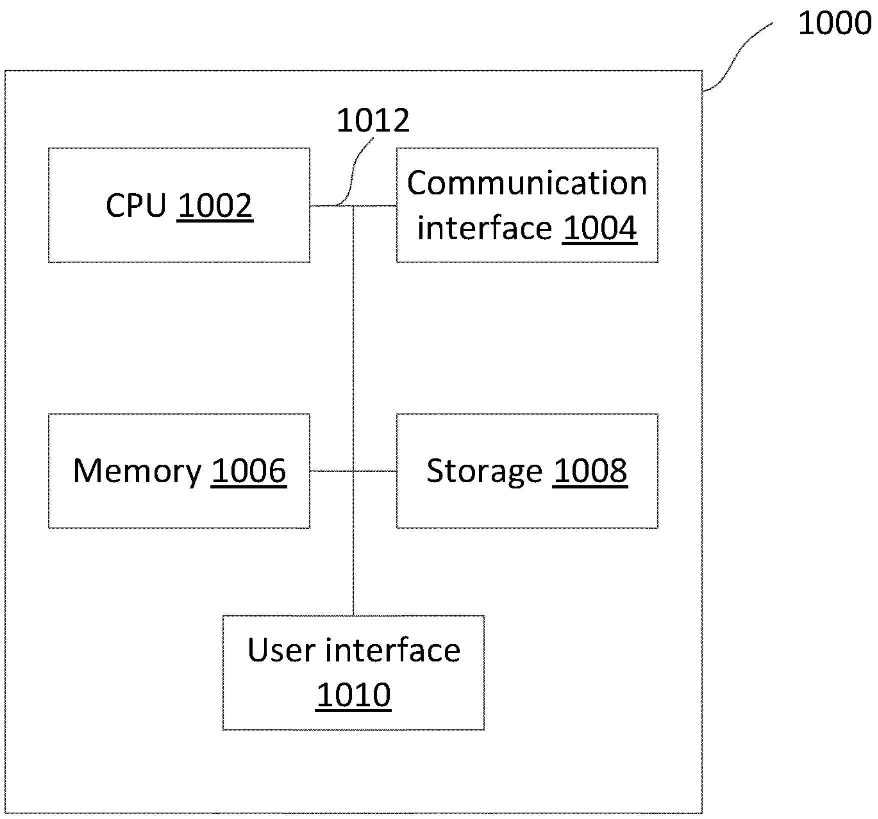
1000
1012
CPU 1002
Communication interface 1004
Memory 1006
Storage 1008
User interface 1010

Figure 1

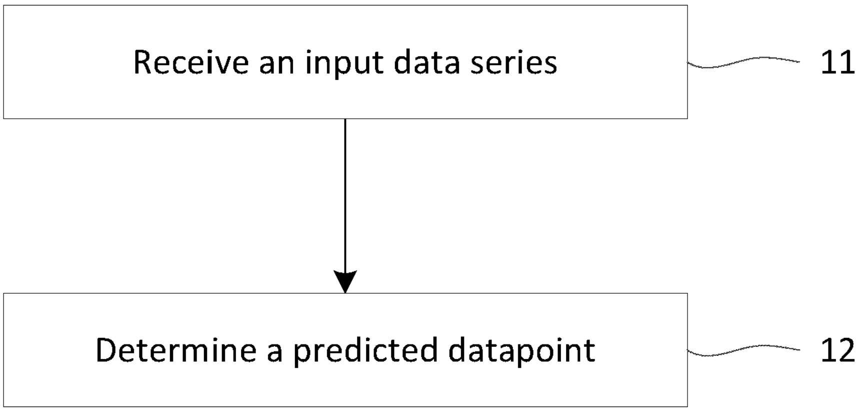
Receive an input data series
11
Determine a predicted datapoint
12

Figure 2

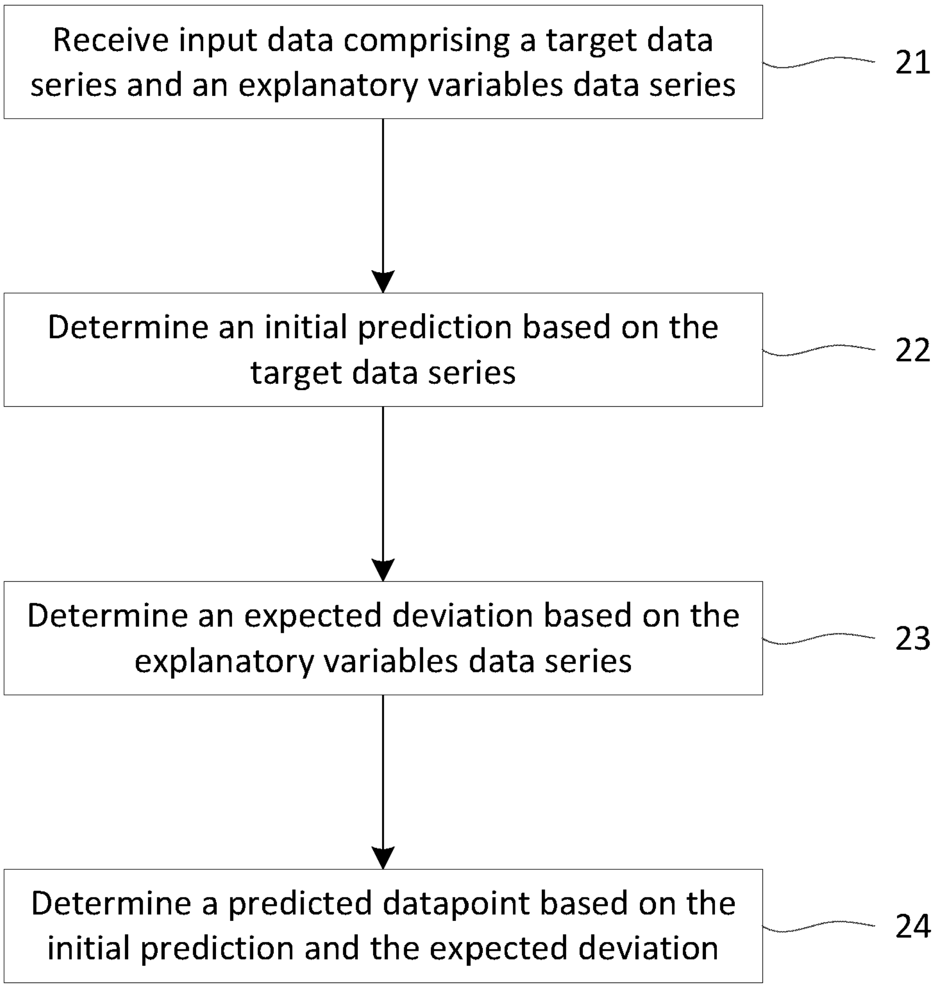
Receive input data comprising a target data series and an explanatory variables data series
21
Determine an initial prediction based on the target data series
22
Determine an expected deviation based on the explanatory variables data series
23
Determine a predicted datapoint based on the initial prediction and the expected deviation
24

Figure 3

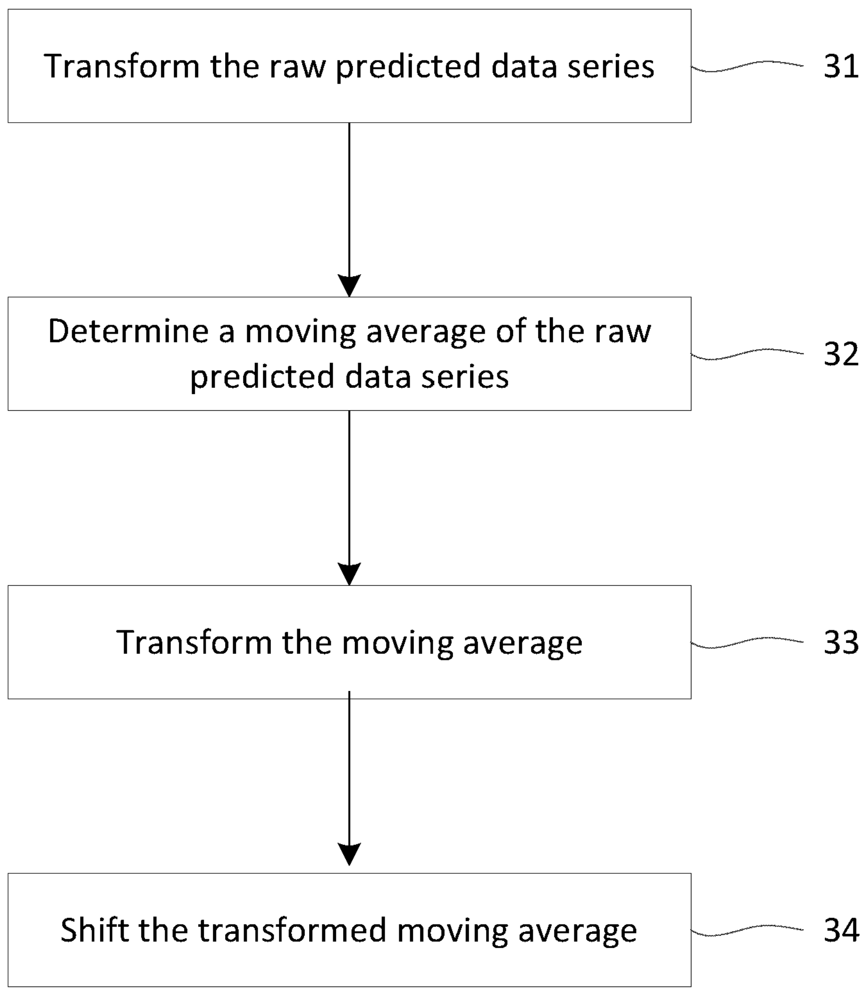
Transform the raw predicted data series
31
Determine a moving average of the raw predicted data series
32
Transform the moving average
33
Shift the transformed moving average
34

Figure 4

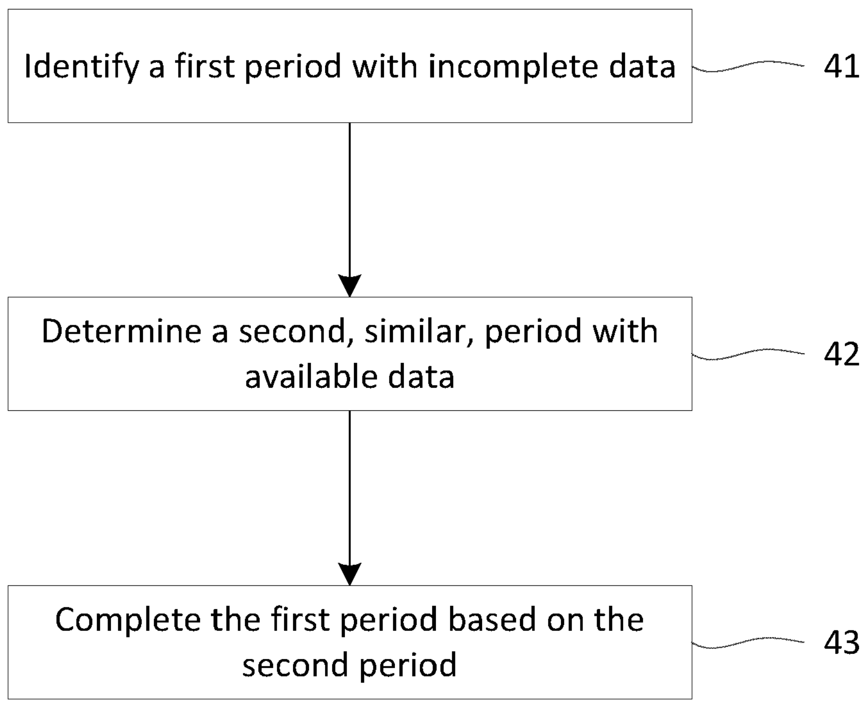
Identify a first period with incomplete data
41
Determine a second, similar, period with available data
42
Complete the first period based on the second period
43

Figure 5

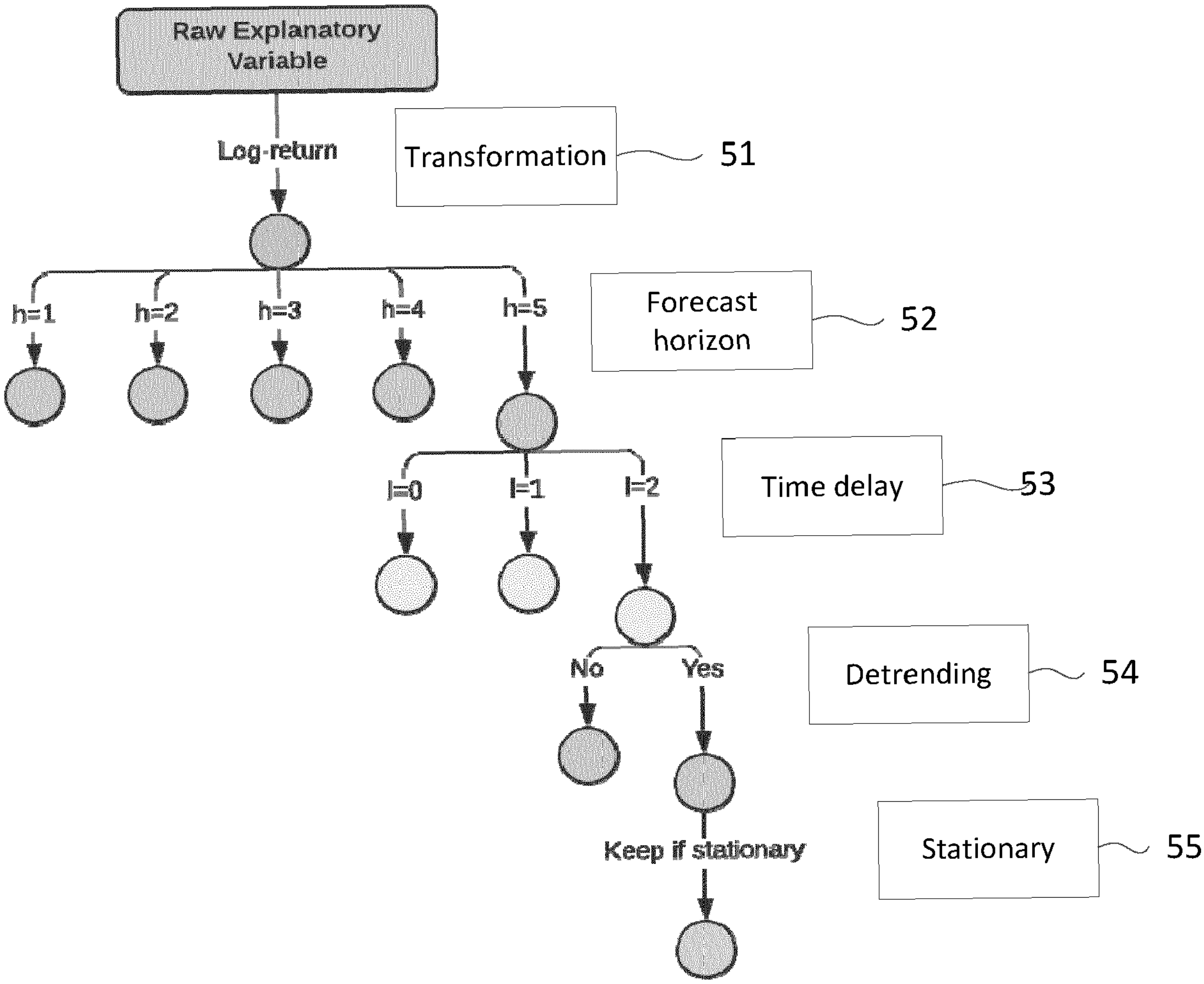
Raw Explanatory Variable
Log-return
Transformation
51
h=1
h=2
h=3
h=4
h=5
Forecast horizon
52
l=0
l=1
l=2
Time delay
53
No
Yes
Detrending
54
Keep if stationary
Stationary
55

Figure 6

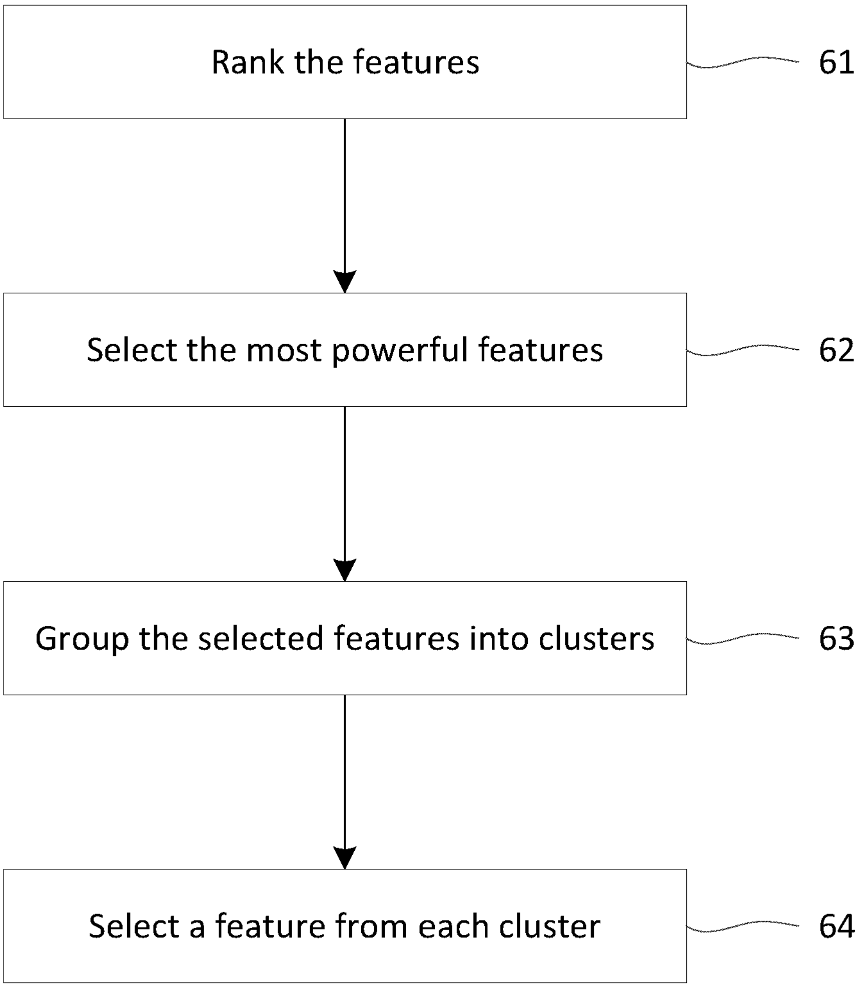
Rank the features
61
Select the most powerful features
62
Group the selected features into clusters
63
Select a feature from each cluster
64

Figure 7

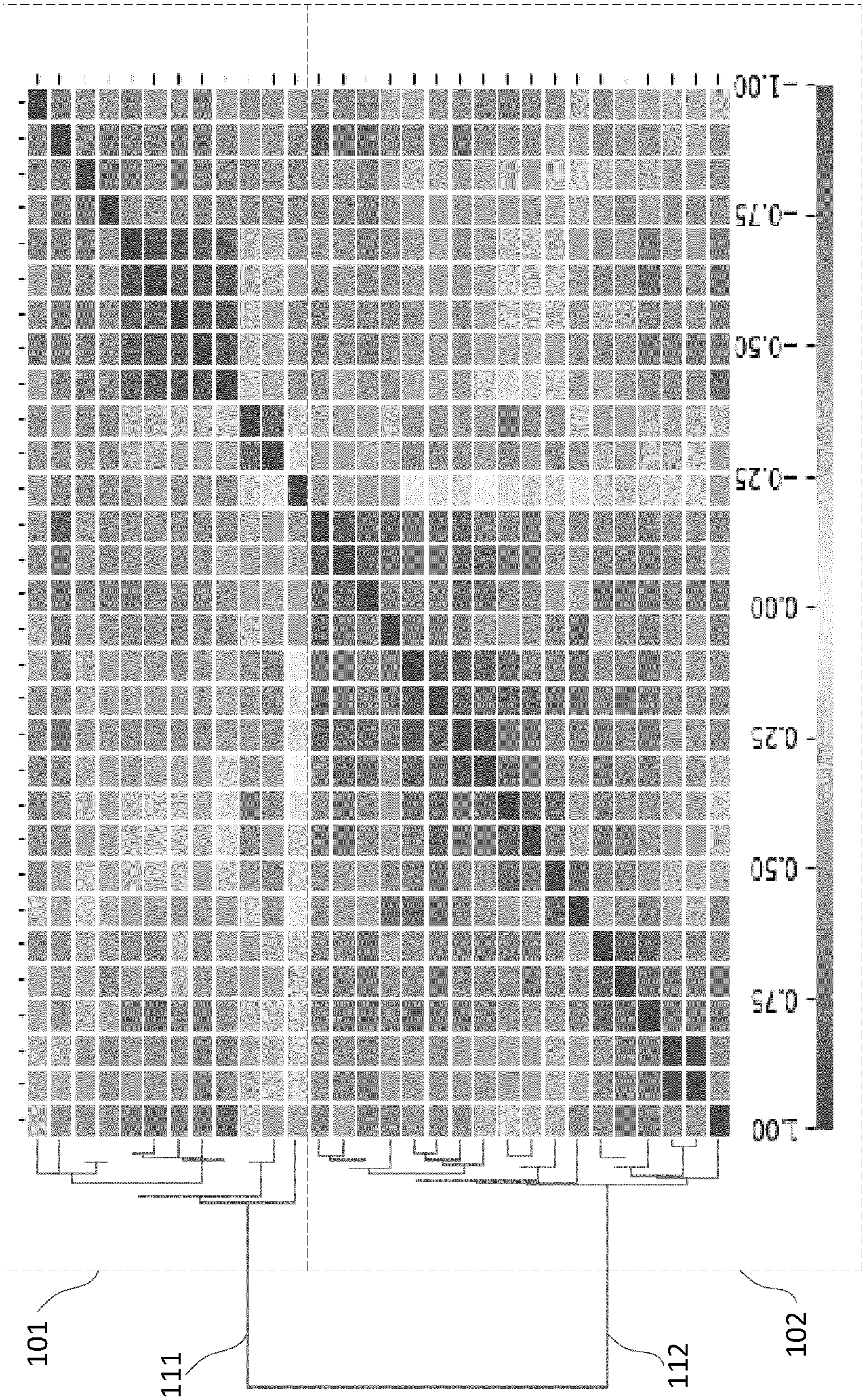


Figure 8

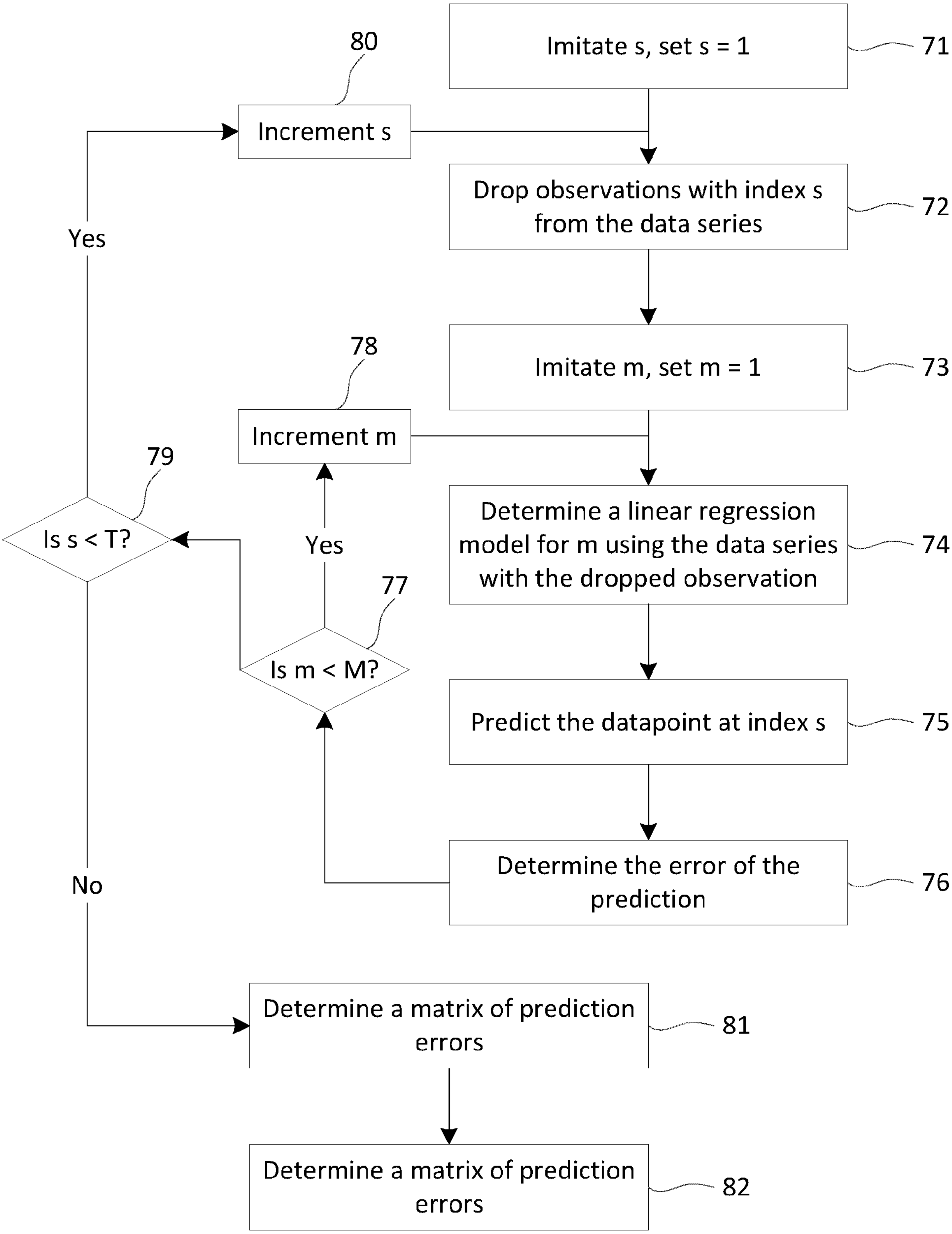
Imitate s, set s = 1
71
80
Increment s
Drop observations with index s from the data series
72
Yes
78
Imitate m, set m = 1
73
Increment m
79
Is s < T?
Yes
Determine a linear regression model for m using the data series with the dropped observation
74
77
Is m < M?
Predict the datapoint at index s
75
No
Determine the error of the prediction
76
Determine a matrix of prediction errors
81
Determine a matrix of prediction errors
82

Figure 9

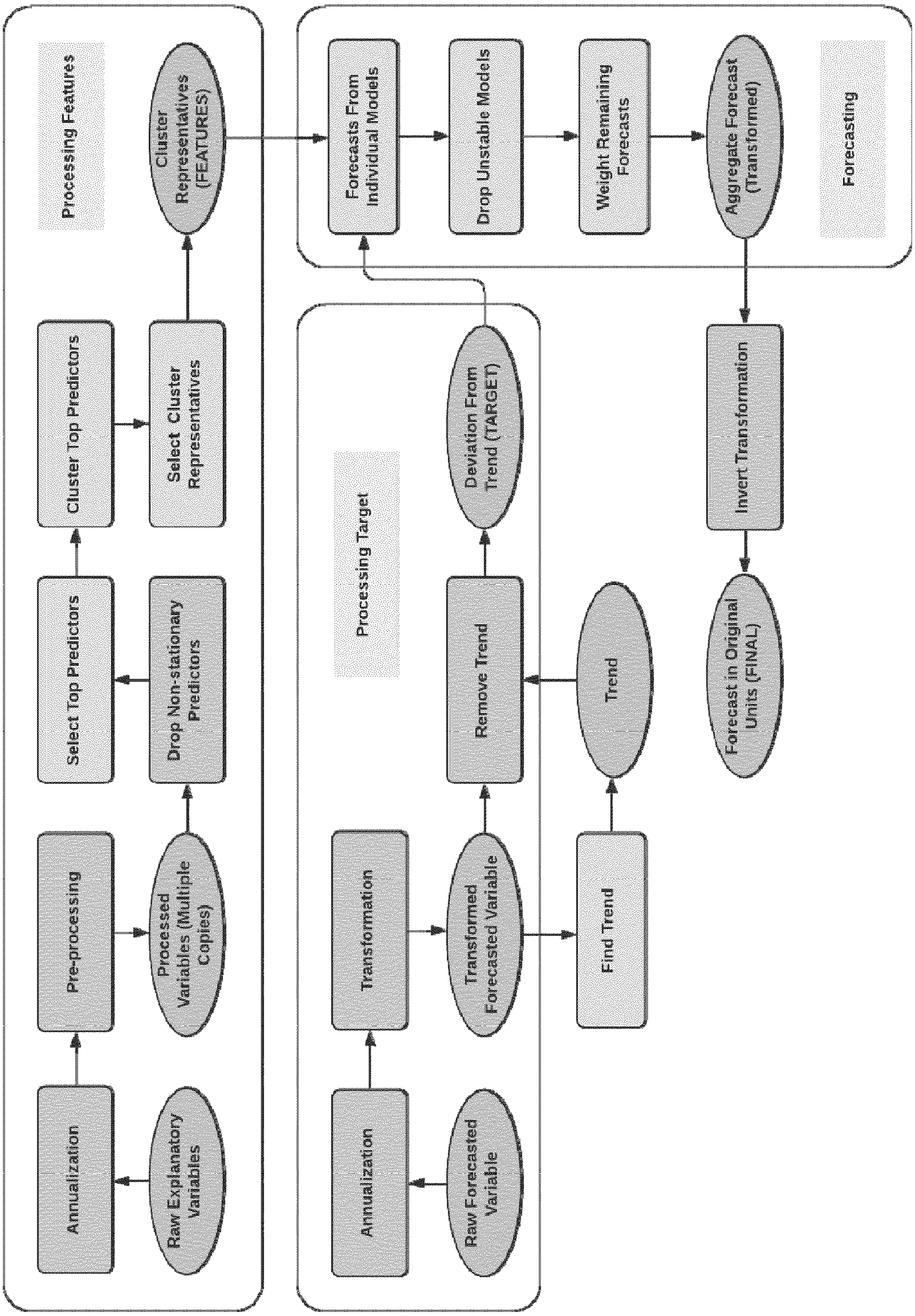
Processing Features
Raw Explanatory Variables
Annualization
Pre-processing
Processed Variables (Multiple Copies)
Drop Non-stationary Predictors
Select Top Predictors
Cluster Top Predictors
Select Cluster Representatives
Cluster Representatives (FEATURES)
Processing Target
Raw Forecasted Variable
Annualization
Transformation
Transformed Forecasted Variable
Find Trend
Trend
Remove Trend
Deviation From Trend (TARGET)
Forecasting
Forecasts From Individual Models
Drop Unstable Models
Weight Remaining Forecasts
Aggregate Forecast (Transformed)
Invert Transformation
Forecast in Original Units (FINAL)

Figure 10

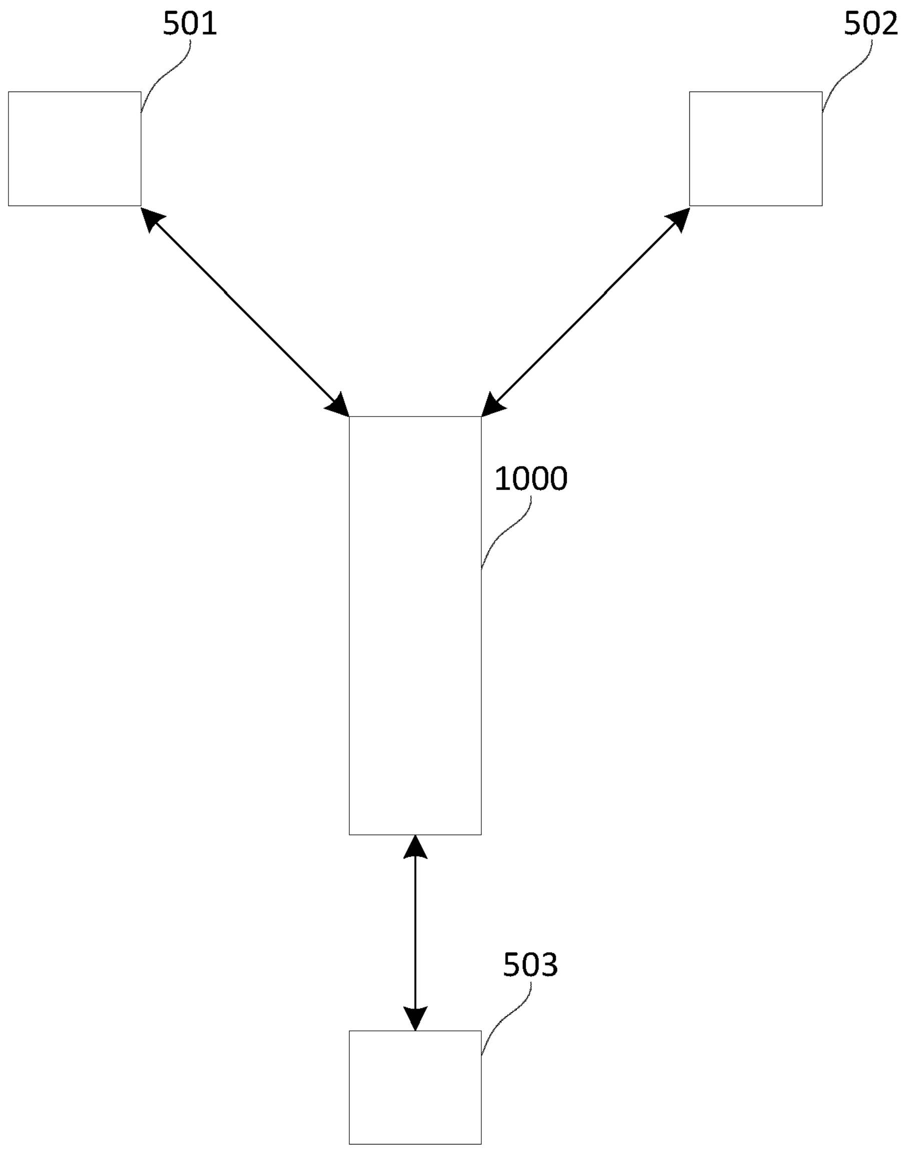


Figure 11

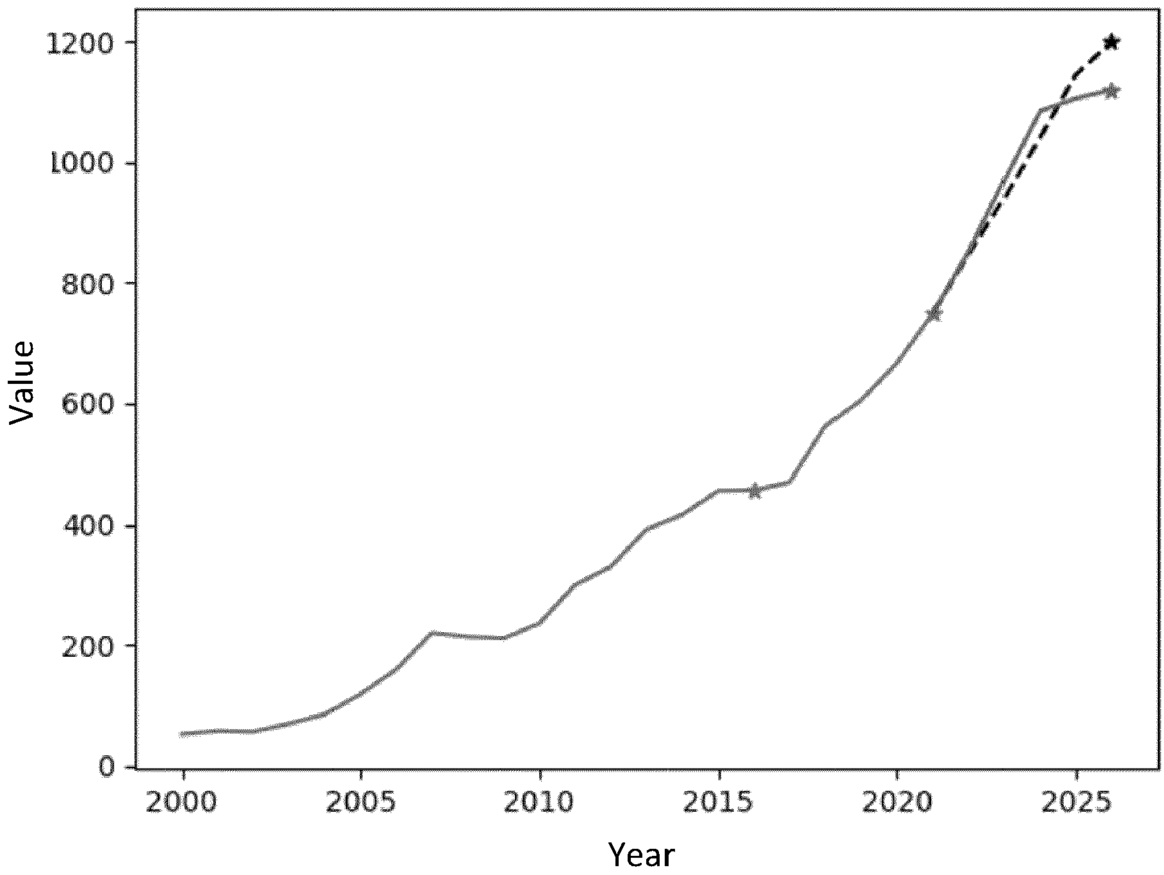
1200
1000
800
600
400
200
0
Value
2000
2005
2010
2015
2020
2025
Year

Figure 12

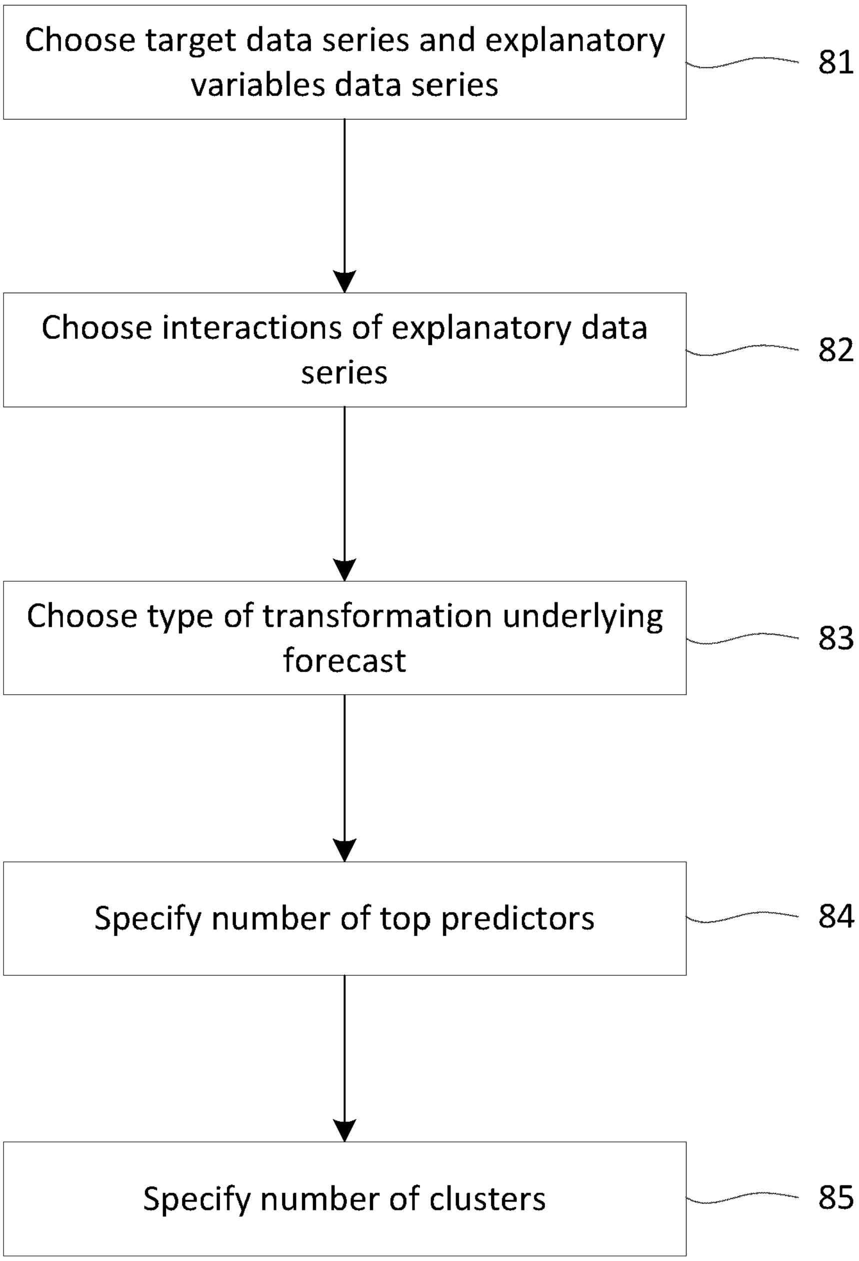
Choose target data series and explanatory variables data series
81
Choose interactions of explanatory data series
82
Choose type of transformation underlying forecast
83
Specify number of top predictors
84
Specify number of clusters
85

Figure 13

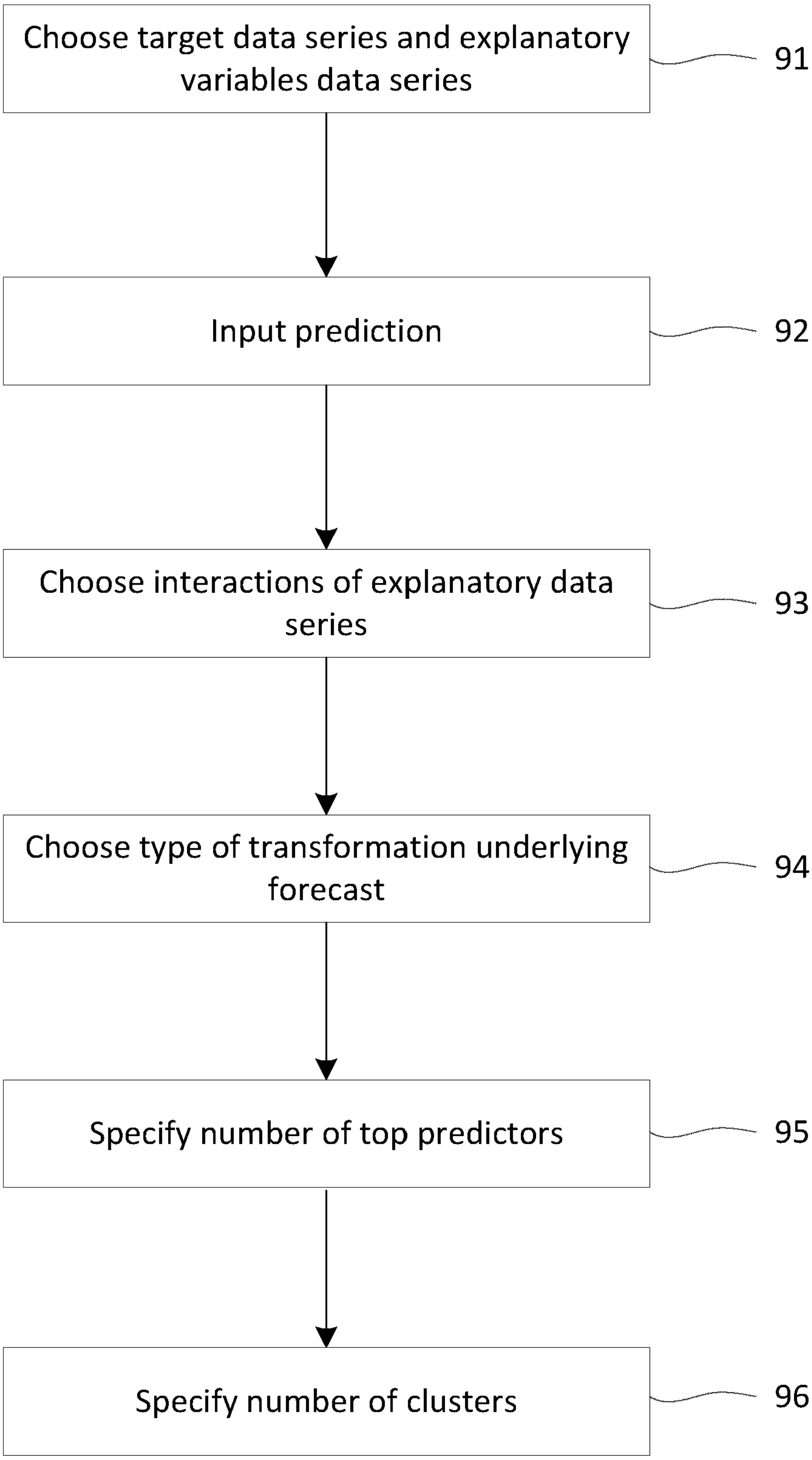
Choose target data series and explanatory variables data series
91
Input prediction
92
Choose interactions of explanatory data series
93
Choose type of transformation underlying forecast
94
Specify number of top predictors
95
Specify number of clusters
96

Figure 14

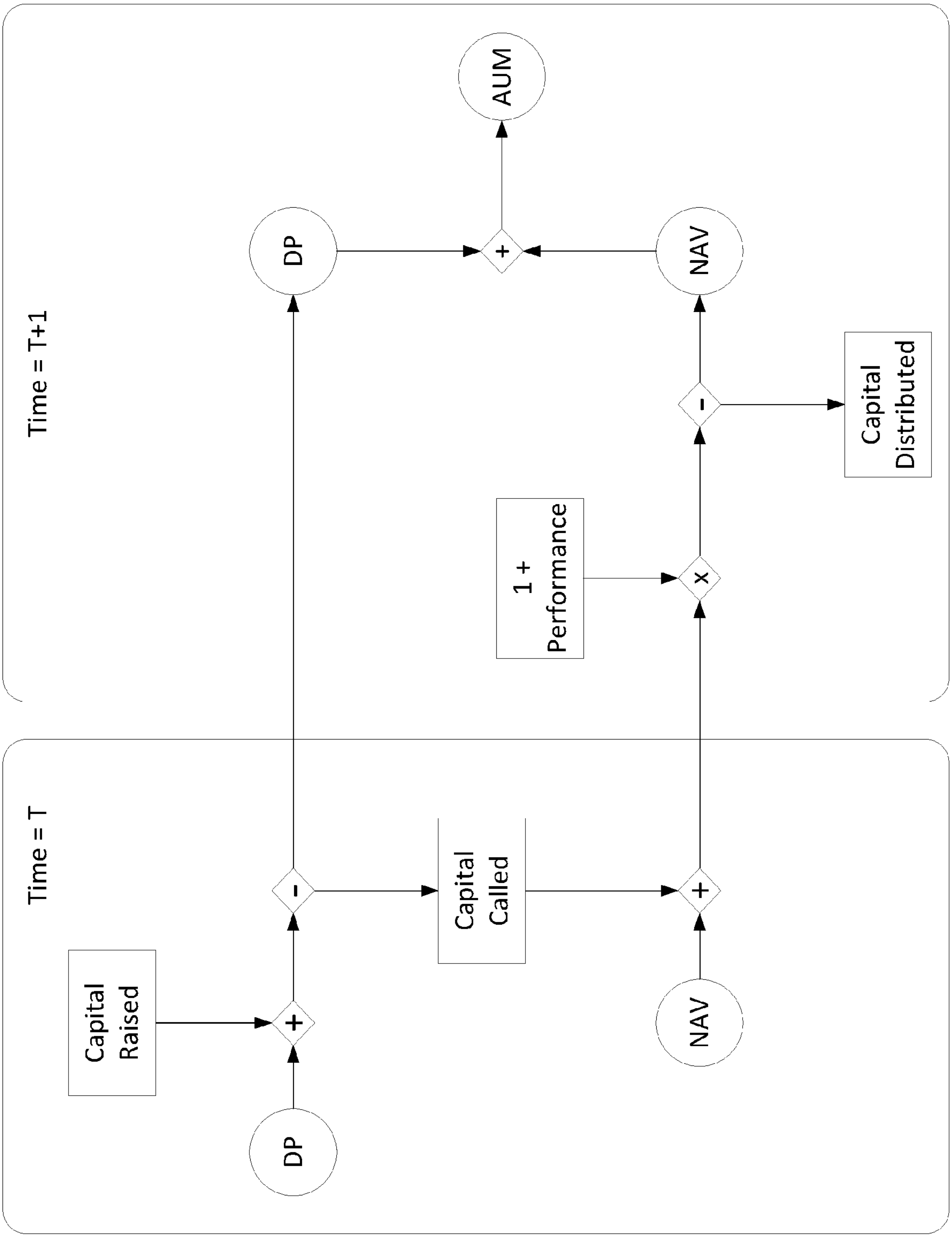
Time = T
DP
Capital Raised
+
-
Capital Called
+
NAV
Time = T+1
DP
+
AUM
NAV
1 + Performance
x
-
Capital Distributed

Figure 15

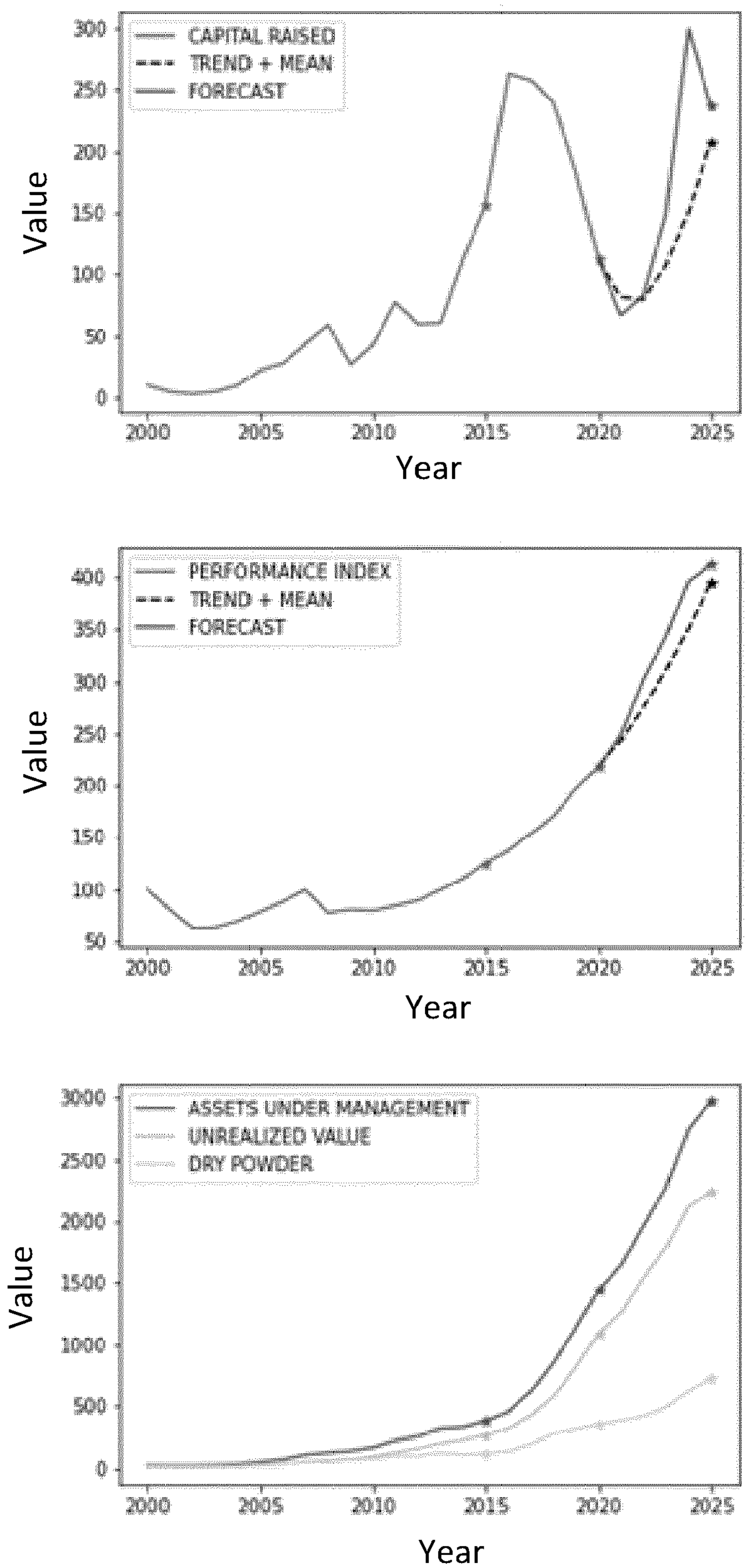
CAPITAL RAISED
TREND + MEAN
FORECAST
Value
Year
PERFORMANCE INDEX
TREND + MEAN
FORECAST
Value
Year
ASSETS UNDER MANAGEMENT
UNREALIZED VALUE
DRY POWDER
Value
Year

Figure 16

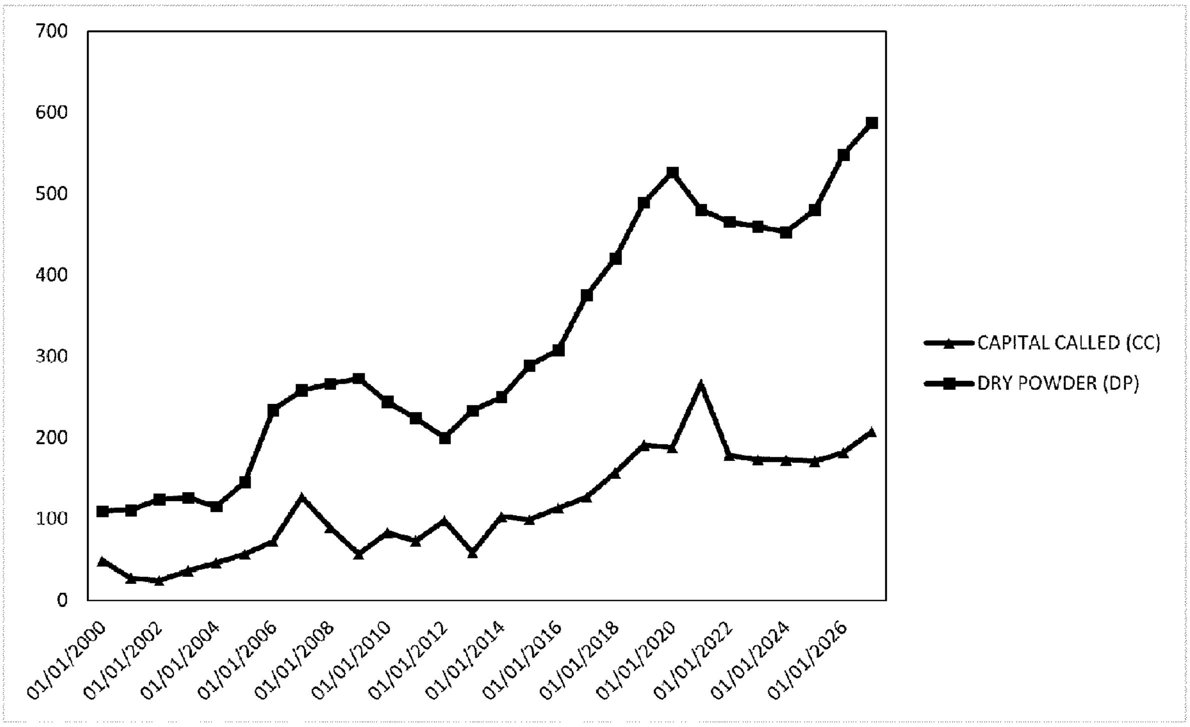


Figure 17a

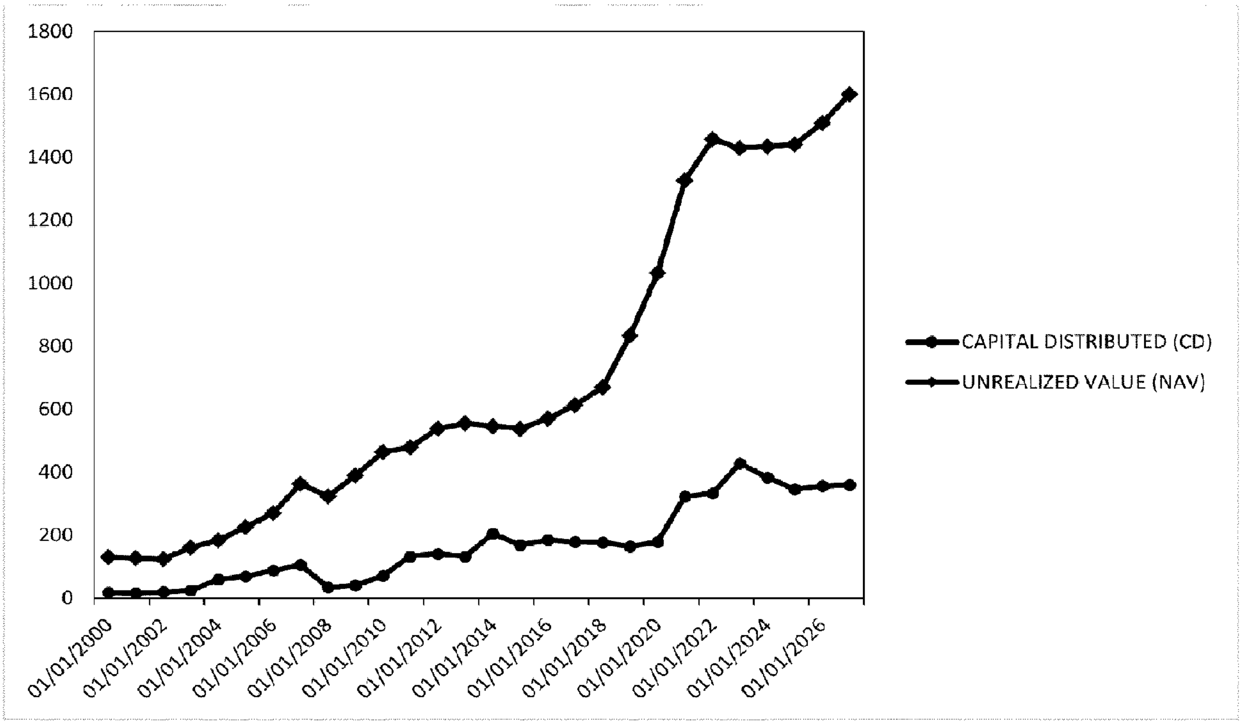


Figure 17b

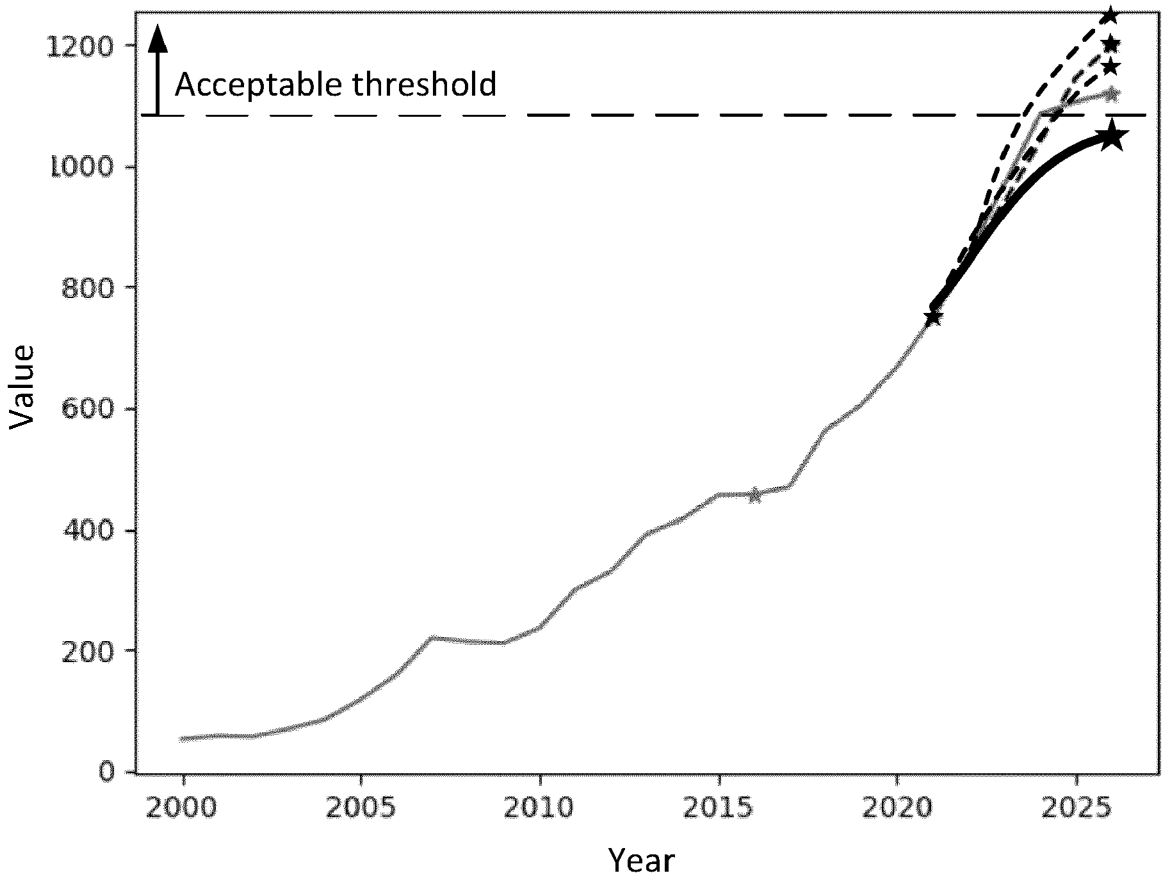
Acceptable threshold
Value
0
200
400
600
800
1000
1200
Year
2000
2005
2010
2015
2020
2025

Figure 18